# EUROPEAN PATENT SPECIFICATION

(11) **EP 1 688 467 B1**
(45) Date of publication and mention of the grant of the patent: **25.06.2008**
(21) Application number: 06002252.2
(22) Date of filing: 03.02.2006
(51) Int. Cl.: C09D 11/00

(54) **Ink composition, inkjet recording method, printed material, method for producing planographic printing plate, and planographic printing plate**
Tintenzusammensetzung, Verfahren zum Tintenstrahldruck, bedrucktes Material, Verfahren zum Herstellen einer planographischen Druckplatte, planographische Druckplatte
Composition d'encre, méthode d'enregistrement par jet d'encre, produit imprimé, procédé de fabrication d'une plaque d'impression planographique, plaque d'impression planographique

(30) Priority: 04.02.2005 JP 2005029560; 27.12.2005 JP 2005376273
(43) Date of publication of application: 09.08.2006
(73) Proprietor: FUJIFILM Corporation, Minato-ku Tokyo (JP)
(72) Inventor: Tsuchimura, Tomotaka Fuji Photo Film Co., Ltd., Shizuoka-ken (JP); Shimada, Kazuto Fuji Photo Film Co., Ltd., Shizuoka-ken (JP)
(74) Representative: HOFFMANN EITLE

(56) References cited:
- EP-A- 1 241 002
- US-A1- 2004 244 641

## Description

### Field of the invention

The present invention is related to an ink composition suitable for inkjet recording, an inkjet recording method, a printed material obtained by using the inkjet recording method, a planographic printing plate obtained by using the ink composition, and a method for producing a planographic printing plate. Specifically, the invention is related to an ink composition which cures with high sensitivity upon irradiation with radiation to form a high-quality image and which has high storage stability, an inkjet recording method, a printed material obtained by using the ink composition, a planographic printing plate obtained by using the ink, and a method for producing the planographic printing plate. Further, inkjet apparatuses are simple and create less noise.

### Description of the related art

Methods for forming an image on a support such as paper based on an image data signal include electrophotographic methods, sublimation-type thermal transfer methods, melt-type thermal transfer methods, and inkjet methods. In electrophotographic methods, a process of forming an electrostatic latent image on a photoreceptor drum by charging and exposure to light is required, and the process makes the system complicated, resulting in problems of increased production cost and the like. Thermal transfer methods can be applied to inexpensive apparatuses; however, the use of ink ribbons increases the running cost and generates wastes. Inkjet recording methods are applicable to inexpensive apparatuses, and can reduce the running cost. This is because an image is directly formed by providing ink only to image portions on the support, thereby improving the efficiency in the use of ink. Further, the ink jet recording methods generate less noise, and are excellent image forming methods.

Ink compositions curable by irradiation with radiation such as ultraviolet rays, especially inkjet inks (radiation-curable inkjet ink), are requested to have sufficiently high sensitivity and capability of forming high-quality images. When the sensitivity of such inks is heightened, the inks cure efficiently upon application of radiation, whereby a lot of benefits are provided including reduced electric power consumption, longer life of radiation generator owing to reduced load, and prevention of generation of low-molecular substances caused by insufficient curing. Further, when ink compositions (inkjet inks in particular) are used for the formation of the image areas on planographic printing plates, higher sensitivity increases the curing strength of the image areas, thus achieving higher printing durability.

Inkjet methods involving UV curing has been attracting attention recently since the methods generate relatively weak odor and are capable of recording on recording media that do not have quick drying property or ink absorbing property. In particular, benzyl, benzoin, benzoin ethyl ether, Michler's ketone, anthraquinone, acridine, phenazine, benzophenone, 2-ethylanthraquinone, and the like have been used as photopolymerization initiators in general (see, Bruce M. Monroe et al., Chemical Reviews, Vol. 93, pp. 435-448 (1993)). However, when such photopolymerization initiators are used, imagewise exposure takes a long time in the image formation owing to low curing sensitivity of photopolymerizable compositions. Therefore, when the image to be formed is minute, slight vibration during the operation inhibit reproduction of the image with good quality. Further, long exposure time accompanies the increase in energy radiation from the exposure light source, whereby the resultant huge heat radiation may cause troubles.

Japanese Patent Application Laid-Open (JP-A) No. 2004-91566 describes an active-ray-curable composition and an active-ray-curable ink using an oxetane compound and an anthracene compound while JP-A No. 2004-93634 describes an active-ray-curable ink using an oxetane compound, an iodonium salt, and a thioxanthone compound. However, the both fail to establish a good balance between the sensitivity to the active rays and the stability of ink over time. Further, they have a problem in that the image after printing is damaged by scratch or the like owing to insufficient curing reaction.

### SUMMARY OF THE INVENTION

The present invention has been made in consideration of the above problems of the conventional techniques. The invention provides an ink composition with superior storage stability which cures with high sensitivity upon irradiation with radiation and which is capable of forming a high-quality image with superior adhesion to the recording medium. The invention also provides an inkjet recording method using a curable composition with superior storage stability which cures with high sensitivity upon irradiation with radiation and which is capable of forming a high-quality image with superior adhesion to the recording medium. The invention also provides a printed material obtained by the inkjet recording method. The invention further provides a planographic printing plate with high printing durability obtained by using the ink composition and a method for producing the planographic printing plate.

The inventors of the present invention have conducted intensive study and have devised the use of the combination of a specific polymerization initiator and a sensitizing dye.

The invention provides an ink composition containing a) triarylsulfonium salt polymerization initiator (hereinafter occasionally referred to as a "specific polymerization initiator") containing at least one aryl skeleton having an electron attractive group as a substituent, b) a polymerizable compound, c) a sensitizing dye, and d) a colorant.

The triarylsulfonium salt polymerization initiator containing at least one aryl skeleton having an electron attractive group as a substituent may be a polymerization initiator having a triaryl sulfonium salt structure and the total sum of the Hammett values of the substituents bound to the aryl skeleton is greater than 0.46. Each aryl skeleton in the triarylsulfonium salt structure may have, as a substituent, a halogen atom or a group containing a halogen atom. The ink composition may be an ink composition for inkjet recording.

The invention also provides an inkjet recording method comprising ejecting an curable composition containing a) triarylsulfonium salt polymerization initiator containing at least one aryl skeleton having an electron attractive group as a substituent, b) a polymerizable compound, and c) a sensitizing dye onto a recording medium with an inkjet printer, and irradiating the ejected curable composition with active radiation to cure the curable composition.

The triarylsulfonium salt polymerization initiator containing at least one aryl skeleton having an electron attractive group as a substituent may be a polymerization initiator having a triaryl sulfonium salt structure and the total sum of the Hammett values of the substituents bound to the aryl skeleton is greater than 0.46. Each aryl skeleton in the triarylsulfonium salt structure may have, as a substituent, a halogen atom or a group containing a halogen atom. The curable composition may further contain d) a colorant.

The invention further provides a printed material obtained by a method comprising: ejecting the curable composition onto a recording medium with an inkjet printer according to the above inkjet recording method, and irradiating the curable composition with active radiation to cure the curable composition.

The invention further provides a method of producing a planographic printing plate, the method comprising: ejecting the above ink composition to a hydrophilic support and irradiating the ink composition with radiation to cure the ink composition, thereby forming a hydrophobic region.

The invention further provides a planographic printing plate prepared by the above method of producing a planographic printing plate.

### DESCRIPTION OF THE PRESENT INVENTION

### [Ink Composition]

The ink composition according to the invention comprises (a) a triarylsulfonium salt polymerization initiator having one or more aryl skeletons containing an electron attractive group as a substituent (specific polymerization initiator), (b) a polymerizable compound, (c) a sensitizing dye, and (d) a colorant.

Hereinafter, the components used in the ink composition according to the invention will be described one after another.

### [Triarylsulfonium Salt Polymerization Initiator Having One or More Aryl Skeletons Containing an Electron Attractive Group (a) as a Substituent]

The ink composition according to the invention contains a triarylsulfonium salt polymerization initiator having one or more aryl skeletons containing an electron attractive group (a) as a substituent (specific polymerization initiator).

The specific polymerization initiator is preferably a polymerization initiator having the triarylsulfonium salt structure and having a sum of the Hammett values of the substituents bound to the aryl skeletons of greater than 0.46.

### -Triarylsulfonium Salt Structure-

The compound having the triarylsulfonium salt structure can be prepared easily according to the methods described, for example, in J. Amer. Chem. Soc. Vol. 112 (16), 1990, pp. 6004-6015; J. Org. Chem. 1988, pp. 5571-5573; WO 02/081439A1 pamphlet; and EP Patent No. 1113005, the disclosures of which are incorporated herein by reference.

### -Substituents Bound to Aryl Skeletons-

The specific polymerization initiator contains one or more aryl skeletons each having an electron attractive group as a substituent. The electron attractive group means a substituent having a Hammett value (Hammett substituent constant σ) of 0 or greater. In the invention, the sum of the Hammett values of the substituents bound to the aryl skeletons in the specific polymerization initiator is greater than 0.46, and preferably 0.60 or greater, from the viewpoint of improvement in sensitivity.

The Hammett value represents the degree of an electron attractive potential of the cation having the triarylsulfonium salt structure, and the upper limit of the Hammett value of the cation is not particularly limited from the viewpoint of improvement in sensitivity, but it is preferably in the range of greater than 0.46 to 4.0, more preferably 0.50 to 3.5, and particularly preferably 0.60 to 3.0, from the viewpoints of reactivity and stability.

The Hammett values used in the invention are the values described in Naoki Inamoto Ed., Chemistry Seminar 10: Hammett Equation -Structure and Reactivity- (1983, published by Maruzen Co., Ltd.), the disclosure of which is incorporated herein by reference.

Examples of the electron attractive group introduced onto the aryl skeleton include a trifluoromethyl group, halogen atoms, ester groups, sulfoxide groups, a cyano group, amide groups, a carboxyl group, and carbonyl groups. The Hammett values of these substituents are shown below: trifluoromethyl group (-CF₃, m: 0.43, p: 0.54); halogen atoms (e.g., -F (m: 0,34, p: 0.06), -Cl (m: 0,37, p: 0.23), -Br (m: 0.39, p: 0.23), -I (m: 0.35, p: 0,18)); ester groups (e.g., -COCH₃, o: 0,37, p: 0.45); sulfoxide groups (e.g., -SOCH₃, m: 0.52, p: 0,45); cyano group (-CN m: 0,56, p: 0.66); amide groups (e.g., -NHCOCH₃, m: 0.21, p: 0,00); carboxyl group (-COOH, m: 0.37, p: 0.45); carbonyl groups (-CHO, m: 0.36, p: (043)). The data in parenthesis represent the positions of the substituent in the aryl skeleton and the Hammett values at the respective positions. For example, (m: 0.50) means that when the substituent is located at the meta position, its Hammett value is 0.50.

Among these substituents, nonionic substituents such as halogen atoms and alkyl halide groups are preferable from the viewpoint of improvement of thermal stability or of solubility in the polymerizable compound; and -F, -CF₃, -Cl, and -Br are preferable from the viewpoint of improving the solubility, and among them, -Cl is preferable from the viewpoint of reactivity.

The substituent may be introduced onto any one of the three aryl skeletons in the triarylsulfonium salt structure or on two or more of the aryl skeletons. In addition, the number of the substituents introduced onto each of the three aryl skeletons may be one or more. In the invention, the sum of the Hammett values of the substituents introduced onto these aryl skeletons is greater than 0.46 The number of the substituents introduced is arbitrary. For example, only one substituent having a particularly high Hammett value (e.g., a group having a Hammett value of greater than 0.46) may be introduced onto a position on one of the aryl skeletons in the triarylsulfonium salt structure. Alternatively, for example, multiple substituents may be introduced such that the sum of the Hammett values of the substituents is greater than 0.46.

As described above, the Hammett value of a substituent varies according to the introduction position, and the sum of the Hammett values of the substituents on the specific polymerization initiators according to the invention is determined by the kinds, positions, and number of the substituents.

The Hammett values of a substituent are usually given for m-and positions. In the invention, the substituent effect at the o-position is assumed to be the same as that at the p-position and used as an indicator of the electron attracting potential. The substitution position is preferably m-or p- position from the viewpoint of synthesizability, and most preferably position.

The specific polymerization initiator according to the invention is preferably a sulfonium salt substituted by three or more halogen atoms, more preferably a sulfonium salt in which each aryl skeleton has, as a substituent, a halogen atom or a group containing a halogen atom, still more preferably a sulfonium salt in which each aryl skeleton is substituted by a halogen atom, and further more preferably a sulfonium salt substituted by three chloro groups.

Specifically, a sulfonium salt having a triarylsulfonium salt structure whose three aryl skeletons each have a halogen atom (preferably -CI) is preferable, and a sulfonium salt having a triarylsulfonium salt structure whose three aryl skeletons each have a Cl atom on the p-position is more preferable.

The counter anion of the specific polymerization initiator is preferably a sulfonic acid anion, a benzoylformic acid anion, PF₆⁻, SbF₆-, BF₄⁻, CIO₄-, a carboxylic acid anion, a sulfinic acid anion, a sulfuric acid anion, a borate anion, a halogen anion, a polymer-type sulfonic acid anion, or a polymer-type carboxylic acid anion, from the viewpoint of stability. The counter anion is preferably a sulfonic acid anion, a polymer of a sulfonic acid anion, a benzoylformic acid anion, or a polymer of benzoylformic acid anion, from the viewpoints of reactivity and stability, more preferably a sulfonic acid anion or a polymer of a sulfonic acid anion.

The specific polymerization initiator according to the invention may be a low-molecular-weight compound if it has a triarylsulfonium salt structure containing one or more substituents introduced onto the aryl skeletons which substituents satisfy the particular condition. In an embodiment, as described above, a polymer-type anion has a multiple triarylsulfonium salt structures as its counter cations.

The couter-anion is preferably B(C₆F₅)₄-, PF₆⁻, AsF₆⁻, SbF₆⁻, or BF₄-.

Hereinafter, preferable specific examples (exemplary compounds (A-1) to (O-3), (P-1) to (P-17), and (Q-1) to (U-24)) of the specific polymerization initiator (component (a) according to the invention) will be described below, but the invention is not restricted to these examples. The exemplary compounds (P-1) to (P-17) are examples of the compounds having a polymer-type anion.

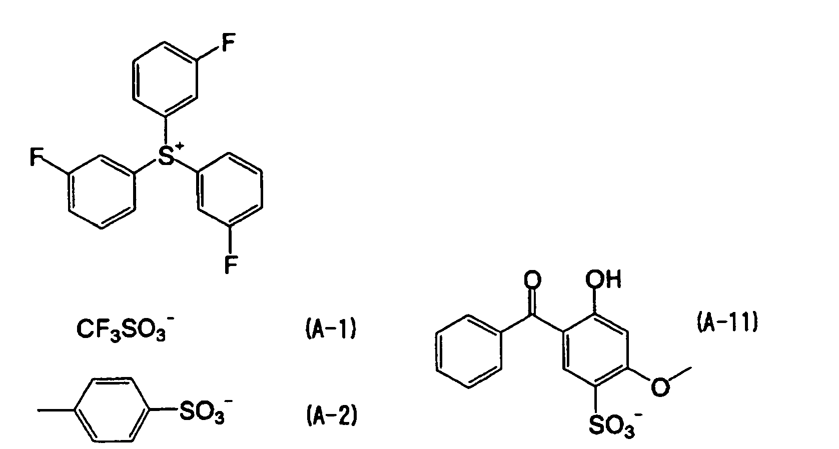

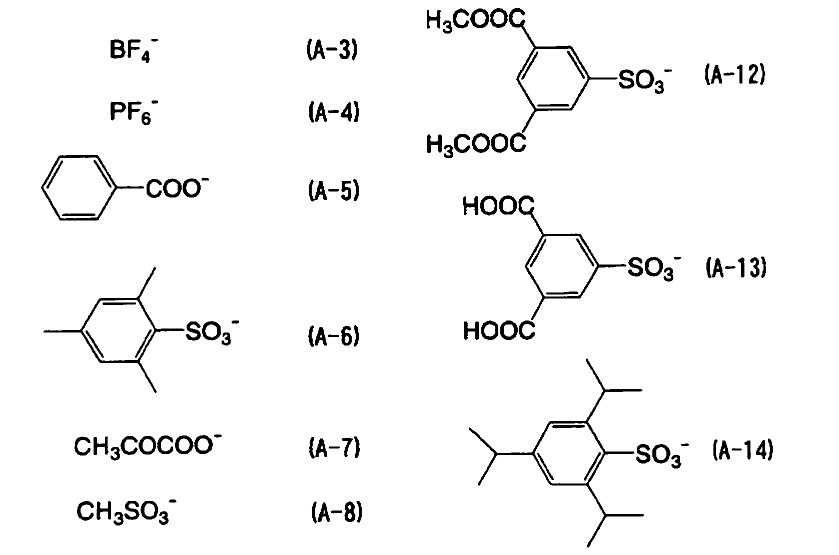

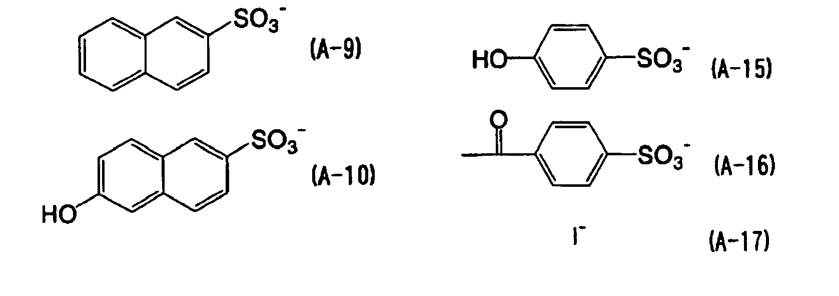

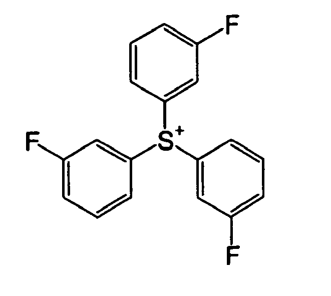

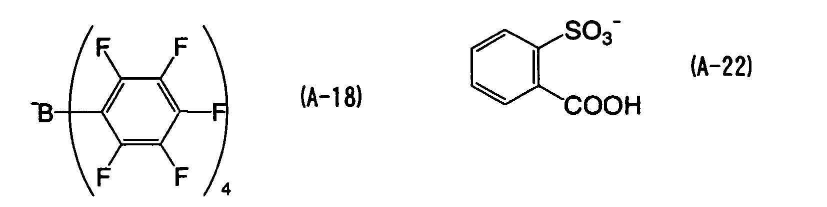

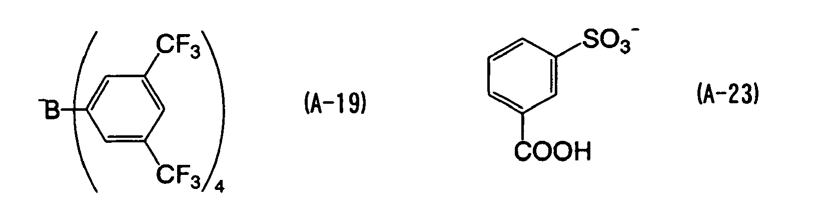

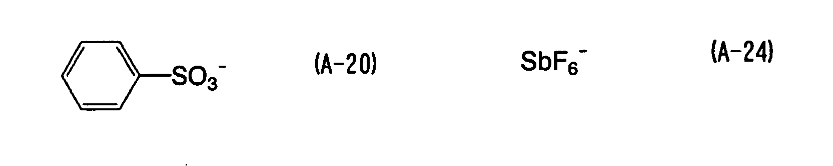

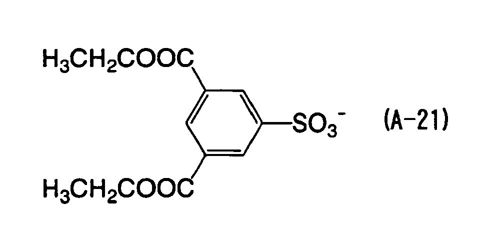

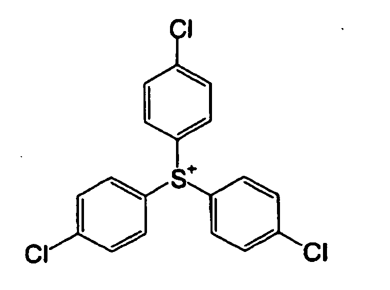

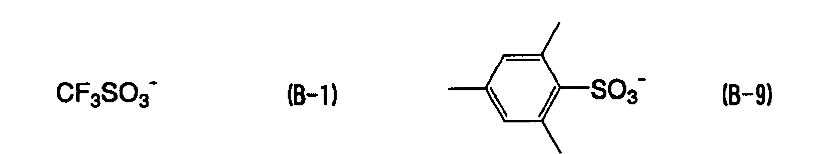

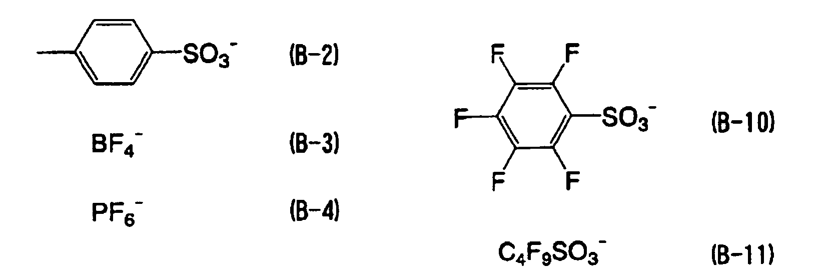

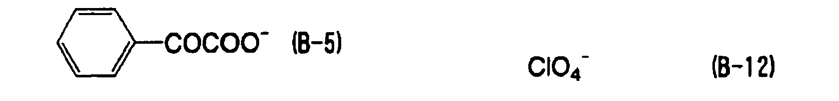

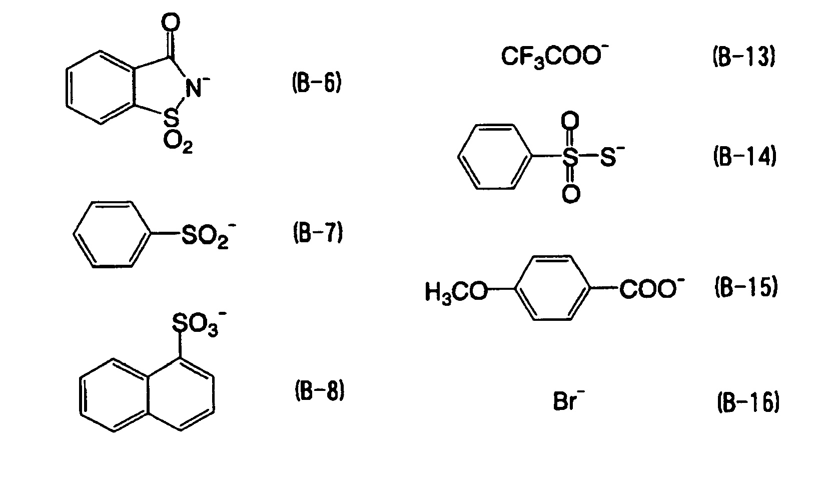

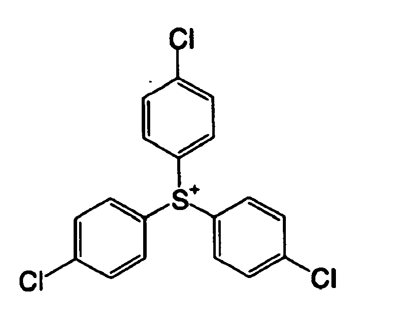

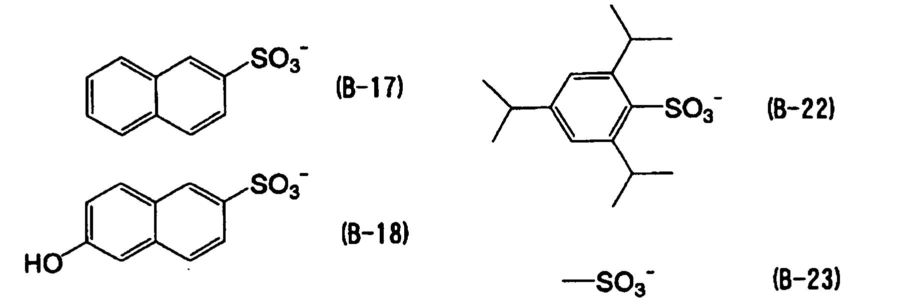

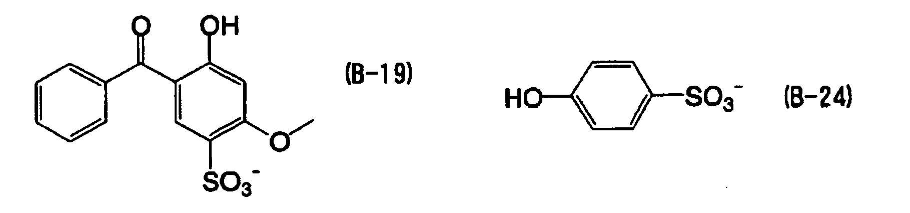

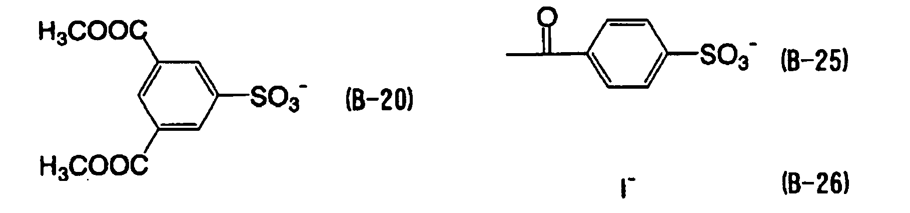

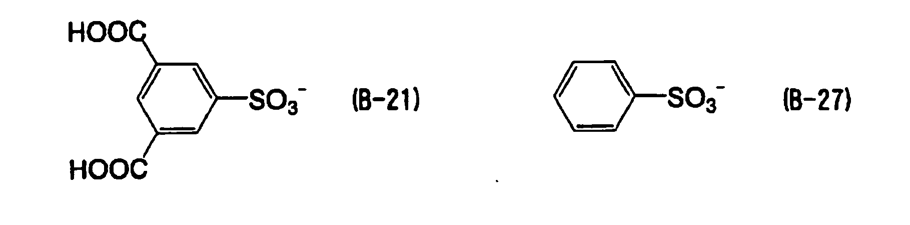

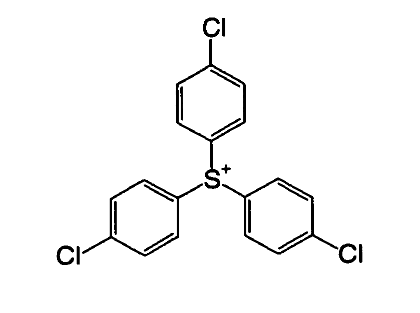

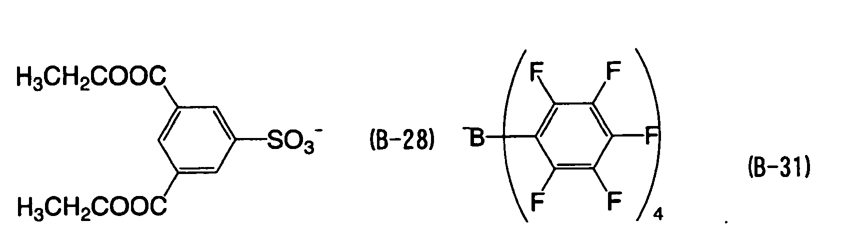

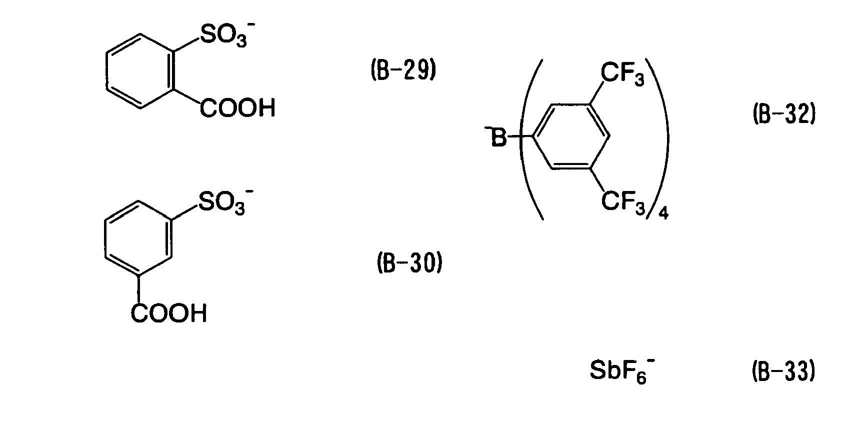

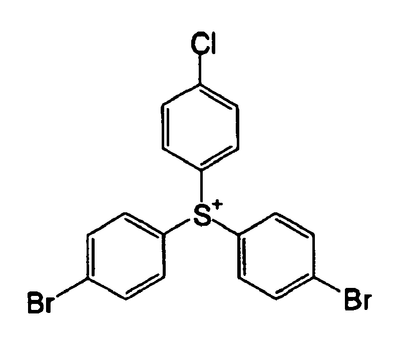

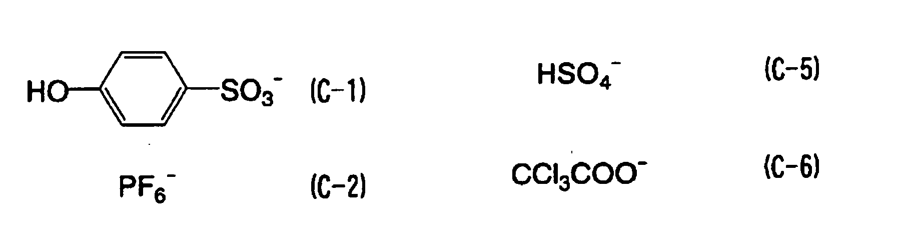

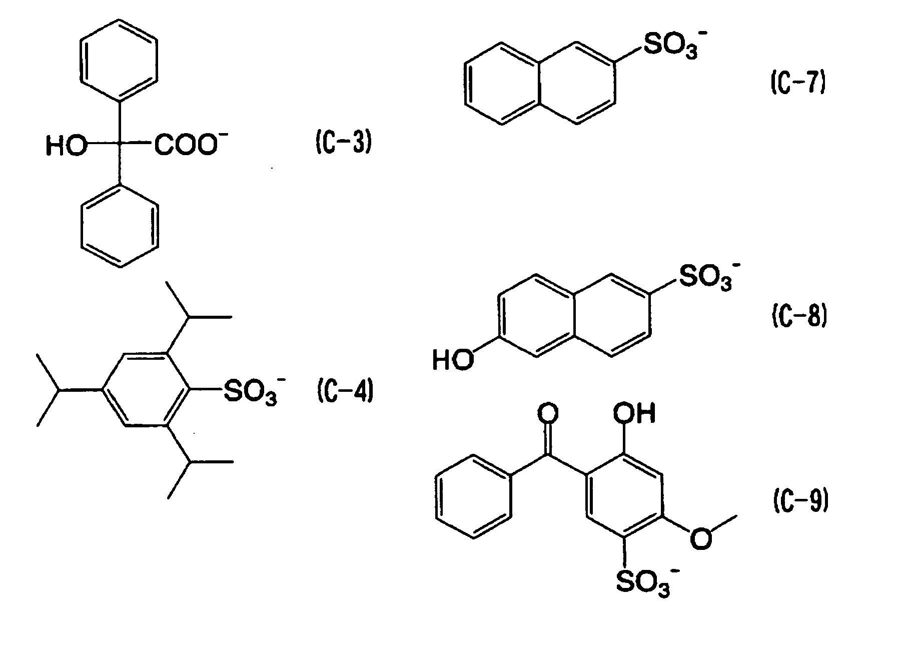

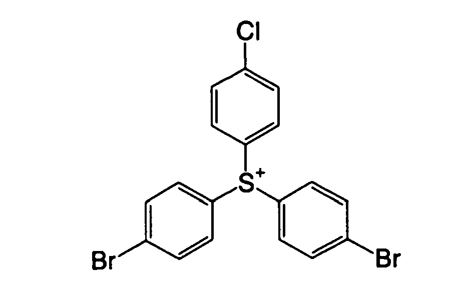

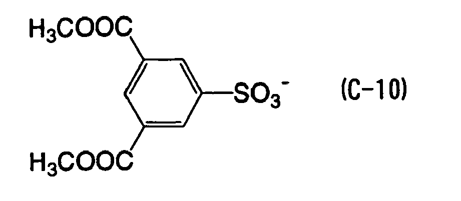

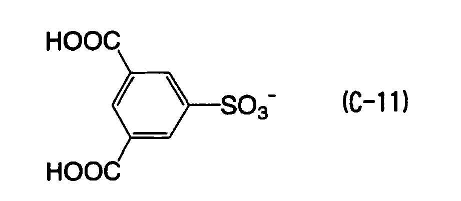

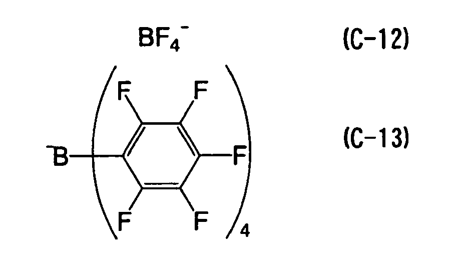

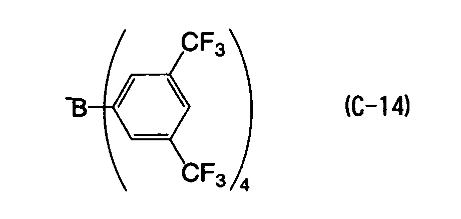

SbF₆⁻ (C-15)

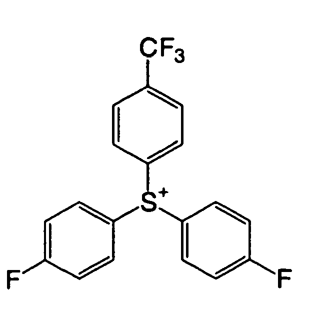

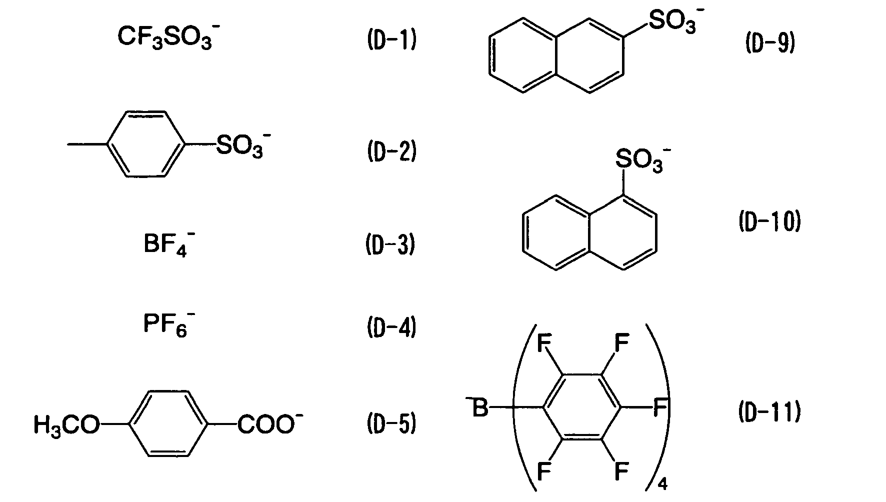

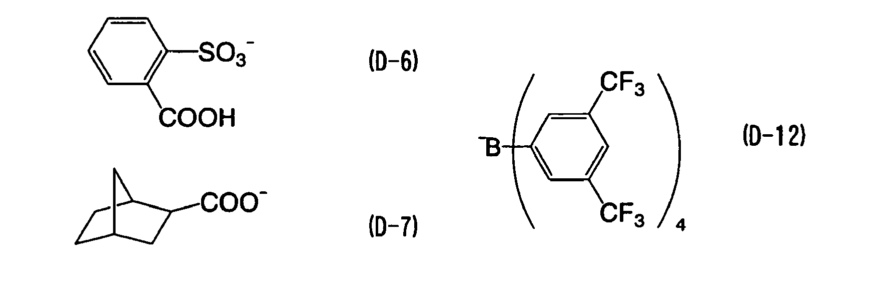

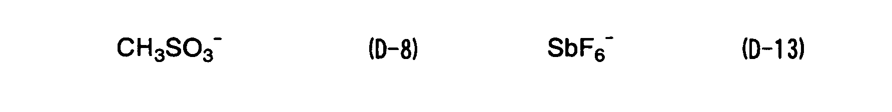

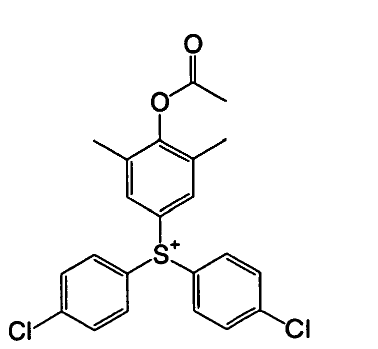

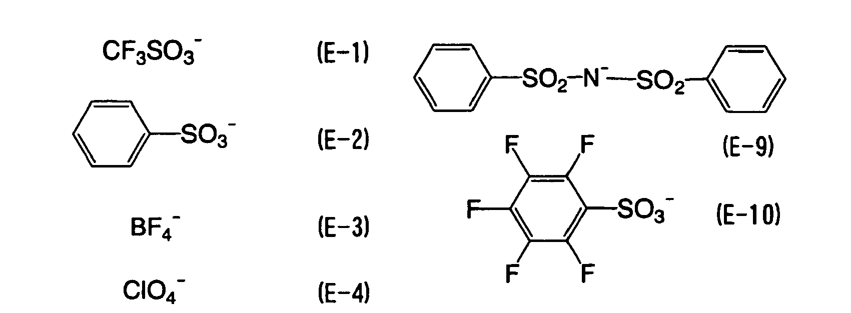

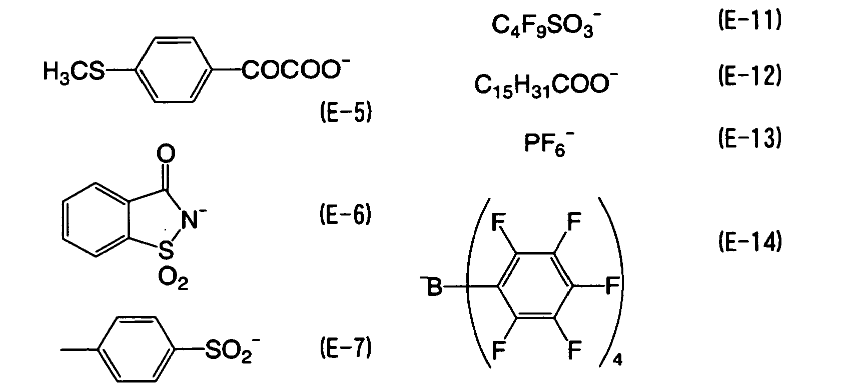

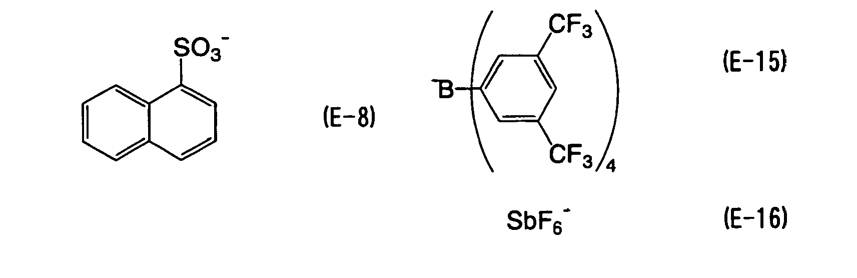

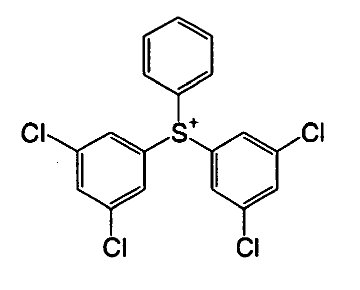

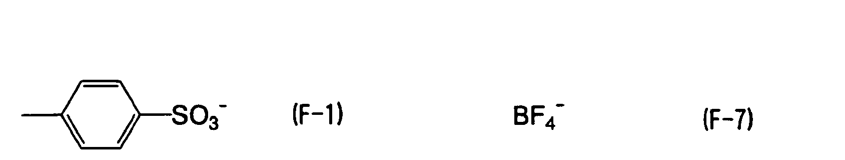

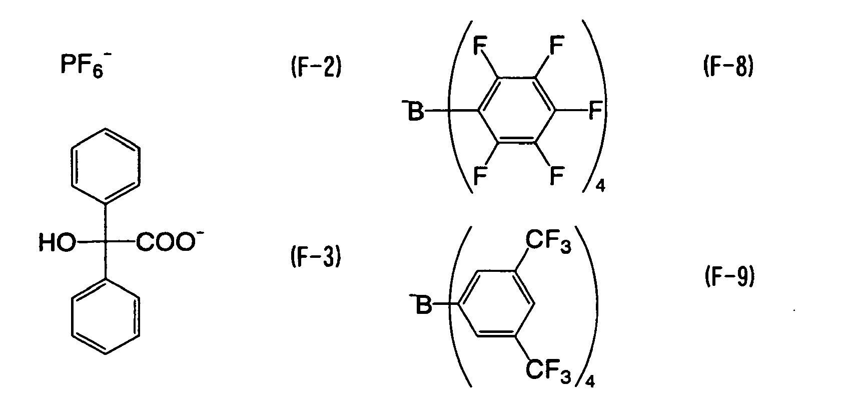

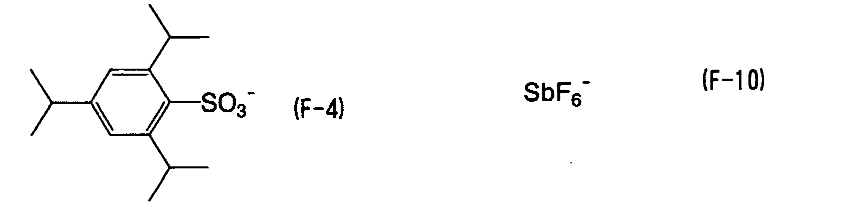

C_{F}SO₃⁻ (F-5)

CCl₃COO⁻ (F-6)

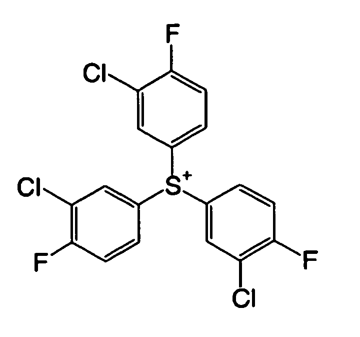

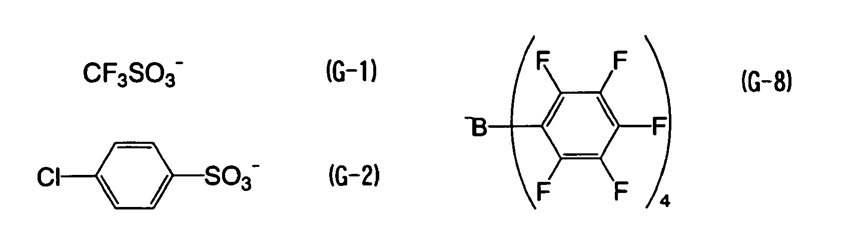

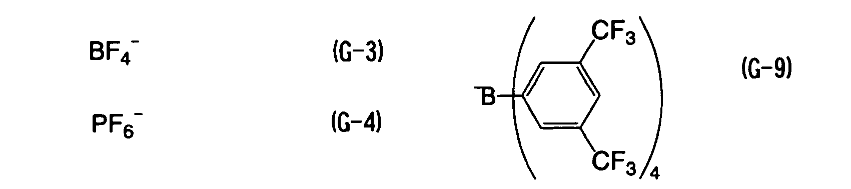

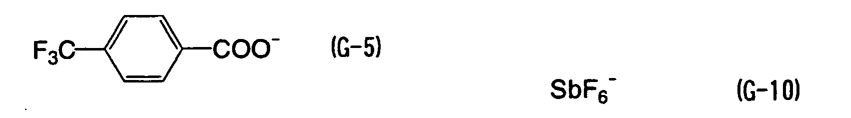

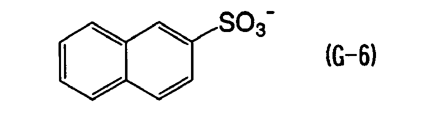

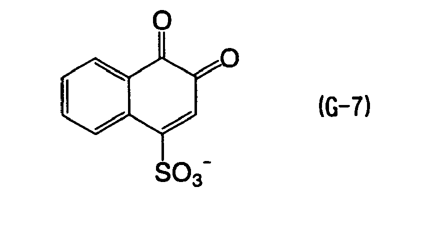

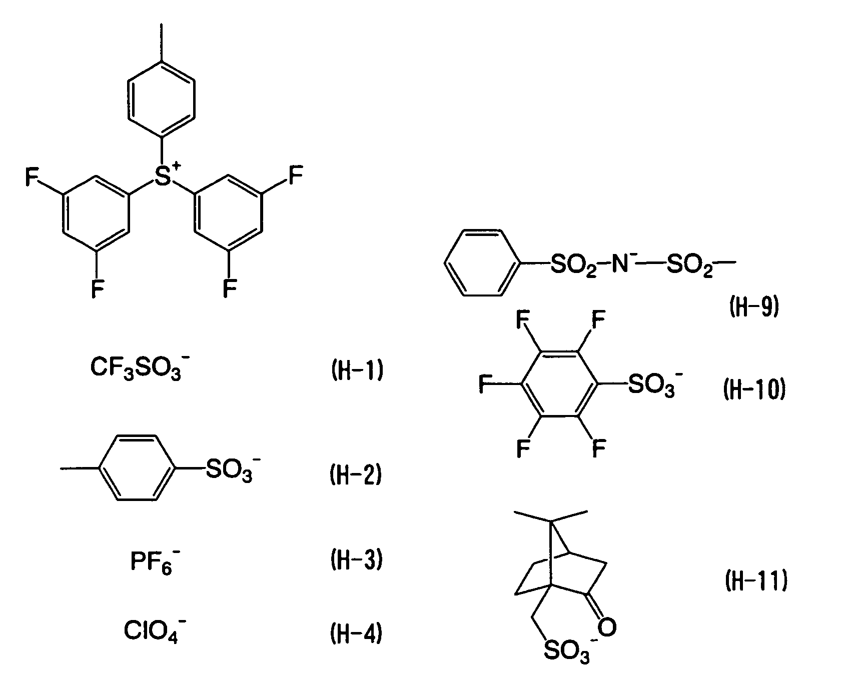

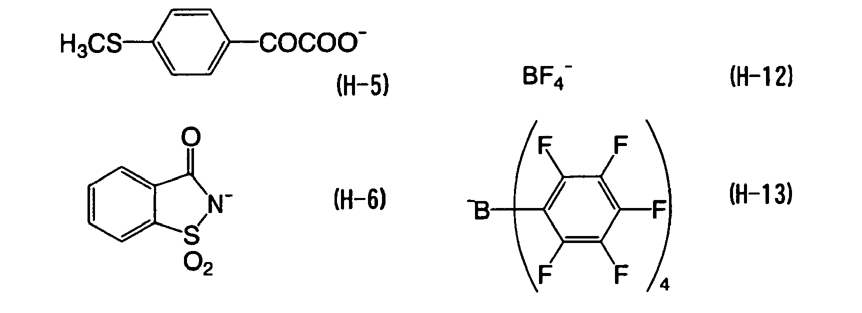

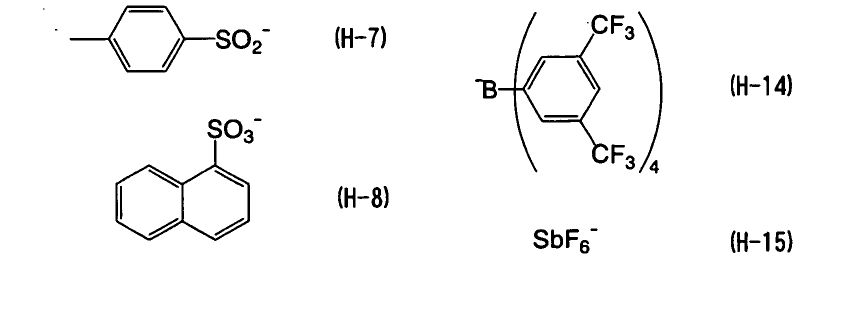

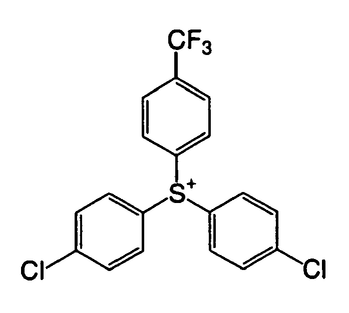

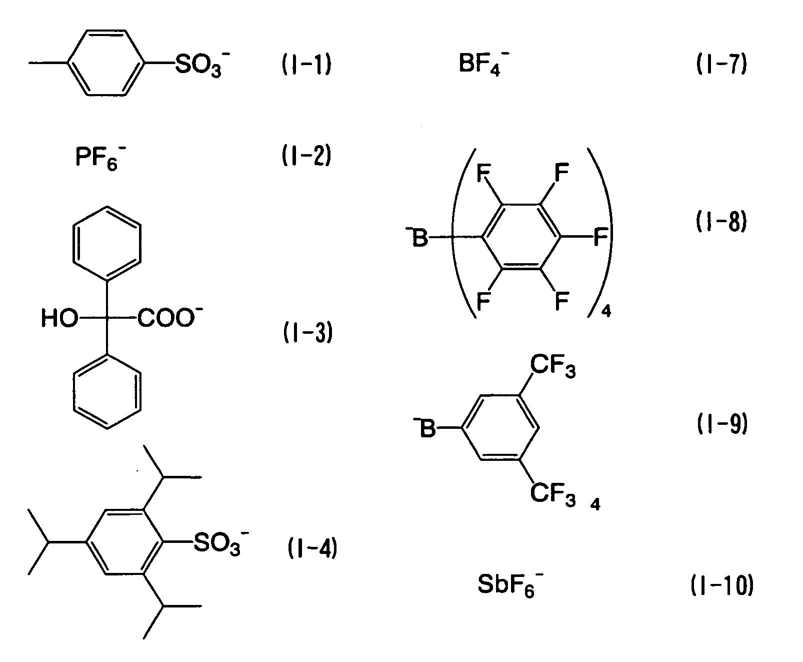

CF₃SO₃⁻ (I-5)

CHCI₂COO⁻ (I-6)

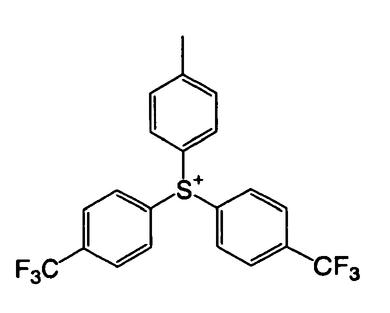

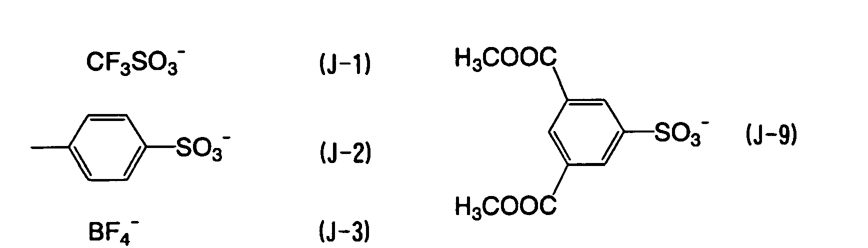

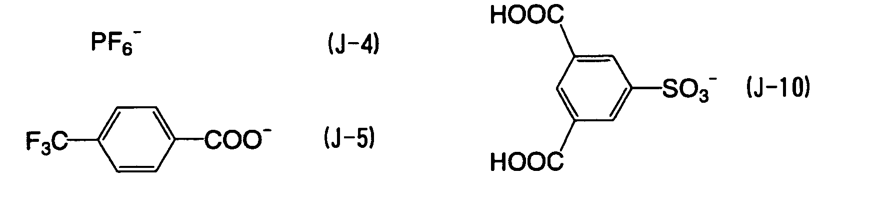

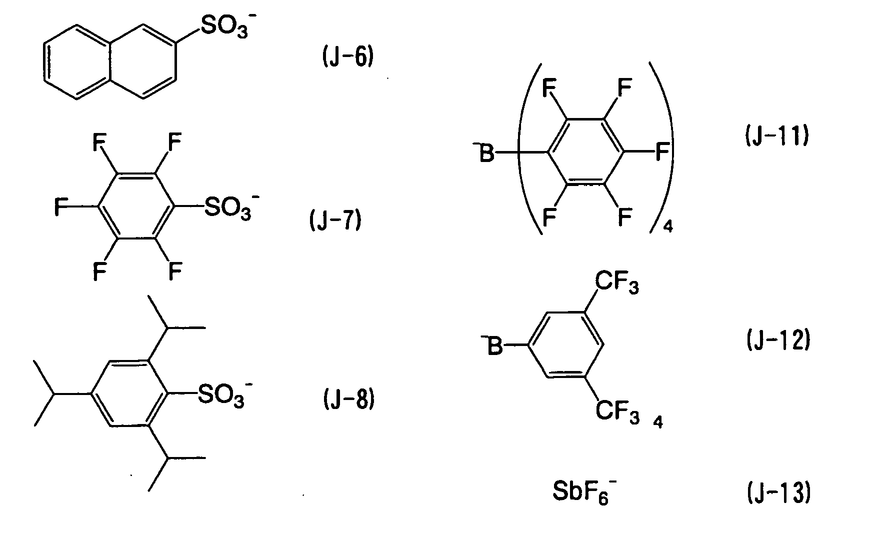

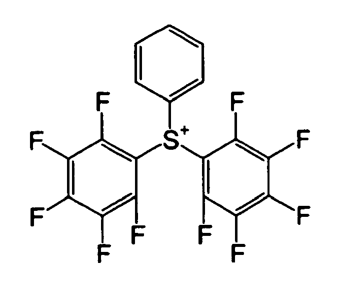

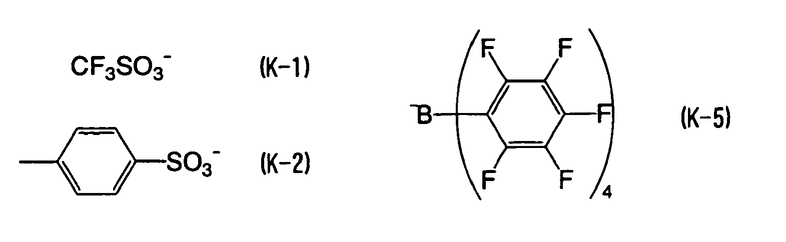

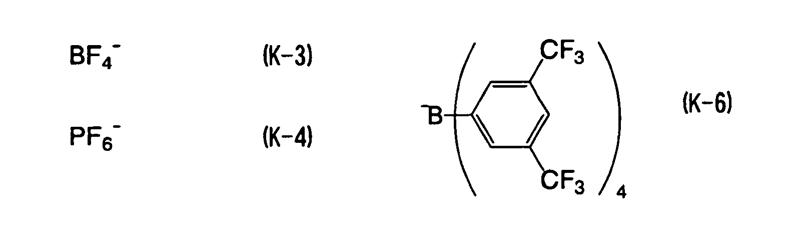

SbF₆⁻ (K-7)

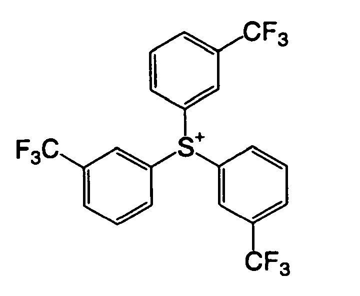

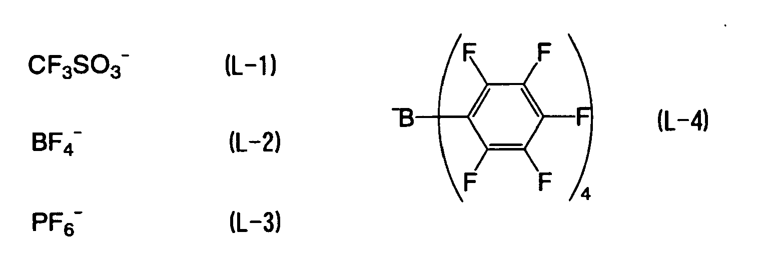

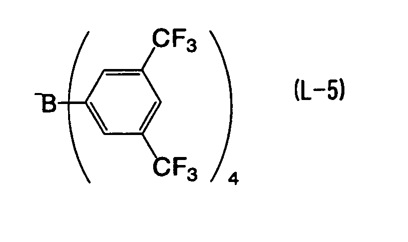

SbF₆- (L-6)

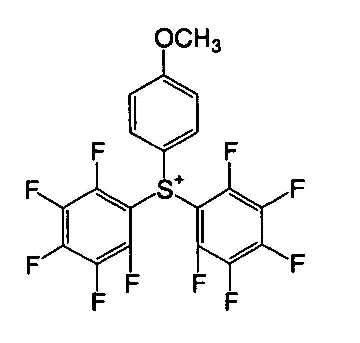

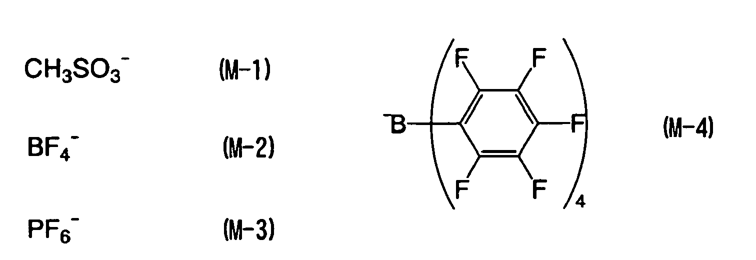

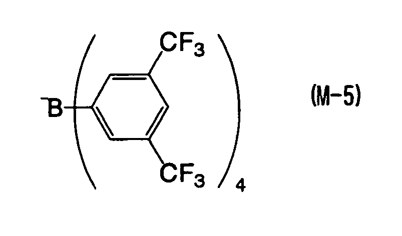

SbF₆⁻ (M-6)

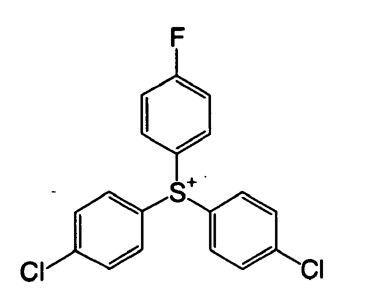

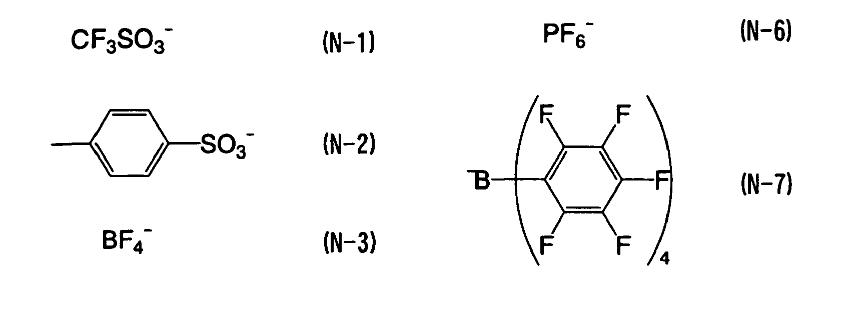

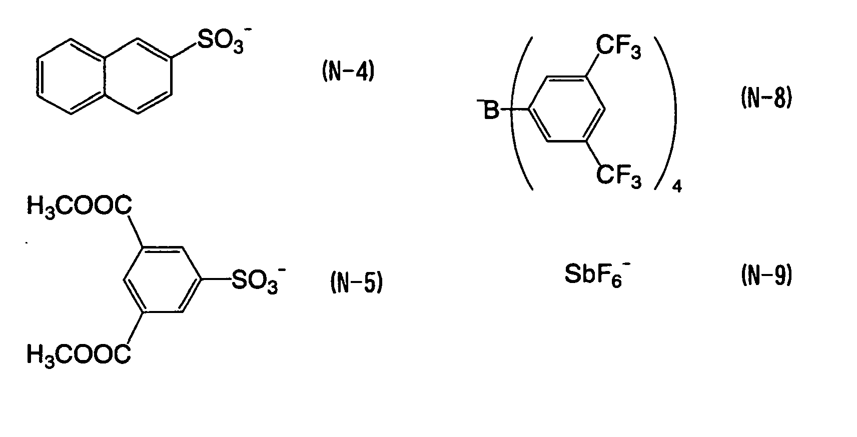

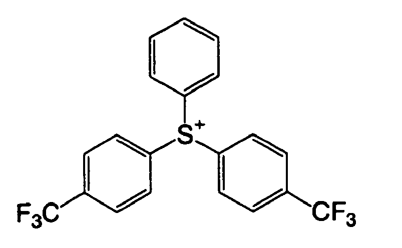

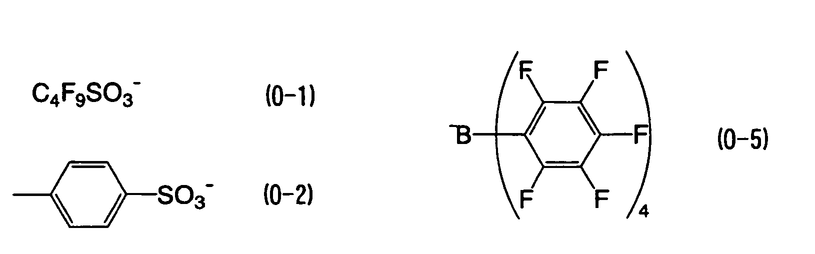

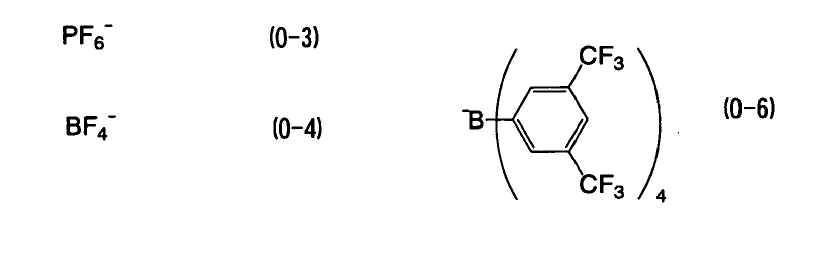

SbF₆⁻ (0-7)

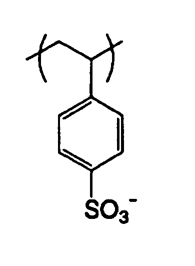

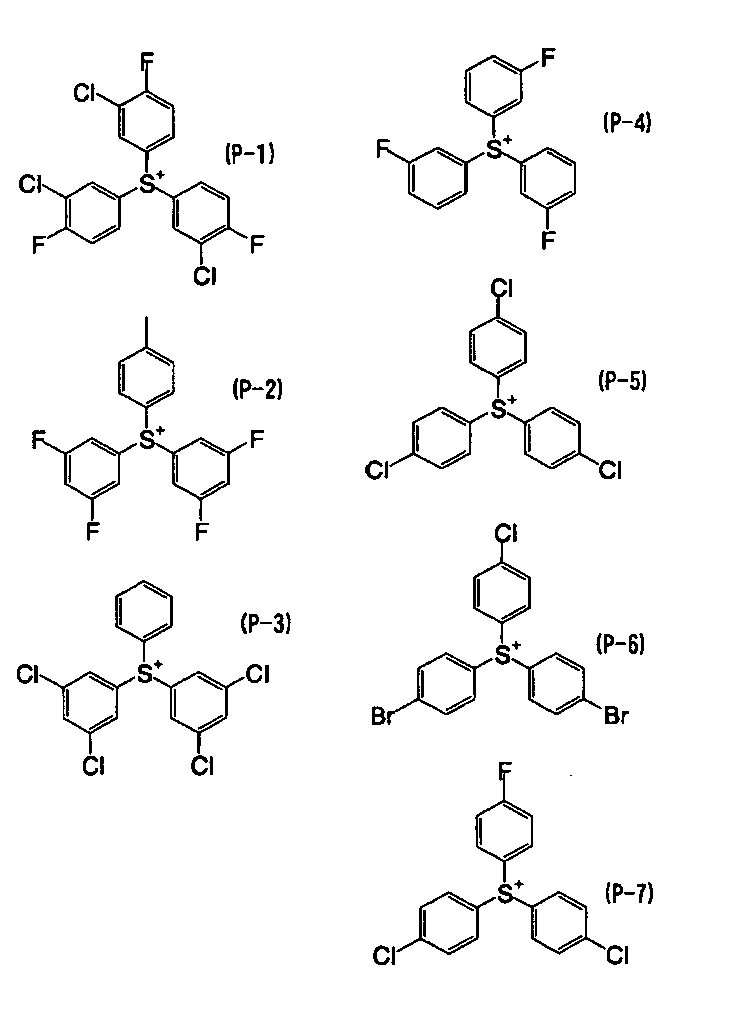

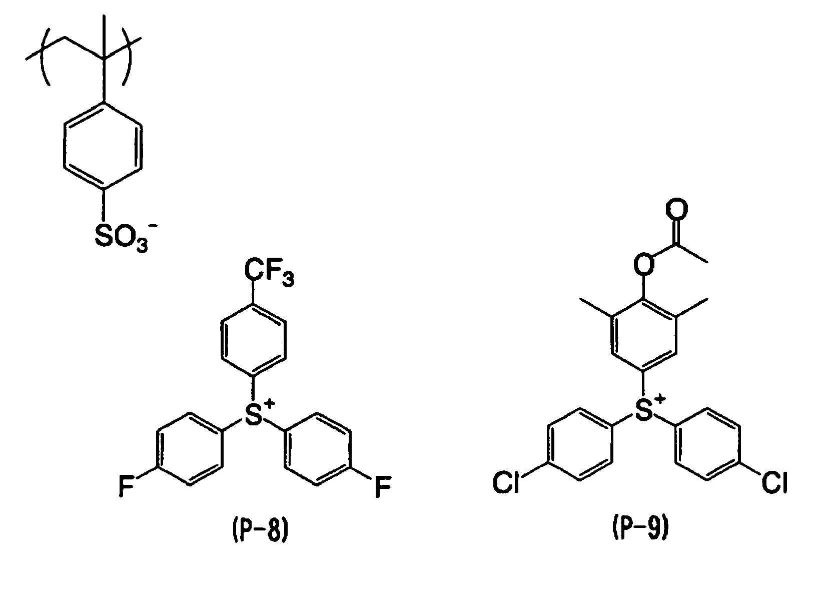

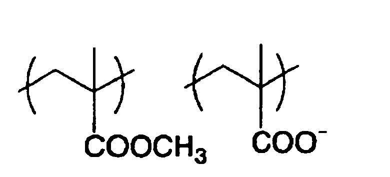

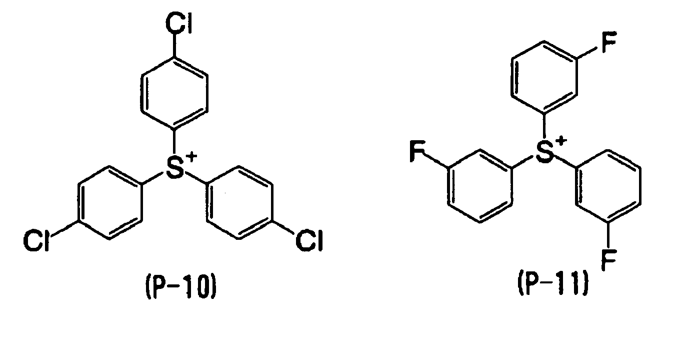

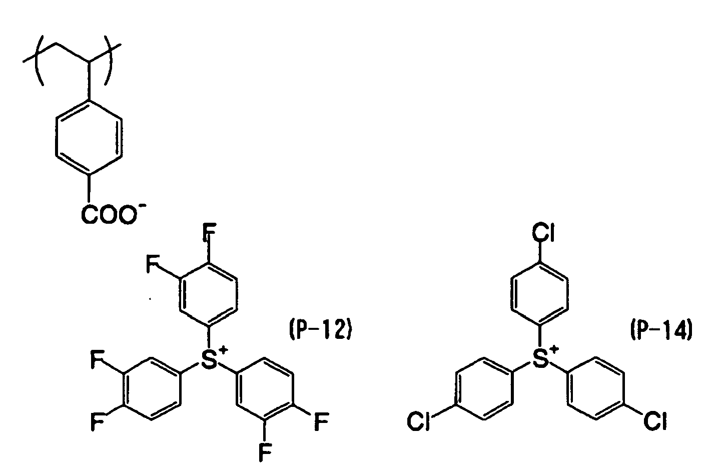

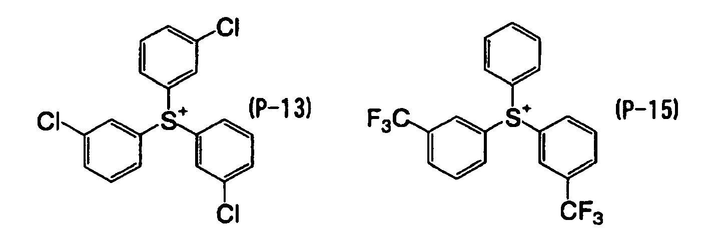

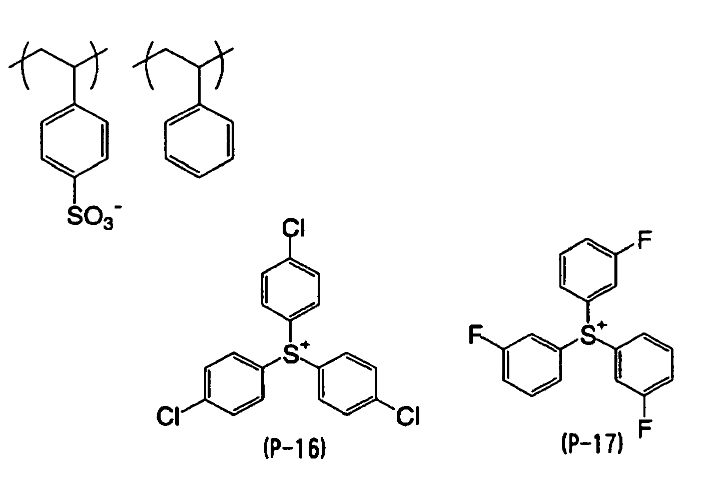

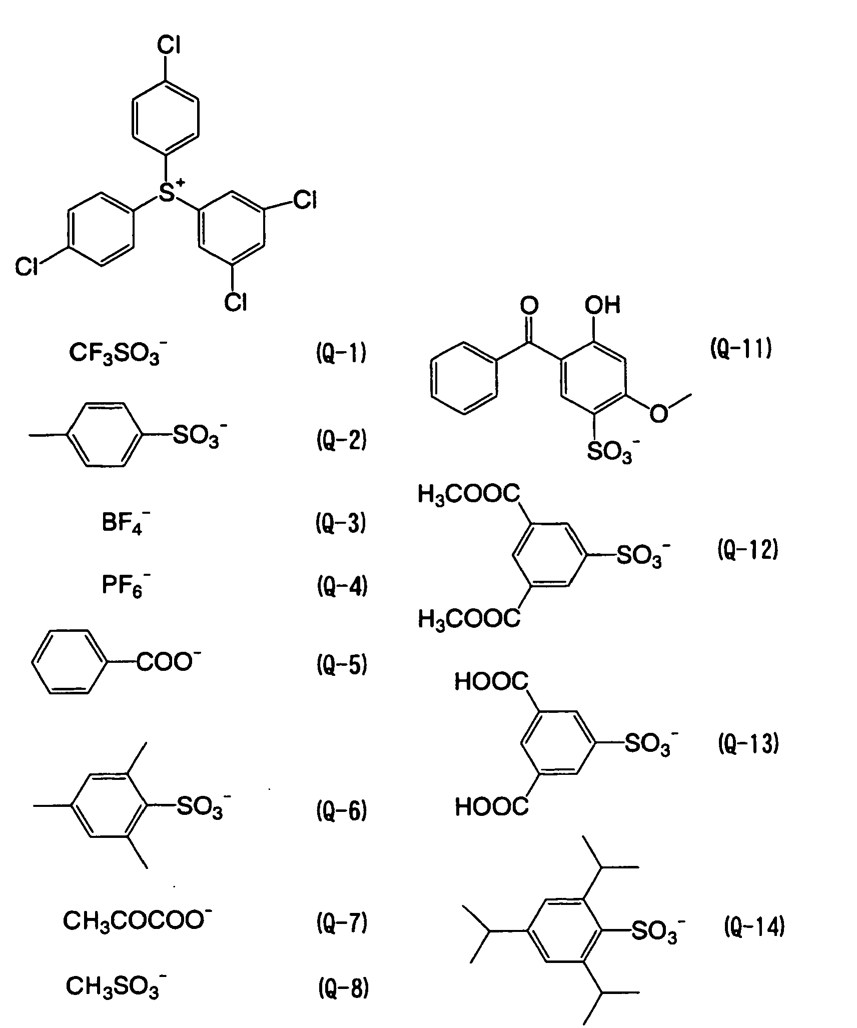

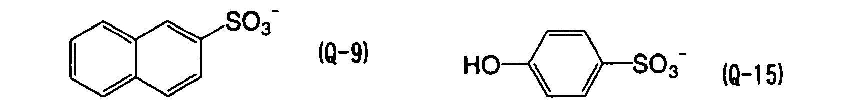

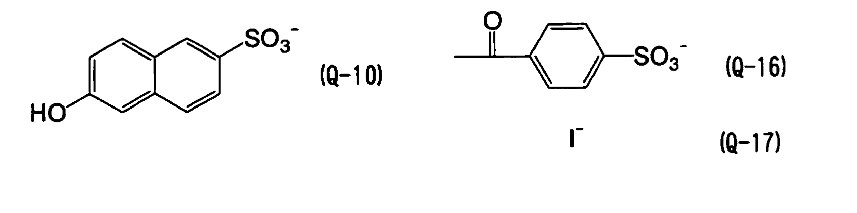

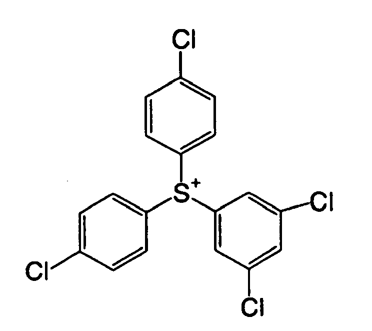

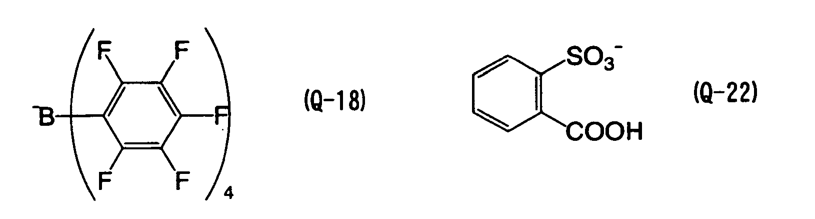

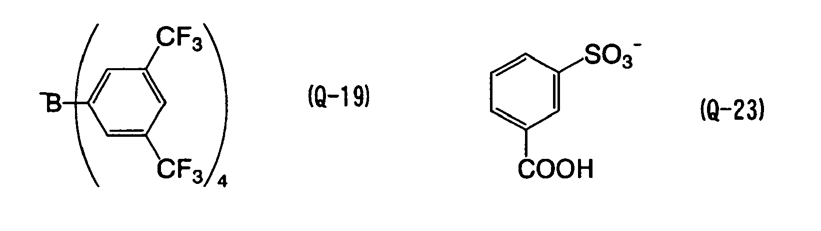

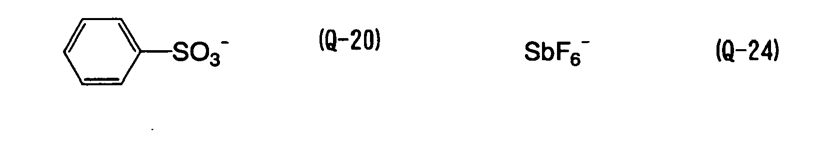

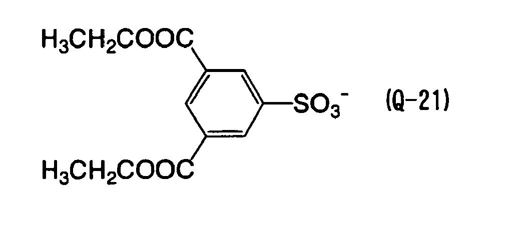

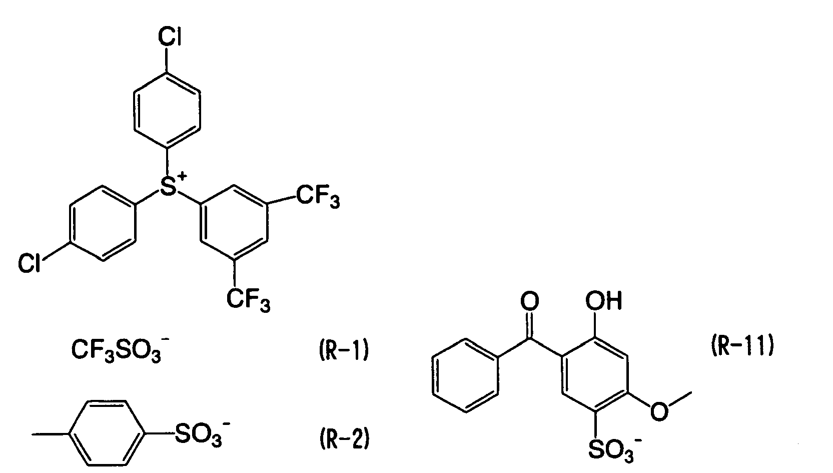

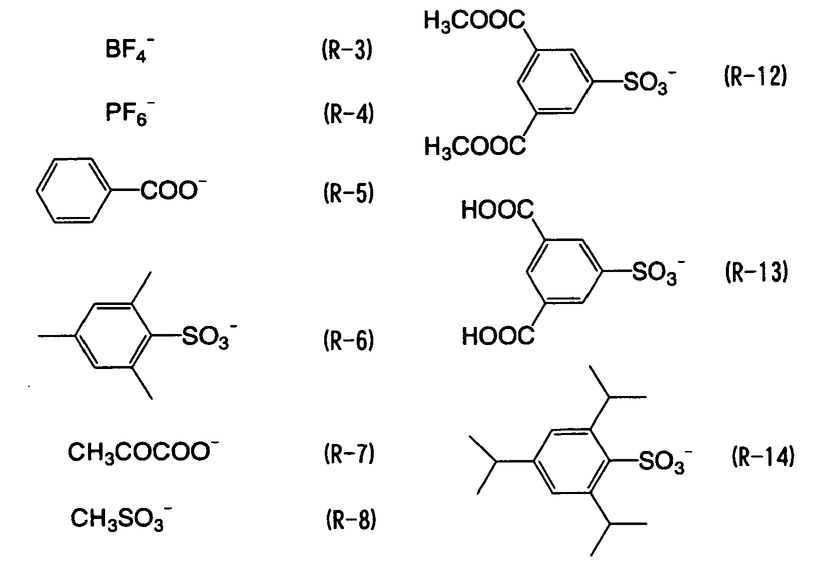

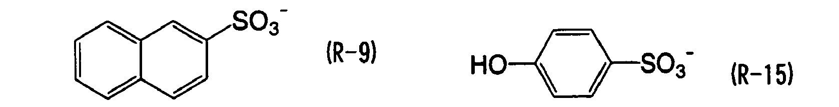

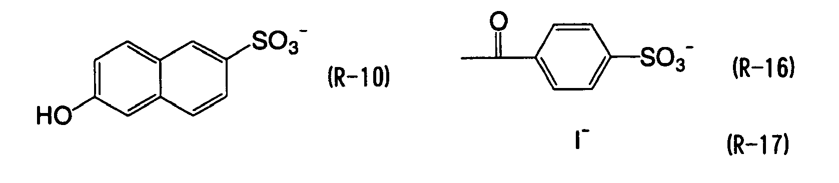

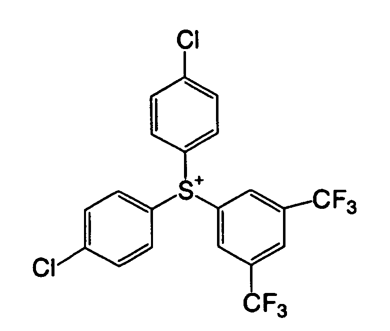

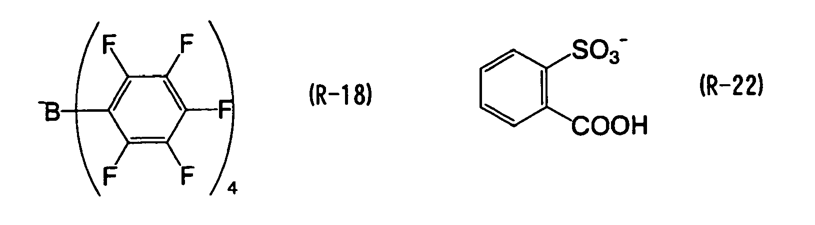

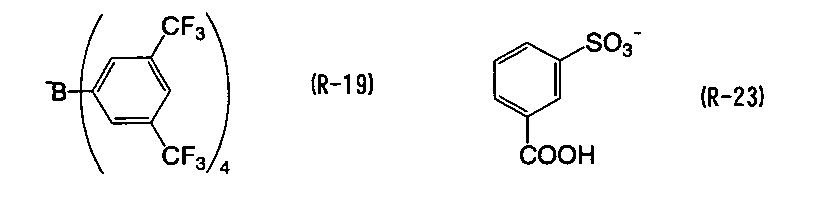

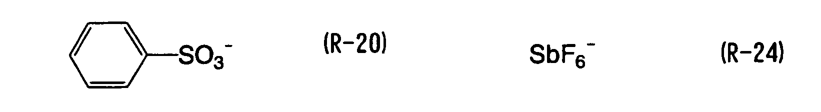

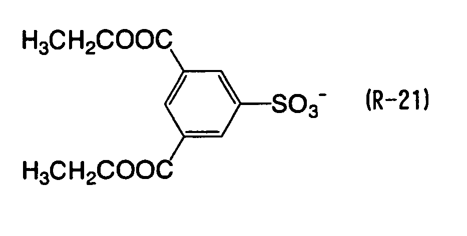

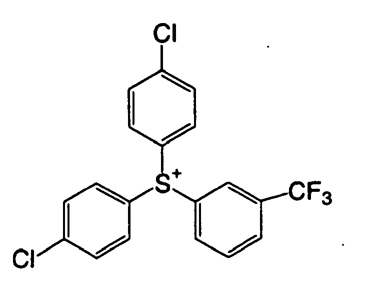

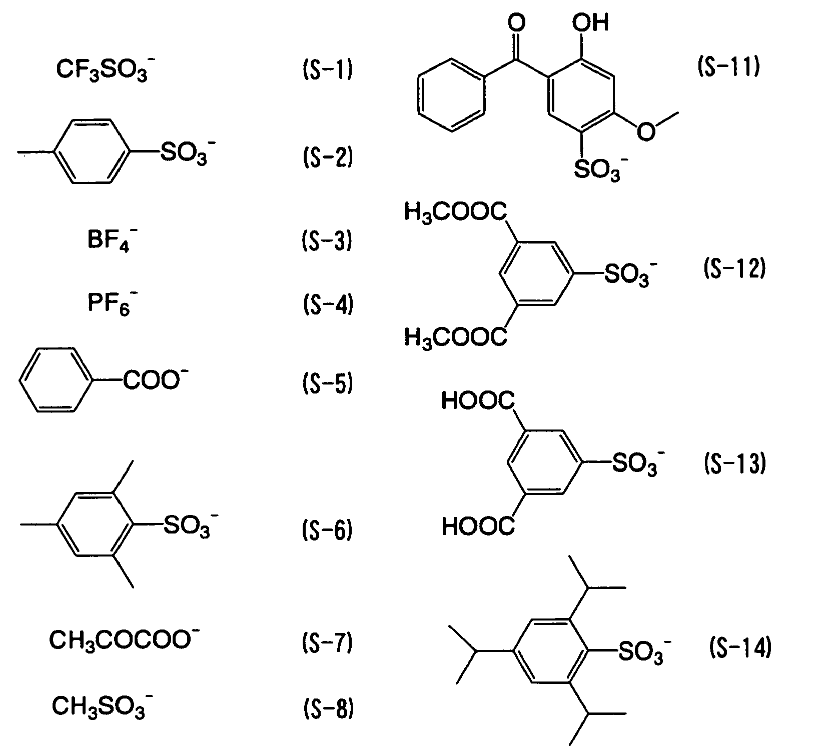

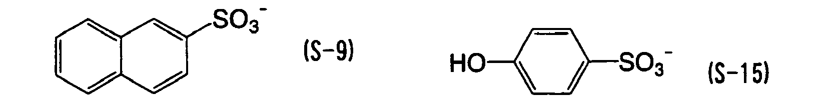

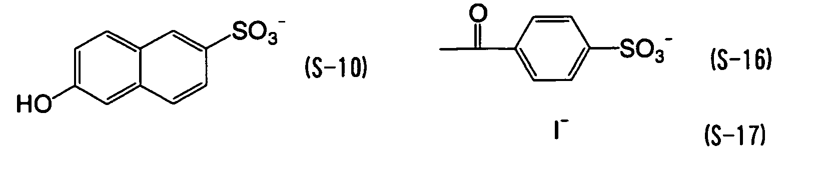

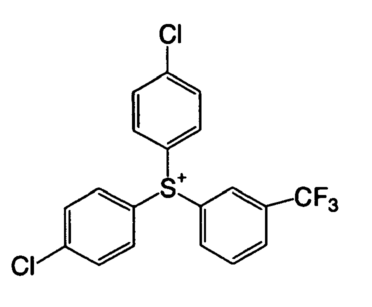

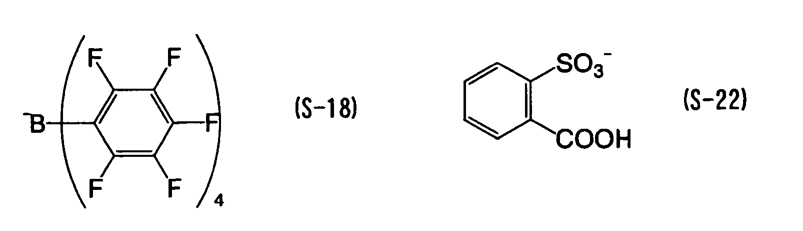

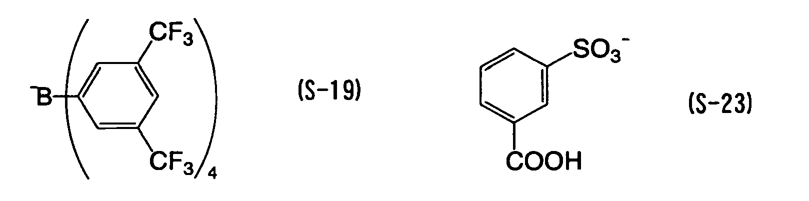

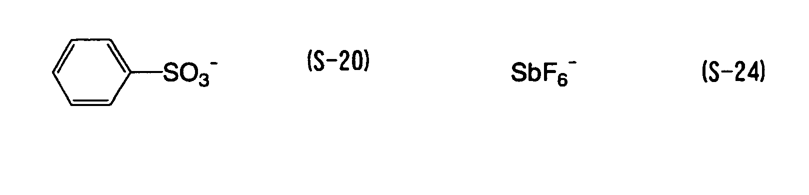

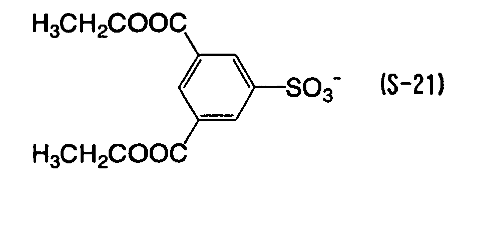

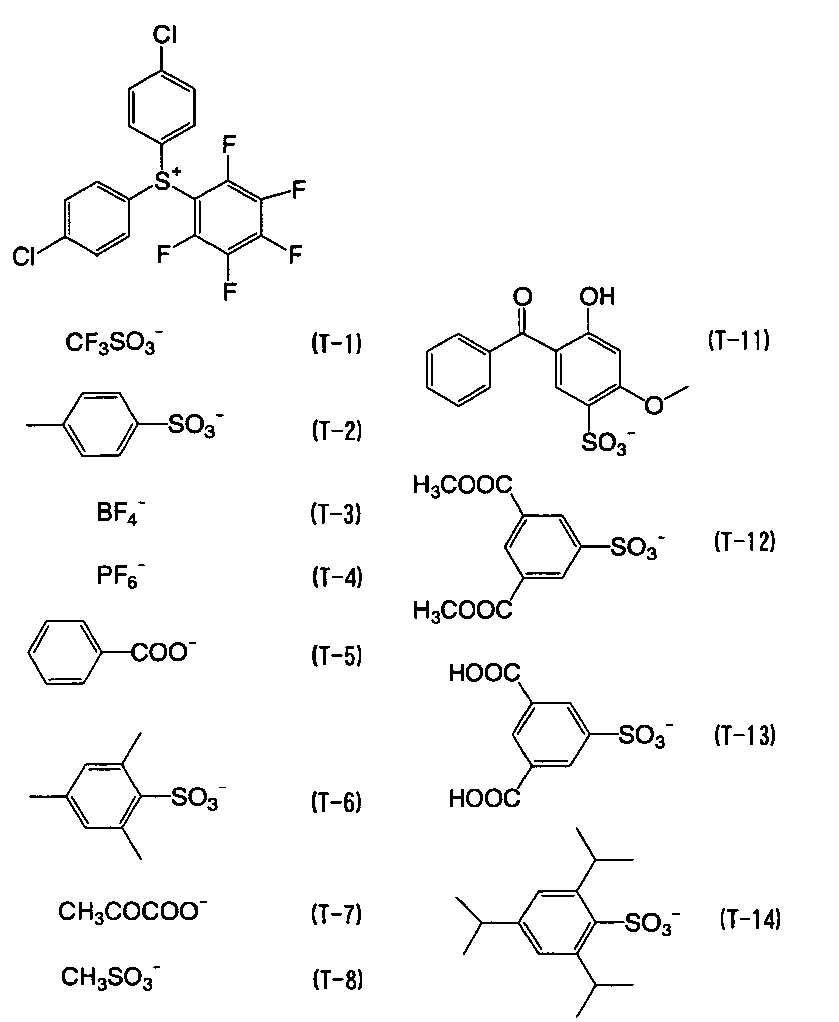

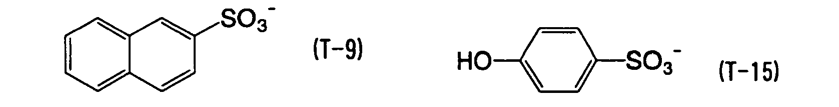

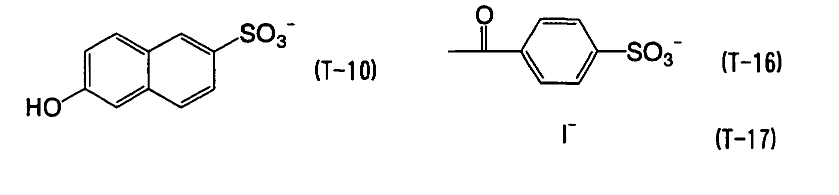

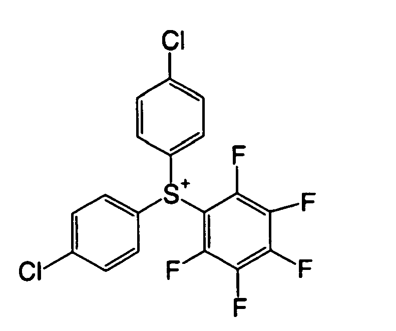

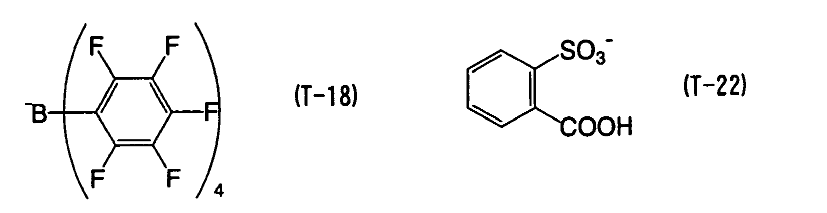

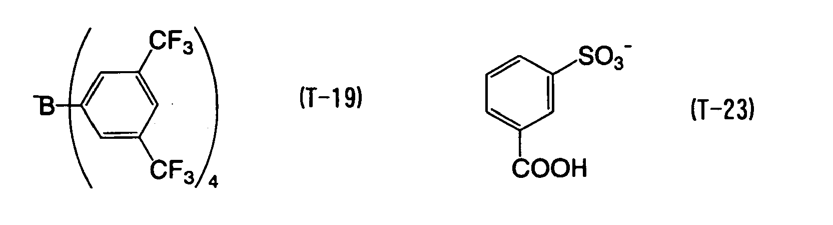

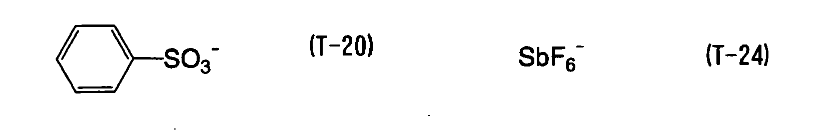

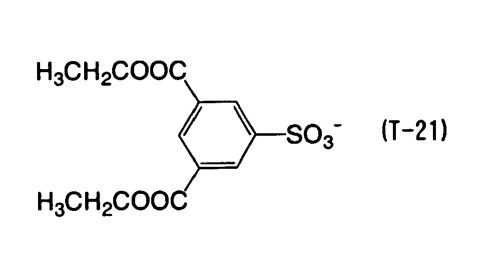

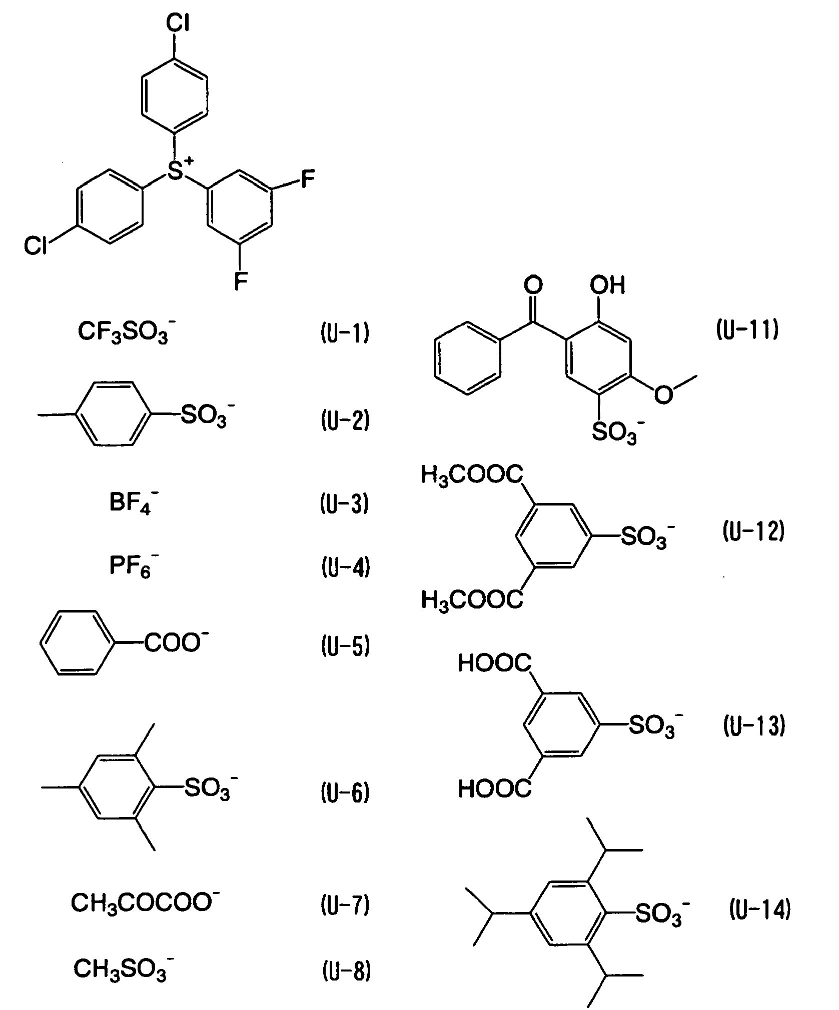

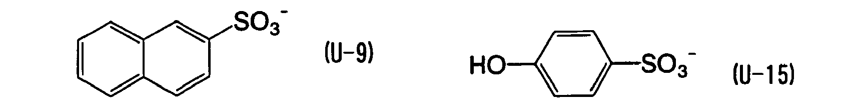

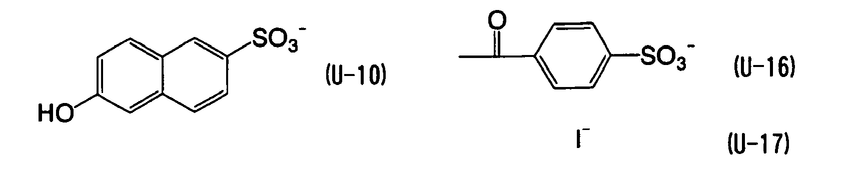

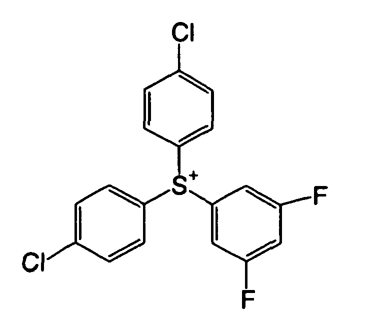

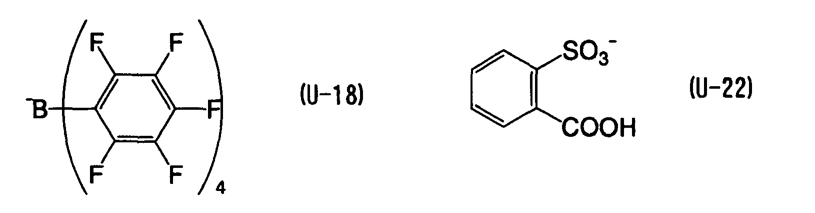

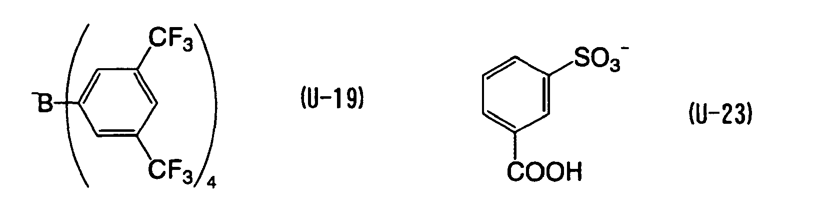

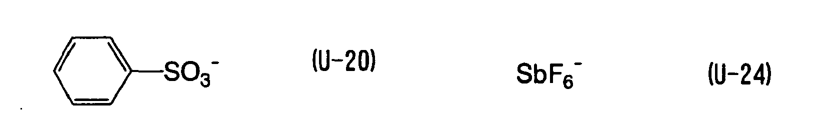

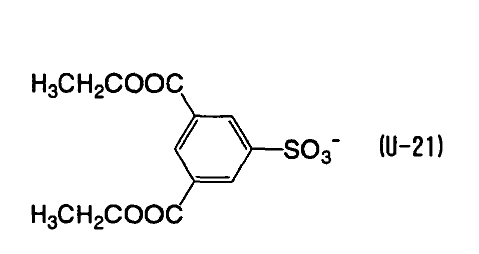

The component (a) according to the invention can be prepared by known methods, as described above. Hereinafter, the invention will be described in detail with reference to specific synthesis Examples.

### (Synthesis Example 1: Synthesis of Exemplary Compound (B-4))

### 1. Synthesis of Tris(4-Chlorophenyl)sulfonium bromide

Under a nitrogen environment, 16.3 g (0.06 mol) of di(4-chlorophenyl)sulfoxide was dissolved in 250 ml of dichloromethane. 10.8 g (0.10 mol) of trimethyl chlorosilane was added dropwise thereto at 0 to 5°C. The solution was stirred at 0°C for 30 minutes, and then 200 g of a tetrahydrofuran (THF) solution of a Grignard reagent prepared from 4-bromochlorobenzene (0.18 mol) by a common method was added dropwise while the reaction container was cooled in ice water at 0 to 10°C. The reaction solution was stirred at 0 to 10°C for 1 hour and at room temperature for 1 hour, and then, poured slowly into an aqueous solution of 250 ml of an aqueous 12% hydrogen bromide solution and ice. Thereafter, the mixture was extracted with 250 ml of dichloromethane and the extract was dried with sodium sulfate.

Then the solvent was removed, 100 ml of methanol was added, and the solution was stirred for 30 minutes, so that a solid precipitated. The solid was removed, and the filtrate was concentrated. Then, the concentrated filtrate was washed twice with 100 ml of ethyl acetate. Then, the concentrated filtrate was treated with ethyl acetate under reflux to give 12.0 g (44%) of a white solid of (tris(4-chlorophenyl)sulfonium bromide).

### 2. Synthesis of Exemplary Compound (B-4)

To an aqueous solution of 4.95 g of potassium hexafluorophosphate salt in 100 ml of distilled water, a solution of 10.0 g of tris(4-chlorophenyl)sulfonium bromide obtained as described above in 50 ml of methanol was added, and the mixture was stirred for 1 hour. The precipitated crystal was filtered and dried under vacuum at 40°C for 6 hours, to give 8.65 g (yield 70.2%) of a solid. NMR analysis of the structure of this solid confirmed that the crystal was the exemplary compound (B-4).

### [Synthesis Example 2: Synthesis of Exemplary Compound (B-31)]

An exemplary compound (B-31) was obtained in the same manner as the synthesis of the exemplary compound (B-4), except that potassium hexafluorophosphate salt used in the synthesis of the exemplary compound (B-4) was replaced with potassium tetrakis(pentafluorophenylborate) salt. NMR analysis of the structure of this solid confirmed that the crystal was the exemplary compound (B-31).

### [Synthesis Example 3: Synthesis of Exemplary Compound (B-32)]

An exemplary compound (B-32) was obtained in the same manner as the synthesis of the exemplary compound (B-4), except that potassium hexafluorophosphate salt used in the synthesis of the exemplary compound (B-4) was replaced with sodium tetrakis[3,5-bis(trifluoromethyl)phenyl]borate salt. NMR analysis of the structure of this solid confirmed that the crystal was the exemplary compound (B-32).

### [Synthesis Example 4: Synthesis of Exemplary Compound (1-2)]

An exemplary compound (I-2) was obtained in the same manner as the synthesis of the exemplary compound (B-4), except that di(4-chlorophenyl)sulfoxide used in the synthesis of the exemplary compound (B-4) was replaced with di(4-trifluoromethylyphenyl). NMR analysis of the structure of this solid confirmed that the crystal was the exemplary compound (1-2).

### [Synthesis Example 5: Synthesis of Exemplary Compound (B-17)]

To an aqueous solution of 4.60 g of sodium 2-naphthalenesulfonate salt dissolved in 100 ml of distilled water, a solution of 4.46 g of tris(4-chlorophenyl)sulfonium bromide dissolved in 50 ml of dichloromethane was added, and the mixture was stirred for 1 hour. The organic layer was extracted and washed with 100 ml of water. The organic layer was dried with sodium sulfate and then concentrated. To the concentrated organic layer, 100 ml of ethyl acetate was added, and the mixture was stirred under reflux for 30 minutes. After the mixture was cooled, the precipitate was filtered while being washed with ethyl acetate, and dried under vacuum at 40°C for 6 hours, to give 5.07 g (yield 88%) of a solid containing ethyl acetate in an amount of 5.7 % by weight. NMR analysis of the structure of this solid confirmed that the crystal was the exemplary compound (B-17).

### [Synthesis Example 6: Synthesis of Exemplary Compound (Q-4)]

An exemplary compound (Q-4) was obtained in the same manner as the synthesis of the exemplary compound (B-4), except that 4-bromochlorobenzene used in the synthesis of the exemplary compound (B-4) was replaced with 1-bromo-3,5-dichlorobenzene. NMR analysis of the structure of this solid confirmed that the crystal was the exemplary compound (Q-4).

### [Synthesis Example 7: Synthesis of Exemplary Compound (R-4)]

An exemplary compound (R-4) was obtained in the same manner as the synthesis of the exemplary compound (B-4), except that 4-bromochlorobenzene used in the synthesis of the exemplary compound (B-4) was replaced with 1-bromo-3,5-bistrifluoromethylbenzene. NMR analysis of the structure of this solid confirmed that the crystal was the exemplary compound (R-4).

In the above, specific synthesis examples 1 to 7 for the specific polymerization initiators are described. Other specific polymerization initiators can also be prepared in similar manners to the above.

In the ink composition according to the invention, only one specific polymerization initiator (a) may be used, or two or more specific polymerization initiators (a) may be used in combination. In the invention, the amount of the specific polymerization initiator (a) based on the total amount of the ink composition is preferably from 0.01 to 30 % by weight, more preferably from 0.5 to 20 % by weight. The ratio of the amount of the specific polymerization initiator (a) to the amount of the after-mentioned sensitizing dye (c) (specific polymerization initiator (a)/sensitizing dye (c)) is preferably in the range of 1/200 to 200/1, more preferably in the range of 1/50 to 50/1, and still more preferably in the range of 1/5 to 20/1.

### Other Polymerization Initiators

Only one specific polymerization initiator may be used or two or more specific polymerization initiators may be used in combination.

The ink composition according to the invention may further contain one or more other known polymerization initiators in addition to the specific polymerization initiator, if they do not impair the advantageous effects of the invention. Examples of such additional known polymerization initiators that can be used in combination with the specific polymerization initiator include known photopolymerization initiators for radical or cation-polymerization used in radiation-curable ink compositions. The photopolymerization initiators that can be used in combination with the specific polymerization initiator are compounds that undergo chemical changes by the action of light or interaction with the electronically-excited state of the sensitizing dye, so as to generate at least one species of radical, acid, or base. Specifically, any of common photopolymerization initiators known in the art may be used. Specific examples thereof are described, for example, in Bruce M. Monroe et al., Chemical Revue, 93, 435 (1993); R, S. Davidson, Journal of Photochemistry and biology, A: Chemistry, 73, 81 (1993); J. P. Faussier, "Photoinitiated Polymerization-Theory and Applications": Rapra Review vol. 9, Report, Rapra Technology (1998); and M. Tsunookaetal., Prog. Polym. Sci., 21, 1 (1996), the disclosures of which are incorporated herein by reference. Many compounds favorably used in chemical-amplification photoresists and for photo-cation-polymerization are also described in Japanese Research Association for Organic Electronics Materials Ed., "Organic Materials for Imaging" (published by Bun-Shin Shuppan (1993), pp. 187 to 192), the disclosure of which is incorporated herein by reference. The compounds that undergo oxidative or reductive bond cleavage through the interaction with the electronically-excited state of sensitizing dye are also known, and described, for example in F. D. Saeva, Topics in Current Chemistry, 156, 59 (1990); G. G. Maslak, Topics in Current Chemistry, 168, 1 (1993); H. B. Shuster et al., JACS, 112, 6329 (1990); I. D. F. Eaton et al., JACS, 102, 3298 (1980), the disclosures of which are incorporated herein by reference.

### Radical Polymerization Initiator

In the invention, examples of the radical polymerization initiator that can be used together with the specific polymerization initiator include (a) aromatic ketones, (b) aromatic onium salt compounds, (c) organic peroxides, (d) thio compounds, (e) hexaarylbiimidazole compounds, (f) ketoxime ester compounds, (g) borate compounds, (h) azinium compounds, (i) metallocene compounds, (j) active ester compounds, (k) compounds containing a carbon-halogen bond, and (1) alkylamine compounds. Only one radical polymerization initiator selected from the above compound groups (a) to (1) may be used, or two or more radical polymerization initiators selected from the above compound groups (a) to (1) may be used in combination. In other words, in the invention, a radical polymerization initiator may be used singly, or two or more radical polymerization initiators may be used simultaneously.

### Cation Polymerization Initiator

In the invention, examples of the cation polymerization initiator that can be used in combination with the specific polymerization initiator include compounds used for chemical-amplification-type photoresists and photocation polymerization (see Japanese Research Association for Organic Electronics Materials Ed., "Organic Materials for Imaging" (published by Bun-Shin Shuppan (1993), pp. 187 to 192). Examples of cation polymerization initiators preferred in the invention include: B(C₆Fₛ)4⁻, PF₆⁻, AsF₆⁻, SbF₆⁻, and CF₃SO₃⁻ salts of aromatic onium compounds (e.g., diazonium, ammonium, iodonium, and phosphonium); sulfonated compounds that generate sulfonic acids; halogenated compounds that photo-generate hydrogen halides; and iron-allene complexes.

When other (additional) polymerization initiators such as described above are used, the content thereof is preferably from 0.01 to 20 % by weight, more preferably from 0.5 to 10 % by weight, based on the total weight of the ink composition.

### Polymerizable Compound (b)

The ink composition of the invention contains a polymerizable compound (b). The polymerizable compound (b) may be a radical-polymerizable compound or a cation-polymerizable compound. The radical-polymerizable compound may be selected, for example from photosetting polymerizable compounds used for the photopolymerizable compositions described in JP-B No. 7-31399 and JP-ANos. 7-159983, 8-224982, 10-863, and 9-134011. As the cation-polymerizable compounds, for example, polymerizable compounds used for photosetting resins of cation-polymerization system are known. For example, the polymerizable compounds described in JP-A Nos. 6-43633 and 8-324137 can be used as polymerizable compounds applied to photosetting resins of photocation polymerization system sensitized in the wavelength range of visible rays (400nm or more). Hereinafter, the radical-polymerizable compounds and the cation-polymerizable compounds usable in the invention are described in more detail.

### Radical-Polymerizable Compound (b-1)

The radical-polymerizable compound (b-1) is a compound having a radical-polymerizable ethylenic unsaturated bond, and may be any compound having at least one radical-polymerizable ethylenic unsaturated bond in the molecule. The chemical form of the compound may be a monomer, oligomer, polymer, or the like. Only one radical-polymerizable compound may be used, or two or more radical-polymerizable compounds may be used in an arbitrary ratio for the improvement of the target properties. A multifunctional compound having two or more functional groups is more preferable than a monofunctional compound. Combined use of two or more multifunctional compounds is more preferable in view of the control of the reactively and the properties such as physical properties.

Examples of the radical-polymerizable compound include: unsaturated carboxylic acids such as acrylic acid, methacrylic acid, itaconic acid, crotonic acid, isocrotonic acid and maleic acid, salts thereof, esters thereof, urethanes thereof, amides thereof and anhydrides thereof; acrylonitrile; styrene; various unsaturated polyesters; unsaturated polyethers; unsaturated polyamides; and unsaturated urethanes. Specific examples thereof include acrylic acid derivatives such as 2-ethylhexyl acrylate, stearyl acrylate, 2-hydroxyethyl acrylate, butoxyethyl acrylate, carbitol acrylate, cyclohexyl acrylate, tetrahydrofurfuryl acrylate, benzyl acrylate, bis(4-acryloxypolyethoxyphenyl)propane, neopentylglycol diacrylate, 1,6-hexanediol diacrylate, ethylene glycol diacrylate, diethylene glycol diacrylate, triethylene glycol diacrylate, tetraethylene glycol diacrylate, polyethylene glycol diacrylate, polypropylene glycol diacrylate, pentaerythritol triacrylate, pentaerythritol tetraacrylate, dipentaerythritol tetraacrylate, trimethyrolpropane triacrylate, tetramethylolmethane tetraacrylate, oligoester acrylates, N-methylol acrylamide, diacetone acrylamide, epoxy acrylates, and urethane acrylates; methacrylic acid derivatives such as methyl methacrylate, n-butyl methacrylate, 2-ethylhexyl methacrylate, lauryl methacrylate, allyl methacrylate, glycidyl methacrylate, benzyl methacrylate, dimethylaminomethyl methacrylate, 1,6-hexanediol dimethacrylate, ethylene glycol dimethacrylate, triethylene glycol dimethacrylate, polyethylene glycol dimethacrylate, polypropylene glycol dimethacrylate, trimethylolethane trimethacrylate, trimethyrolpropane trimethacrylate, and 2,2-bis(4-methacryloxypolyethoxyphenyl)propane; and derivatives of allyl compounds such as allylglycidylether, diallyl phthalate, and triallyl trimellitate. More specifically, radical polymerizable or crosslinkable monomers, oligomers and polymers commercially available or known in the art are also usable, such as those described in Shinzo Yamashita Ed., "Crosslinking Agent Handbook", (1981, Taisei Publishing); Kiyoshi Kato Ed., "UV-EB Curing Handbook (Raw Material)" (1985, Kobunshi Kankokai); RadTech Japan Ed., "Application and Market of UV-EB Curing Technology", p. 79, (1989, CMC); and Eiichiro Takiyama, "Polyester Resin Handbook", (1988, Nikkankogyo Shimbun), the disclosures of which are incorporated herein by reference.

### Preferable Radical-Polymerizable Compound

The polymerizable compound is preferably a (meth)acrylic monomer or prepolymer, or a urethane-based monomer or prepolymer, and more preferably a compound selected from the following: 2-ethylhexyl-diglycol acrylate, 2-hydroxy-3-phenoxypropyl acrylate, 2-hydroxybutyl acrylate, hydroxypivalic acid neopentylglycol diacrylate, 2-acryloyloxyethylphthalic acid, methoxy-polyethyleneglycol acrylate, tetramethylolmethane triacrylate, 2-acryloyloxyethyl-2-hydroxyethylphthalic acid, dimethyloltricyclodecane diacrylate, ethoxylated phenyl acrylate, 2-acryloyloxyethylsuccinic acid, nonylphenol EO adduct acrylate, modified glycerine triacrylate, bisphenol A diglycidylether acrylic acid adduct, modified bisphenol A diacrylate, phenoxy-polyethylene glycol acrylate, 2-acryloyloxyethyl hexahydrophthalic acid, bisphenol A PO adduct diacrylate, bisphenol A EO adduct diacrylate, dipentaerythritol hexaacrylate, pentaerythritol triacrylate tolylene diisocyanate urethane prepolymer, lactone-modified flexible acrylate, butoxyethyl acrylate, propyleneglycol diglycidyl ether acrylic acid adduct, pentaerythritol triacrylate hexamethylene diisocyanate urethane prepolymer, 2-hydroxyethyl acrylate, methoxydipropyleneglycol acrylate, ditrimethylolpropane tetraacrylate, pentaerythritol triacrylate hexamethylene diisocyanate urethane prepolymer, stearyl acrylate, isoamyl acrylate, isomyristyl acrylate, isostearyl acrylate, etc.

These acrylate compounds are less irritative to skin and less sensitizing (less likely to cause rash) than polymerizable compounds used in conventional UV-curable inks. Further, the viscosity of the acrylate compounds can be relatively low, and the acrylate compounds imparts to ink stable ink ejection property, high polymerization sensitivity, and superior adhesion to recording media. In the present invention, when the polymerizable compound is an acrylate compound such as described above, the content of the acrylate compound based on the total weight of the ink composition is preferably from 20 to 95 % by weight, more preferably from 50 to 95 % by weight, still more preferably from 70 to 95 % by weight.

The monomers described as examples of the polymerizable compound are relatively non-irritative even if the monomers are small, and have high reactivity, low viscosity, and enables excellent adhesion to recording media.

From the viewpoint of improving the sensitivity, bleed, and adhesion to recording media, it is preferable to use a combination of a monoacrylate (such as described above) and a polyfunctional acrylate monomer or oligomer having a molecular weight of 400 or more (preferably 500 or more). It is particularly preferable to use a combination of a monofunctional acrylate monomer, a bifunctional acrylate monomer, and a polyfunctional acrylate monomer having tri- or higher-functionality. Such a combination can further improve the sensitivity, bleed, and adhesion to recording media while securing the safety. As the oligomer, epoxy acrylate oligomers and urethane acrylate oligomers are particularly preferable.

For recording on flexible recording media such as PET films and PP films, the use of a combination of a monoacrylate selected from the above-listed compounds and a polyfunctional acrylate monomer or oligomer is preferable since the combination can impart flexiblity to the film, thereby improving the film strength and the adhesion to recording media. The monoacrylate is preferably stearyl acrylate, isoamyl acrylate, isomyristyl acrylate, or isostearyl acrylate since they have high sensitivity and low shrinking property, and are also preferable from the viewpoints of preventing bleeding and odor of printed materials and of cost reduction of the irradiation apparatus.

Incidentally, methacrylates are less irritative to skin than acrylates.

Among the above compounds, the use of a mixture of 70 % by weight or less of an alkoxy acrylate and an acrylate constituting the remaining proportion is preferable since such a mixture has high sensitivity, excellent bleeding property, and excellent odor property.

### Cation-Polymerizable Compound (b-2)

The cation-polymerizable compound (b-2) may be selected from various cation-polymerizable monomers known as photo-cation-polymerizable monomers. For example, the cation-polymerizable monomer may be selected from the epoxy compounds (oxirane group-containing compounds), vinyl ether compounds, oxetane compounds (oxetane group-containing compounds), and others described in JP-A Nos. 6-9714, 2001-31892, 2001-40068, 2001-55507, 2001-310938, 2001-310937 and 2001-220526, and others, the disclosures of which are incorporated herein by reference.

The oxirane group-containing compounds may be selected from compounds containing at least one oxirane group (oxiranyl group) having an oxirane ring, and may be selected from the compounds commonly used as epoxy resins. The form of the oxirane group-containing compound may be a monomer, an oligomer, or a polymer.

Examples of the oxirane group-containing compounds include conventionally known aromatic epoxy resins, alicyclic epoxy resins, and aliphatic epoxy resins. These epoxy resins each may be in the form of a monomer, an oligomer, or a polymer.

An example of the aromatic epoxides is a di-or poly-glycidylethers prepared by the reaction of epichlorohydrin with a polyvalent phenol having at least one aromatic ring or an alkylene oxide adduct of the polyvalent phenol. Examples thereof include di- or poly-glycidylethers of bisphenol A or alkylene oxide adducts thereof; di- or poly-glycidylethers of hydrogenated bisphenol A or alkylene oxide adducts thereof; and novolak epoxy resins. The alkylene oxide may be ethylene oxide, propylene oxide, or the like.

The alicyclic epoxides may be selected from compounds containing cyclohexene oxide or cyclopentene oxide obtained by epoxidizing a compound having at least one cycloalkene ring such as a cyclohexene or cyclopentene ring with a suitable oxidizing agent such as hydrogen peroxide or a peracid. For example, 3,4-epoxy cyclohexylmethyl-3,4-epoxy cyclohexyl carboxylate can be cited.

The aliphatic epoxides may be selected from di- or poly-glycidylethers of aliphatic polyvalent alcohols or alkylene oxide adducts thereof. Specific examples thereof include: diglycidylethers of alkylene glycols such as diglycidylether of ethylene glycol, diglycidylethers of propylene glycol, and diglycidylethers of 1,6-hexanediol; polyglycidylethers of polyhydric alcohol such di- or tri-glycidylethers of glycerol or alkylene oxide adducts thereof; diglycidylethers of polyalkylene glycol such as diglycidylethers of polyethylene glycol or alkylene oxide adducts thereof; and diglycidylethers of polypropylene glycol or alkylene oxide adducts thereof. The alkylene oxide may be ethylene oxide, propylene oxide, or the like.

Further examples of the oxirane group-containing compounds include monoglycidyl ethers of aliphatic higher alcohols, which are monomers containing an oxirane ring, and monoglycidyl ethers of phenol, cresol, or alkylene oxide adducts thereof.

Only one oxirane group-containing compound may be used, or two or more oxirane group-containing compounds may be used in combination.

Preferable examples (exemplary compounds (i) to (viii)) of the oxirane group-containing compounds are shown below. However, the invention is not limited thereto.

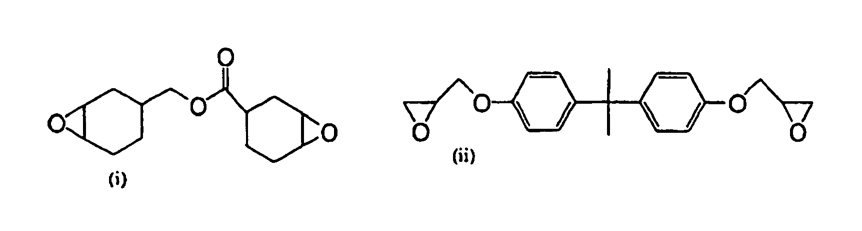

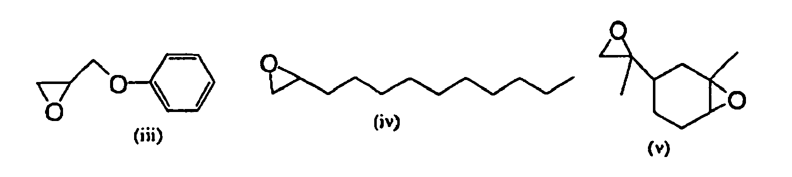

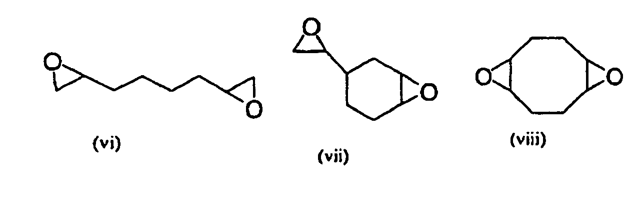

Exemplary compounds (i) and (v) are preferable.

Examples of the vinyl ether compounds include di- or tri-vinyl ether compounds such as ethylene glycol divinylether, diethylene glycol divinylether, triethylene glycol divinylether, propylene glycol divinylether, dipropylene glycol divinylether, butanediol divinylether, hexanediol divinylether, cyclohexanedimethanol divinylether, and trimethylolpropane trivinylether; and monovinyl ether compounds such as ethylvinylether, N-butylvinylether, isobutylvinylether, octadecylvinylether, cyclohexylvinylether, hydroxybutylvinylether, 2-ethylhexylvinylether, cyclohexanedimethanol monovinylether, n-propylvinylether, isopropylvinylether, isopropenylether-o-propylene carbonate, dodecylvinylether, diethylene glycol monovinylether, and octadecylvinylether.

Hereinafter, monofunctional vinyl ethers and multifunctional vinyl ethers are described in more detail. Examples of monofunctional vinyl ethers include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ethers, chloroethyl vinyl ether, chlorobutyl vinyl ether, chloroethoxyethyl vinyl ether, phenylethyl vinyl ether, and phenoxypolyethylene glycol vinyl ether.

Examples of multifunctional vinyl ethers include: divinyl ethers such as ethylene glycol divinyl ether, diethylene glycol divinyl ether, polyethylene glycol divinyl ether, propylene glycol divinyl ether, butylene glycol divinyl ether, hexanediol divinyl ether, bisphenol A alkyleneoxide divinyl ethers, and bisphenol F alkyleneoxide divinyl ethers; and multifunctional vinyl ethers such as trimethylolethane trivinyl ether, trimethylolpropane trivinyl ether, ditrimethylolpropane tetravinyl ether, glycerol trivinyl ether, pentaerythritol tetravinyl ether, dipentaerythritol pentavinyl ether, dipentaerythritol hexavinyl ether, ethyleneoxide-added trimethylolpropane trivinyl ethers, propyleneoxide-added trimethylolpropane trivinyl ethers, ethyleneoxide-added ditrimethylolpropane tetravinyl ethers, propyleneoxide-added ditrimethylolpropane tetravinyl ethers, ethyleneoxide-added pentaerythritol tetravinyl ethers, propyleneoxide-added pentaerythritol tetravinyl ethers, ethyleneoxide-added dipentaerythritol hexavinyl ethers, and propyleneoxide-added dipentaerythritol hexavinyl ethers.

The vinyl ether compound is preferably a di- or tri-vinyl ether compound, particularly preferably a divinyl ether compound, from the viewpoints of curing efficiency, adhesiveness to recording medium, surface hardness of formed image, and the like.

The oxetane group-containing compound for use in the invention is a compound having an oxetane group (oxetanyl group), and may be selected from known oxetane compounds, such as those described in JP-A Nos. 2001-220526, 2001-310937 and 2003-341217, the disclosures of which are incorporated herein by reference.

The compound having an oxetane ring usable in the ink composition according to the invention is preferably a compound having one to four oxcetane rings in its structure. Use of such a compound makes it easier to control the viscosity of ink composition in the range that is favorable in view of handling property, and also enables strong adhesion of the cured ink to the recording medium.

Examples of the compounds having one or two oxetane groups in its molecule include the compounds represented by the following formulae (1) to (3).

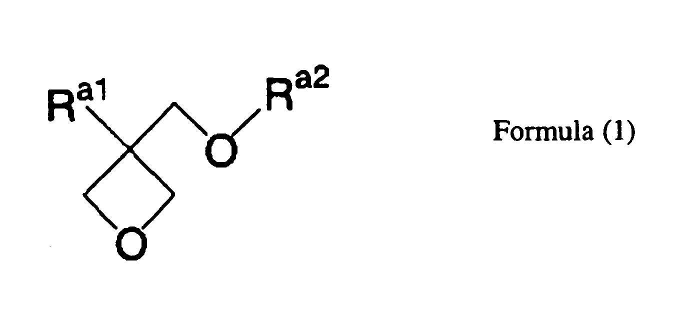

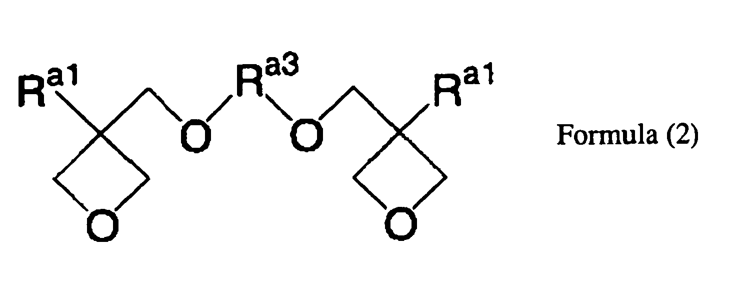

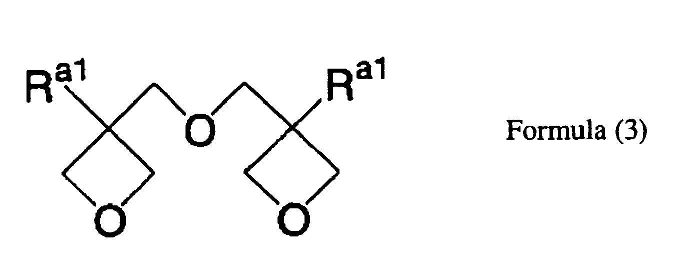

In formulae (1) to (3), R^{a1} represents a hydrogen atom, an alkyl group having 1 to 6 carbons, a fluoroalkyl group having 1 to 6 carbons, an allyl group, an aryl group, a furyl group, or a thienyl group. When there are two R^{a1}s in the molecule, they may be the same as or different from each other.

The alkyl group may be, for example, a methyl, ethyl, propyl, or butyl group. The fluoroalkyl group is preferably a group obtained by substituting one or more of the hydrogen atoms on any of the above alkyl groups with fluorine atoms.

In formula (1), R^{a2} represents a hydrogen atom, an alkyl group having 1 to 6 carbons, an alkenyl group having 2 to 6 carbons, a group having an aromatic ring, an alkylcarbonyl group having 2 to 6 carbons, an alkoxycarbonyl group having 2 to 6 carbons, or an N-alkylcarbamoyl group having 2 to 6 carbons.

Examples of the alkyl group include methyl, ethyl, propyl, and butyl groups. Examples of the alkenyl group include 1-propenyl, 2-propenyl, 2-methyl-1-propenyl, 2-methyl-2-propenyl, 1-butenyl, 2-butenyl, and 3-butenyl groups. Examples of the groups having an aromatic ring include phenyl, benzyl, fluorobenzyl, methoxybenzyl, and phenoxyethyl groups.

Examples of the alkylcarbonyl group include ethylcarbonyl, propylcarbonyl, and butylcarbonyl groups. Examples of the alkoxycarbonyl group include ethoxycarbonyl, propoxycarbonyl, and butoxycarbonyl groups. Examples of the N-alkylcarbamoyl group include ethylcarbamoyl, propylcarbamoyl, butylcarbamoyl, and pentylcarbamoyl groups. R^{a2} may have a substituent, and the substituent may be an alkyl group having 1 to 6 carbon atoms, or a fluorine atom.

In formula (2), R^{a3} represents a linear or branched alkylene group, a linear or branched poly(alkyleneoxy) group, a linear or branched unsaturated hydrocarbon group, a carbonyl group, an alkylene group containing a carbonyl group, an alkylene group containing a carboxyl group, an alkylene group containing a carbamoyl group, or any of the groups shown below.

Examples of the alkylene group include ethylene, propylene, and butylene group. Examples of the poly(alkyleneoxy) group include poly(ethyleneoxy) and poly(propyleneoxy) groups.

Examples of the unsaturated hydrocarbon group include propenylene, methylpropenylene, and butenylene groups.

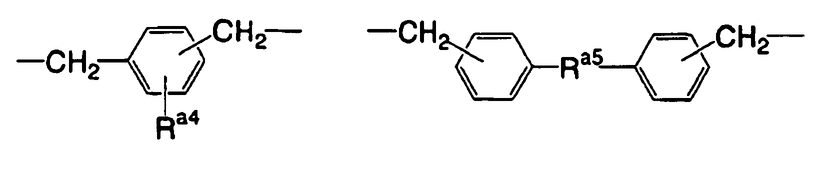

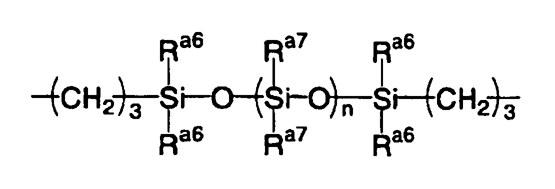

In the above polyvalent groups, R^{a4} represents a hydrogen atom, an alkyl group having 1 to 4 carbons, an alkoxy group having 1 to 4 carbons, a halogen atom, a nitro group, a cyano group, a mercapto group, a lower alkylcarboxyl group, a carboxyl group, or a carbamoyl group.

R^{a5} represents an oxygen or sulfur atom, a methylene group, NH, SO, SO₂, C(CF₃)₂, or C(CH₃)₂.

R^{a6} represents an alkyl group having 1 to 4 carbons or an aryl group; and n is an integer of 0 to 2,000.

R^{a7} represents an alkyl group having 1 to 4 carbons, an aryl group, or a monovalent group having the following structure.

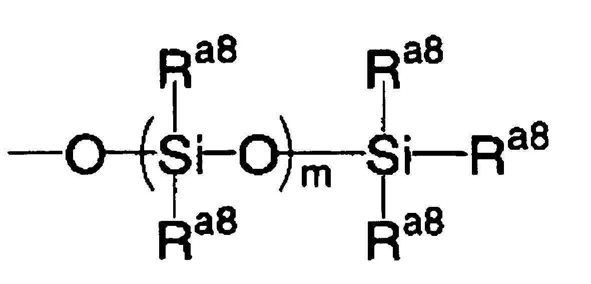

In the above monovalent group, R^{a8} represents an alkyl group having 1 to 4 carbons or an aryl group; and m represents an integer of 0 to 100.

Examples of the compounds represented by formula (1) include 3-ethyl-3-hydroxymethyloxetane (OXT-101: manufactured by Toagosei Co., Ltd.), 3-ethyl-3-(2-ethylhexyloxymethyl)oxetane (OXT-212: manufactured by Toagosei Co., Ltd.), and 3-ethyl-3-phenoxymethyloxetane (OXT-211: manufactured by Toagosei Co., Ltd.). Examples of the compounds represented by formula (2) include 1,4-bis[(3-ethyl-3-oxetanylmethoxy)methyl]benzene (OXT-121: manufactured by Toagosei Co., Ltd.). Examples of the compounds represented by formula (3) include bis(3-ethyl-3-oxetanylmethyl)ether (OXT-22 1 : manufactured by Toagosei Co., Ltd.).

Examples of the compound having three to four oxetane groups include the compounds represented by the following formula (4).

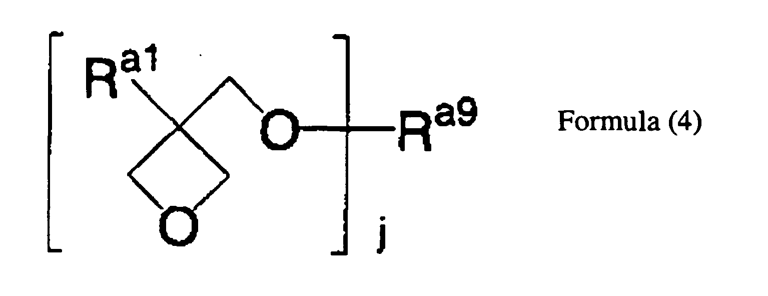

In formula (4), the definition of R^{a1} is the same as in formula (1) above. R^{a9} is a polyvalent connecting group, and examples thereof include branched alkylene groups having 1 to 12 carbons such as the groups represented by the following formulae A to C, branched poly(alkyleneoxy) groups such as the groups represented by the following formula D; and branched polysiloxy groups such as the group represented by the following formula E.. In formula (4), j is 3 or 4.

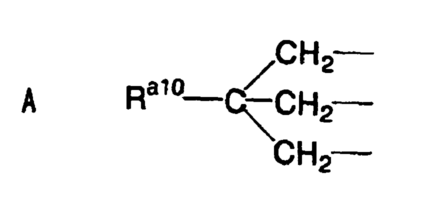

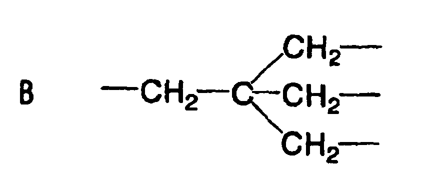

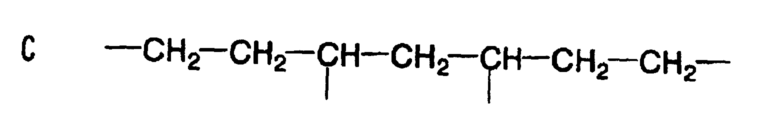

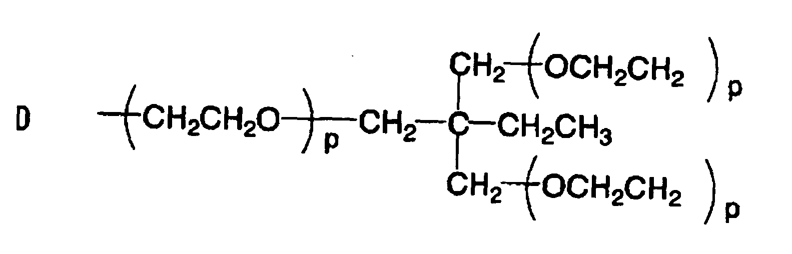

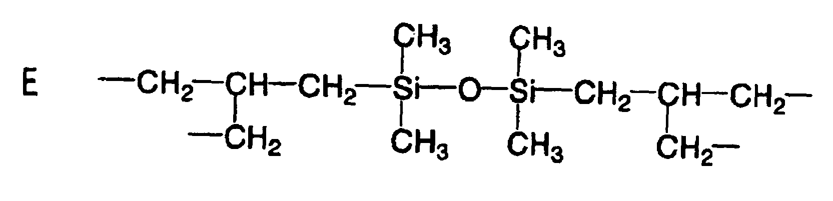

In formula A above, R^{a10} represents a methyl, ethyl, or propyl group. In formula D, p is an integer of 1 to 10.

Other examples of oxetane compounds preferable in the invention include the compounds each having an oxetane ring on a side chain thereof represented by the following formula (5).

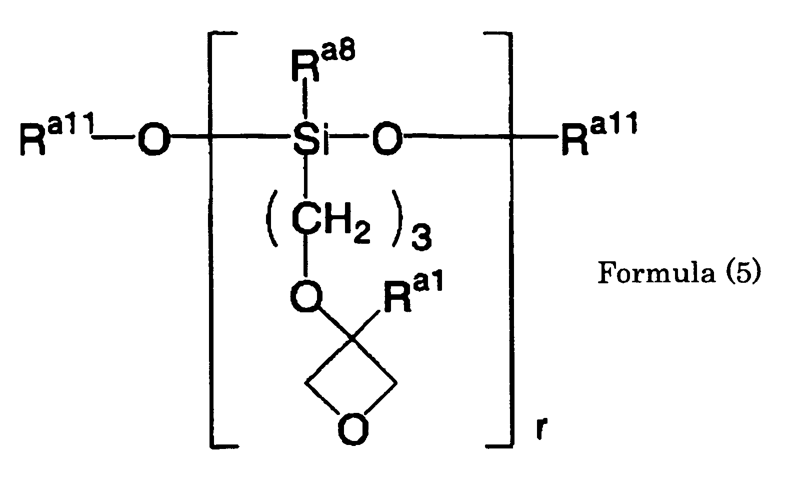

In formula (5), the definition of R^{a8} is the same as in the formula above. R^{a11} represents an alkyl group having 1 to 4 carbons such as a methyl, ethyl, propyl or butyl group or a trialkylsilyl group; and r is 1 to 4.

Such oxetane group-containing compounds are described in detail in JP-A No. 2003-341217, paragraph No. [0021] to [0084] (the disclosure of which is incorporated herein by reference), and the compounds described therein can be preferably used in the invention.

The oxetane compounds described in JP-A No. 2004-91556 are also usable in the invention. The compounds are described in detail in paragraph numbers [0022] to [0058] thereof.

Among the oxetane group-containing compounds for use in the invention, it is preferable to use a compound having one oxetane group from the viewpoints of the viscosity and tackiness of the ink composition.

Preferable examples (exemplary compounds 1 to 37 and (a) to (f)) of the oxetane group-containing compounds are shown below. However, the invention is not limited thereto.

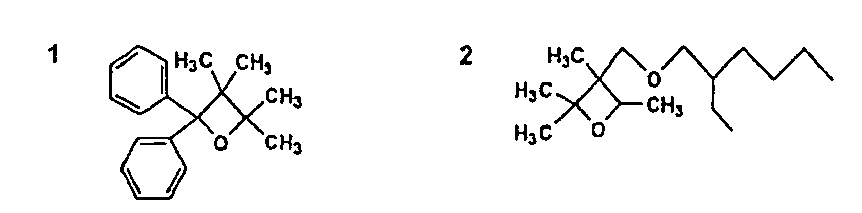

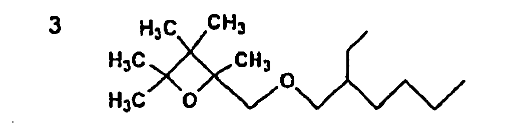

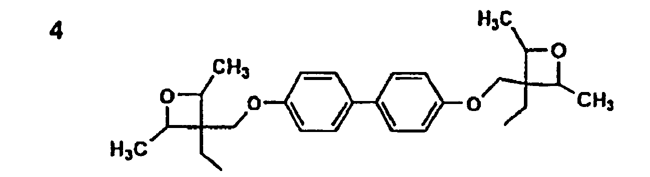

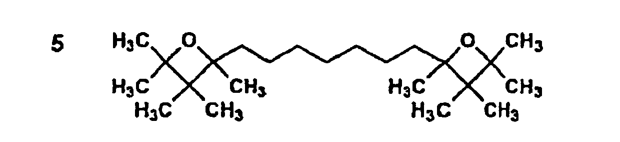

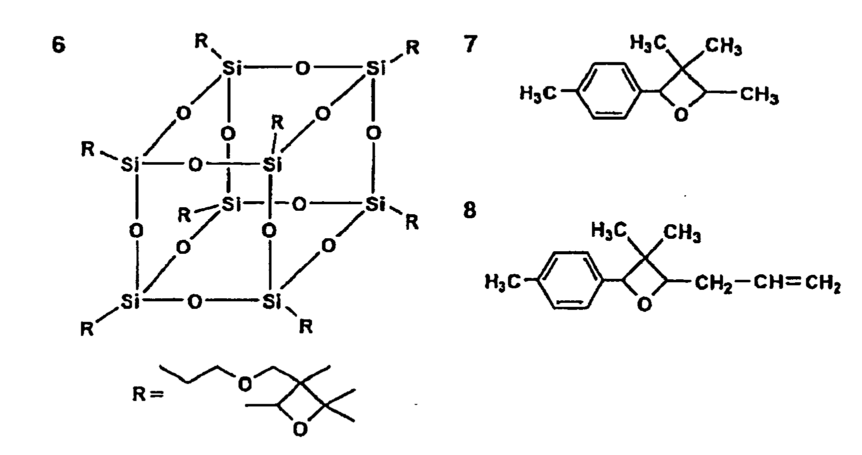

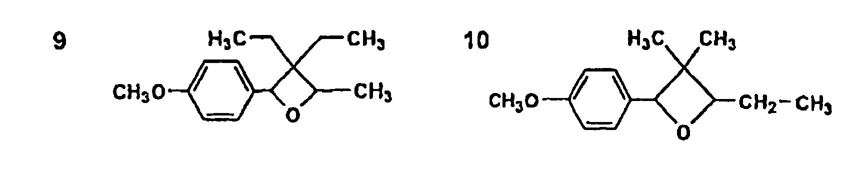

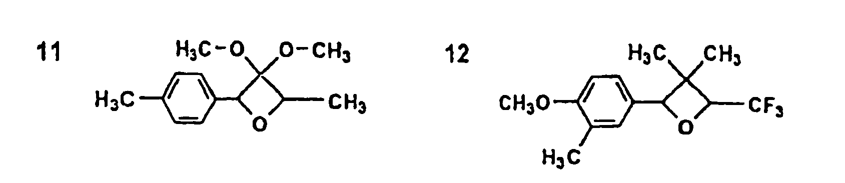

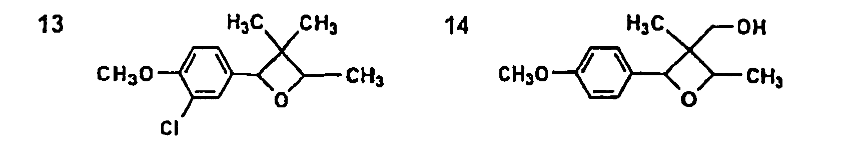

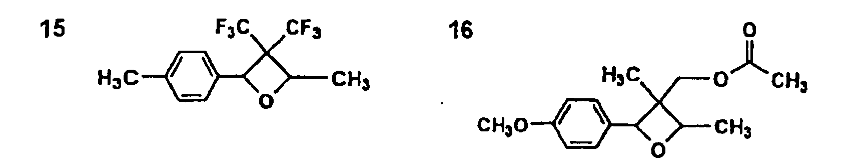

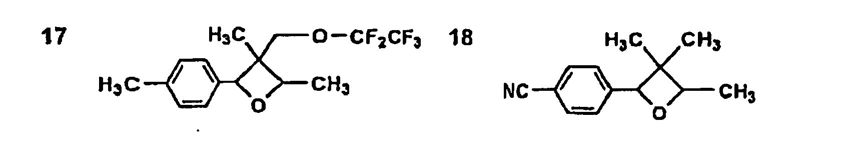

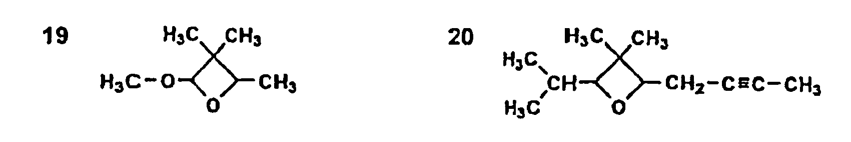

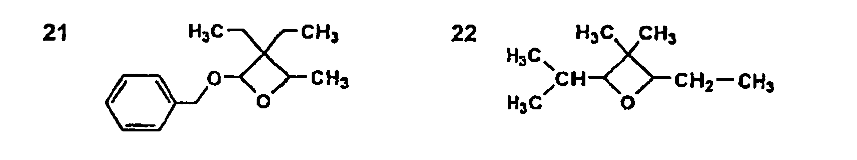

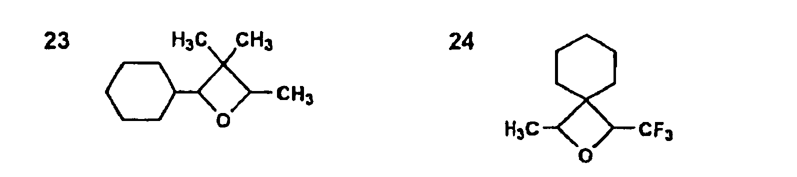

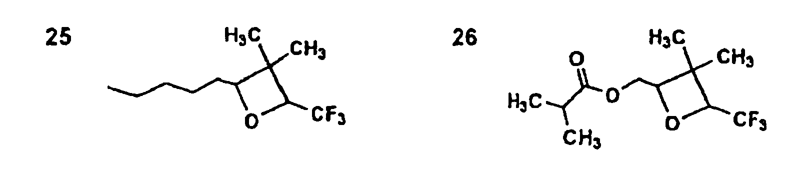

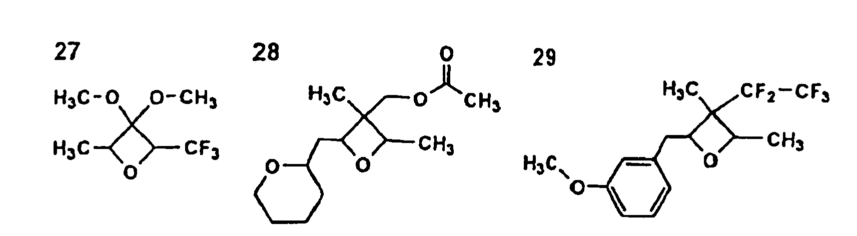

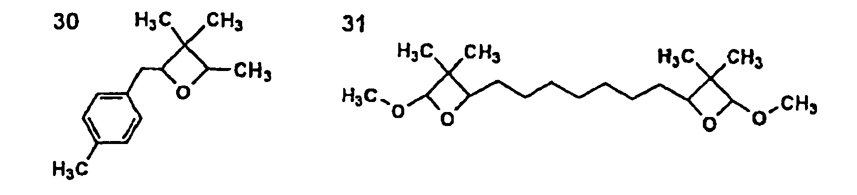

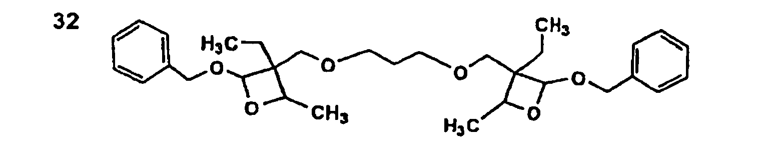

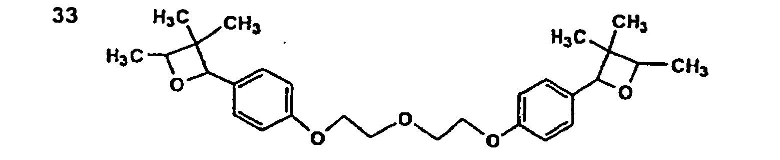

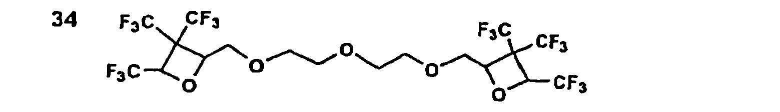

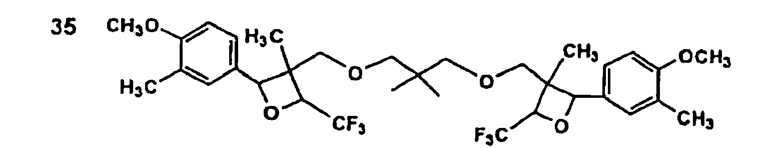

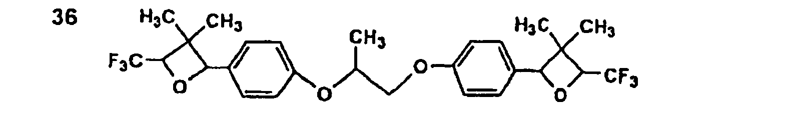

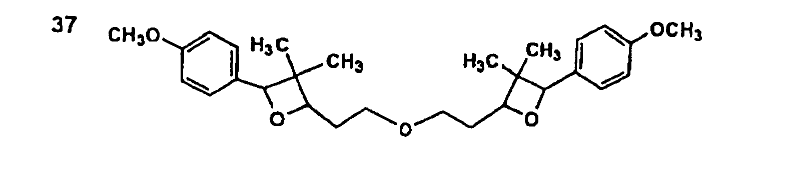

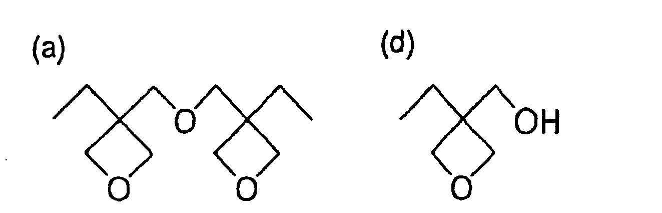

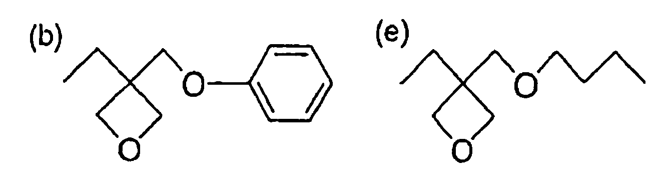

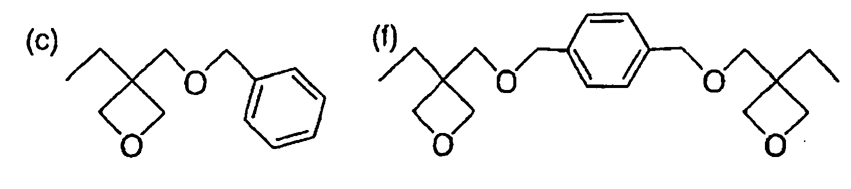

Among the compounds having oxetane rings, exemplary compounds (a), (b), (d), and (f) are preferable.

The ink composition according to the invention may contain only one cation-polymerizable compound or two or more cation-polymerizable compounds. It is preferable to use an oxetane group-containing compound and an oxirane group-containing compound in view of reduction of ink curing rate and ink viscosity.

In a preferable embodiment, the ink composition according to the invention contains, as a cation-polymerizable compound, at least one oxetane group-containing compound and/or at least one oxirane group-containing compound. In a more preferable embodiment, the ink composition contains at least one oxetane group-containing compound and at least one oxirane group-containing compound. These compounds polymerize to cure when irradiated with active energy rays owing to the function of the polymerization initiator; since the curing reaction proceeds quickly, the compounds are particularly effective for the prevention of discoloration of a dye that is easily discolored by light at the time of the curing (polymerization) or after curing. The use of the compounds enables formation of images with superior color (hue), color density, clarity, and light resistance comparable to that of a pigment.

In the present invention, it is preferable to use a combination of an oxetane group-containing compound and an oxirane group-containing compound. The combination is particularly preferably the combination of exemplary compound (a) and exemplary compound (i), or the combination of exemplary compound (b) and exemplary compound (v), in view of effective improvement of light resistance.

When an oxetane group-containing compound (p) and an oxirane group-containing compound (q) are used together, the content ratio (p/q) by weight is preferably in the range of 50/50 to 95/5, more preferably in the range of 67/33 to 90/10, from the viewpoint of effective improvement of the light fastness of the image.

The content of cation-polymerizable compound (b) in the entire ink composition according to the invention is preferably in the range of 10 to 95 % by weight, more preferably 30 to 90 % by weight, and still more preferably 50 to 85 % by weight.

### [Sensitizing Dye (c)]

The ink composition according to the invention contains a sensitizing dye (c). The sensitizing dye absorbs a specific active radiation to take an electronically excited state. The sensitizing dye in the electronically excited state contacts the polymerization initiator to cause electron transfer, energy transfer, heat generation, or the like. As a result, the polymerization initiator undergoes a chemical change to be decomposed, thereby generating radical, acid, or base.

Examples of the sensitizing dye (c) according to the invention include the dyes belonging to the compound groups listed below and having an absorption wavelength in the wavelength range of 350 to 450 nm.

Typical examples thereof include polynuclear aromatic compounds (e.g., phenanthrene, anthracene, pyrene, perylene, triphenylene, and 9.10-dialkoxy anthracene), xanthenes (e.g., fluorescein, eosin, erythrocin, rhodamine B, and rose bengal), thioxanthones, cyanines (e.g., thiacarbocyanine and oxacarbocyanine), merocyanines (e.g., merocyanine and carbomerocyanine), thiazines (e.g., thionine, methylene blue, and toluidine blue), acridines (e.g., acridine orange, chloroflavine, and acriflavine), anthraquinones (e.g., anthraquinone), squaliums (e.g., squalium), coumarins (e.g., 7-diethylamino-4-methylcoumarin), phenothiazines, styrylbenzenes, distyrylbenzenes, and carbazoles.

Among them, the specific polymerization initiator according to the invention is preferably used in combination with a polynuclear aromatic compound (e.g., phenanthrene, anthracene, pyrene, perylene, triphenylene, 9,10-dialkoxyanthracenes), a thioxanthone, a distyrylbenzene, or a styrylbenzene, from the viewpoint of initiation efficiency, and most preferably used in combination with a distyrylbenzene or a styrylbenzene.

Preferable specific examples of sensitizing dyes usable in the invention are shown below, without the intention to limit the invention.

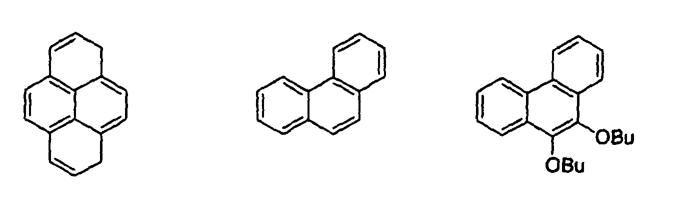

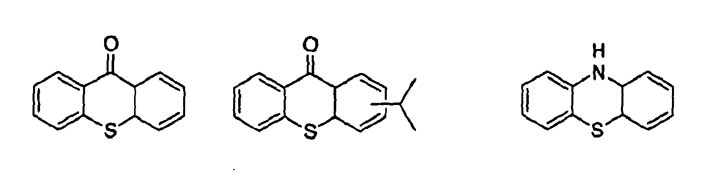

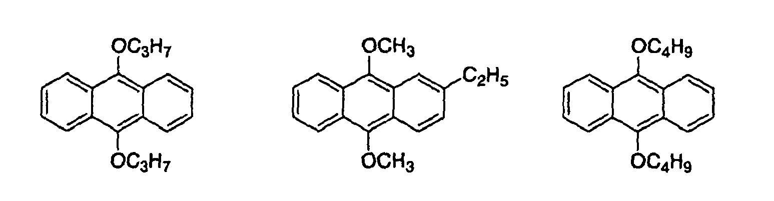

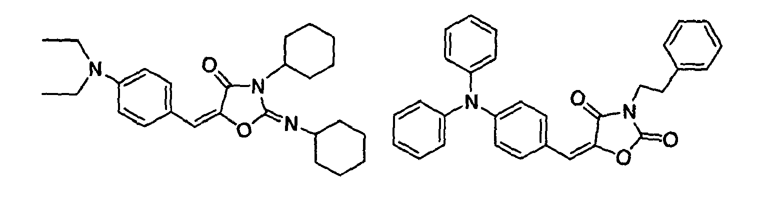

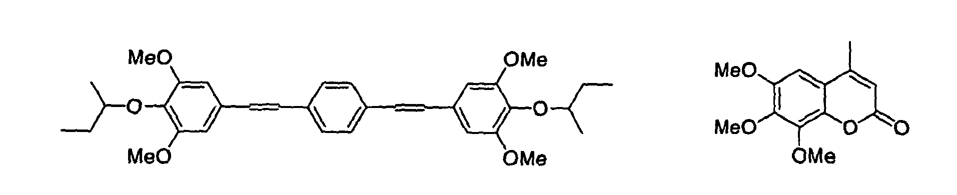

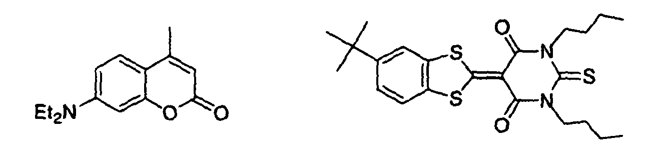

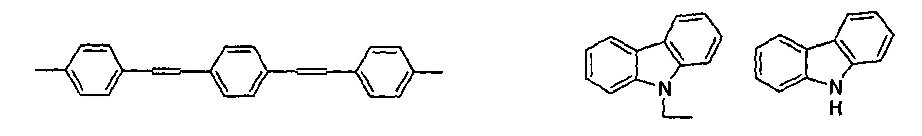

Only one sensitizing dye (c) may be used, or two or more sensitizing dyes (c) may be used in combination.

### [Colorant (d)]

The ink composition according to the invention contains (d) a colorant.

The addition of the colorant (d) to the ink composition according to the invention enables the formation of a visible image. For example, when forming an image region on a planographic printing plate, the colorant makes it easy to check the obtained planographic printing plate.

The colorant to be used is not particularly limited, and may be selected from known various colorants (pigments and dyes) according to the applications. For example, use of a pigment is preferable for the production of an image superior in weather fastness. Both water-soluble and oil-soluble dyes are usable, but oil-soluble dyes are more preferable.

The colorant used in the ink composition according to the invention preferably does not function as a polymerization inhibitor in the polymerization reaction, which is the curing reaction, so that the curing reaction with active rays is not inhibited.

### <Pigment>

The pigment for use in the invention is not particularly limited, and examples thereof include organic or inorganic pigments having the following Color Index numbers:

Red or magenta pigments such as Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36; blue or cyan pigments such as Pigment Blue 1, 15, 15:1, 15:2, 15:3, 15:4, 15:6, 16, 17-1, 22, 27, 28, 29, 36, and 60; green pigments such as Pigment Green 7, 26, 36, and 50; yellow pigments such as Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193; black pigments such as Pigment Black 7, 28, and 26; white pigments such as Pigment White 6, 18, and 21; and titanium oxide.

### <Oil-Soluble Dye>

Hereinafter, the oil-soluble dye for use in the invention will be described. The oil-soluble dye for use in the invention is a dye that is substantially insoluble in water.

Specifically, the oil-soluble dye has a solubility in water at 25°C (the weight of the dye soluble in 100 g of water) of 1 g or less, preferably 0.5 g or less, and more preferably 0.1 g or less. Thus, the oil-soluble dye means a so-called water-insoluble pigment or an oil-soluble colorant, and among them, an oil-soluble colorant is preferable.

In the invention, only one oil-soluble dye may be used, or a mixture of two or more oil-soluble dyes may be used. The ink composition may additionally contain other colorants such as water-soluble dyes, disperse dyes, and pigments, as necessary, in so long as the addition does not impair the advantageous effects of the invention.

When the oil-soluble dye used in the present invention is a yellow dye, the yellow dye is not particularly limited. Examples thereof include: aryl- or heteryl- azo dyes having a coupling component such as a phenol, a naphthol, an aniline, a pyrazolone, a pyridone, or an open-chain active methylene compound; azomethine dyes having a coupling component such as an open-chain active methylene compound; methine dyes such as benzylidene dyes and monomethine oxonol dyes; quinone dyes such as naphthoquinone dyes and anthraquinone dyes; as well as quinophtharone dyes, nitro-nitroso dyes, acridine dyes, and acridinone dyes.

When the oil-soluble dye used in the present invention is a magenta dye, the magenta dye is not particularly limited. Examples thereof include: aryl- or heteryl- azo dyes having a coupling component such as a phenol, a naphthol, or an aniline; azomethine dyes having a coupling component such as a pyrazolone or a pyrazolotriazole; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinones, anthraquinones, and anthrapyridones; and fused polycyclic dyes such as dioxazine dyes.

When the oil-soluble dye used in the present invention is a cyan dye, the cyan dye is not particularly limited. Examples thereof include azomethine dyes such as indoaniline dyes, indophenol dyes, and dyes having a pyrrolotriazole as the coupling component; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl- or heteryl- azo dyes having a coupling component such as a phenol, a naphthol, or an aniline; and indigo thioindigo dyes.

The dye may develop a color (yellow, magenta, or cyan) only after the dissociation of a part of its chromophore. At dissociation, the counter cation may be an inorganic cation such as an alkali metal or ammonium, or an organic cation such as a pyridinium or a quaternary ammonium salt; or a polymeric cation having, as a partial structure, a cation selected from those described above.

Preferable typical examples thereof include, but are not limited to: C.I. Solvent Black 3, 7, 27, 29 and 34; C.I. Solvent Yellow 14, 16, 19, 29, 30, 56, 82, 93 and 162; C.I. Solvent Red 1, 3, 8, 18, 24, 27, 43, 49, 51, 72, 73, 109, 122, 132 and 218; C.I. Solvent Violet 3; C.I. Solvent Blue 2, 11, 25, 35, 38, 67 and 70; C.I. Solvent Green 3 and 7; and C.I. Solvent Orange 2. Particularly preferable among them are NUBIAN BLACK PC-0850, OIL BLACK HBB, OIL YELLOW 129, OIL YELLOW 105, OIL PINK 112, OIL RED 5B, OIL SCARLET 308, VALI FAST BLUE 2606, and OIL BLUE BOS (manufactured by Orient Chemical Industries); AIZEN SPILON BLUE GNH (manufactured by Hodogaya Chemical Co., Ltd.); NEOPEN YELLOW 075, NEOPEN MAZENTA SE1378, NEOPEN BLUE 808, NEOPEN BLUE FF4012, and NEOPEN CYAN FF4238 (manufactured by BASF).

In the invention, a disperse dye may also be used additionally in such an amount that the disperse dye is soluble in the water-immiscible organic solvent. Preferable typical examples thereof include C.I. Disperse Yellow 5, 42, 54, 64, 79, 82, 83, 93, 99, 100, 119, 122, 124, 126, 160, 184:1, 186, 198, 199, 201, 204, 224 and 237; C.I. Disperse Orange 13, 29, 31:1, 33, 49, 54, 55, 66, 73, 118, 119 and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356 and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365 and 368; and C.I. Disperse Green 6:1 and 9.

Examples of particularly preferable oil-soluble dyes include the azo or azomethine dyes represented by the following formulae (1) and (2). The dyes represented by the following formula (2) are known as the dyes generated from a coupler and a main developer by oxidation in photographic materials.

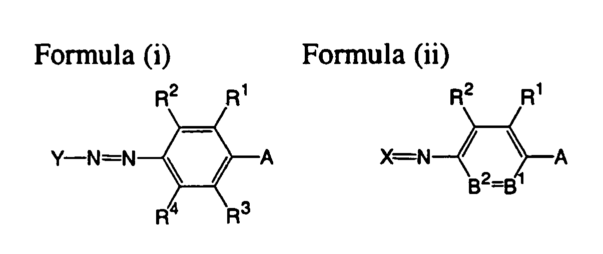

In formulae (i) and (ii), R¹, R², R³ and R⁴ each independently represent a hydrogen atom, a halogen atom, an aliphatic group, an aromatic group, a heterocyclic group, a cyano group, a hydroxy group, a nitro group, an amino group, an alkylamino group, an alkoxy group, an aryloxy group, an amido group, an arylamino group, a ureido group, a sulfamoylamino group, an alkylthio group, an arylthio group, an alkoxycarbonylamino group, a sulfonamido group, a carbamoyl group, a sulfamoyl group, a sulfonyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imido group, a heterocyclic thio group, a sulfinyl group, a phosphoryl group, an acyl group, a carboxyl or a sulfo group.

In formulae (i) and (ii), R² preferably represents a hydrogen atom, a halogen atom, an aliphatic group, an alkoxy group, an aryloxy group, an amido group, a ureido group, a sulfamoylamino group, an alkoxycarbonylamino, or a sulfonamido group.

In the invention, the term "aliphatic group" means an alkyl group, a substituted alkyl group, an alkenyl group, a substituted alkenyl group, an alkynyl group, a substituted alkynyl group, an aralkyl group, or a substituted aralkyl group. The aliphatic group may be branched, and may form a ring. The number of the carbon atoms in the aliphatic group is preferably from 1 to 20, more preferably from 1 to 18. The aryl portion in the aralkyl group or the substituted aralkyl group is preferably phenyl or naphthyl, more preferably phenyl. Examples of the substituents on the alkyl portion of the substituted alkyl, substituted alkenyl, substituted alkynyl, or substituted aralkyl group include the examples of the substituents represented by R¹ to R⁴. Examples of the substituent on the aryl portion of the substituted aralkyl group include the examples of the substituents on the following substituted aryl groups.

In the invention, the term "aromatic group" means an aryl group or a substituted aryl group. The aryl group is preferably phenyl or naphthyl, particularly preferably phenyl. The definition of the aryl portion of the substituted aryl group is the same as that of the aryl group above. Examples of the substituents on the substituted aryl group include the examples of the substituents represented by R¹ to R⁴.

In formulae (i) and (ii) A represents -NR⁵ R⁶ or a hydroxy group; and R⁵ and R⁶ each independently represent a hydrogen atom or an aliphatic, aromatic or heterocyclic group. A preferably represents -NR⁵ R⁶. R⁵ and R⁶ may be bonded to each other to form a ring. R⁵ and R⁶ are each more preferably a hydrogen atom, an alkyl group, a substituted alkyl group, an aryl group, or a substituted aryl group, and most preferably a hydrogen atom, an alkyl group having 1 to 18 carbon atoms, or a substituted alkyl group having 1 to 18 carbon atoms.

In formulae (i) and (ii), B¹ represents =C(R³)- or =N-; and B² represents -C(R⁴)= or -N=. In a preferable embodiment, at least one of B¹ and B² is not -N= group. In a more preferable embodiment, B¹ is =C(R³)-and B² is -C(R⁴)=. R¹ and R⁵, R³ and R⁶, or R¹ and R² may be bonded to each other to form an aromatic or heterocyclic ring.

In formula (i), Y represents an unsaturated heterocyclic group. Y is preferably a five-or six-membered unsaturated heterocyclic ring. An aliphatic ring, an aromatic ring, or another heterocyclic ring may be fused to the heterocyclic ring. Examples of the hetero atom in the heterocyclic ring include N, O, and S.

Favorable examples of the unsaturated heterocyclic ring include pyrazole, imidazole, thiazole, isothiazole, thiadiazole, thiophene, benzothiazole, benzoxazole, benzisothiazole, pyrimidine, pyridine, and quinoline rings. In addition, the unsaturated heterocyclic group may have a substituent selected from the examples of R¹ to R⁴.

In formula (ii), X represents a coupler residue for color photography. The coupler residue is preferably selected from the followings:

Yellow couplers: the couplers described in U.S. Patent Nos. 3,933,501, 4,022,620, 4,326,024, 4,401,752, and 4,248,961, JP-B No. 58-10739, British Patent Nos. 1,425,020 and 1,476,760, and U.S. Patent Nos. 3,973,968, 4,314,023, and 4,511,649; the couplers represented by formulae (I) and (II) described in EP Nos. 249,473A and 502,424A; the couplers represented by formulae (1) and (2) described in EP No. 513,496A (in particular, Y-28 on p.18); the couplers represented by formula (I) described in Claim 1 of EP No. 568,037A; the couplers represented by formula (I) described in the column 1, lines 45 to 55 of U.S. Patent No. 5,066,576; the couplers represented by formula (I) described in paragraph [0008] of JP-A No. 4-274425; the couplers described in Claim 1 on p.40 of EP No. 498,381A1 (in particular, D-35 on p.18); the couplers represented by formula (Y) on p. 4 of EP No. 447,969A1 [in particular, Y-1 on p.17 and Y-54 on p.41], and the couplers represented by formulae (II) to (IV) described in column 7, line 36 to 58 of U.S. Patent No. 4,476,219 [in particular, II-17 and 19 in column 17 and II-24 in column 19].

Magenta couplers: the couplers described in U.S. Patent Nos. 4,310,619 and 4,351,897, EP No. 73,636, U.S. Patent Nos. 3,061,432 and 3,725,067, Research Disclosure Nos. 24220 (June, 1984) and 24230 (June, 1984), JP-A Nos. 60-33552, 60-43659, 61-72238, 60-35730, 55-118034, and 60-185951, U.S. Patent Nos. 4,500,630, 4,540,654, and 4,556,630, WO 88/04795, JP-A No. 3-39737 [L-57 (p.11, right bottom), L-68 (p.12, right bottom), and L-77 (p.13, right bottom)], EP No. 456,257 ([A-4]-63 (p.134), [A-4]-73, -75 (p.139)), EP No. 486,965 [M-4 and 6 (p.26), and M-7 (p.27)], EP No. 571,959A [M-45 (p.19)], JP-A No. 5-204106 [M-1 (p.6)], JP-A No. 4-362631, paragraph [0237] (M-22), and U.S. Patent Nos. 3,061,432 and 3,725,067.

Cyan couplers: the couplers described in U.S. Patent Nos. 4,052,212, 4,146,396, 4,228,233, and 4,296,200, EP No. 73,636, JP-A No. 4-204843 [CX-1, 3, 4, 5, 11, 12, 14, and 15 (pp.14 to 16), JP-A No. 4-43345 [C-7, 10 (p.35), 34, 35 (p.37), (1-1), (1-17) (pp.42 to 43), and JP-A No. 6-67385 [those represented by formulae (Ia) and (Ib) described in claim 1].

In addition, the couplers described in JP-A No. 62-215272 (p.91), JP-A No. 2-33144 (pp.3 and 30), EP No. 355,660A (pp.4, 5, 45, and 47) are also useful.

Among the oil-soluble dyes represented by formula (i), the dyes represented by following formula (iii) are used particularly favorably as magenta dyes.

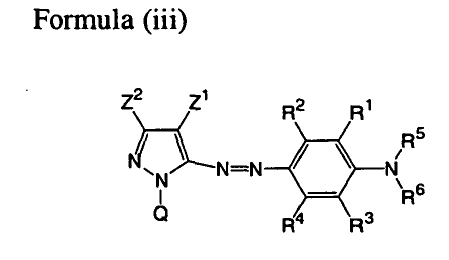

In formula (iii), Z¹ represents an electron-attracting group having a Hammett substituent constant σp of 0.20 or more. Z¹ is preferably an electron-attracting group having a σp value of 0.30 to 1.0. Preferable examples of the substituent include the electron-attracting substituents described below. Among them, acyl groups having 2 to 12 carbon atoms, alkyloxycarbonyl groups having 2 to 12 carbon atoms, a nitro group, a cyano group, alkylsulfonyl groups having 1 to 12 carbon atoms, arylsulfonyl groups having 6 to 18 carbon atoms, carbamoyl groups having 1 to 12 carbon atoms and halogenated alkyl groups having 1 to 12 carbon atoms are preferable. A cyano group, alkylsulfonyl groups having 1 to 12 carbon atoms, and arylsulfonyl groups having 6 to 18 carbon atoms are more preferable, and a cyano group is most preferable.

In formula (iii), Z² represents a hydrogen atom or an aliphatic or aromatic group. The definitions of R¹ to R⁶ are the same as those in formula (i) above.

In formula (iii), Q represents a hydrogen atom or an aliphatic, aromatic, or heterocyclic group. Among them, Q is preferably a non-metal atom group neccessary for forming a five- to eight-membered ring. Q is particularly preferably an aromatic or heterocyclic group. The five- to eight-membered ring may be substituted, and may be saturated or unsaturated. Preferable examples of the non-metal atom include nitrogen, oxygen, sulfur, and carbon atoms. Typical examples of the ring structure include benzene, cyclopentane, cyclohexane, cycloheptane, cyclooctane, cyclohexene, pyridine, pyrimidine, pyrazine, pyridazine, triazine, imidazole, benzimidazole, oxazole, benzoxazole, oxane, sulfolane and thiane rings. When the ring has a substituent, examples of the substituent include the above-described examples of the groups represented by R¹ to R⁴ in formula (i) above.

Preferable structures of the compounds represented by formula (iii) are described in JP-A No. 2001-335714.

Among the dyes represented by formula (ii), the dyes represented by following formula (iv) are used particularly favorably as magenta dyes.

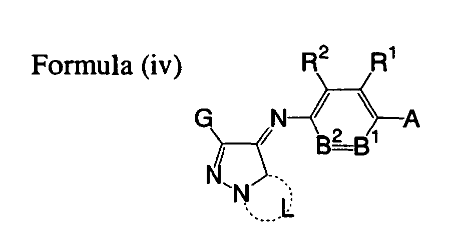

In formula (iv), G represents a hydrogen atom, an aliphatic group, an aromatic group, an heterocyclic group, a cyano group, an alkoxy group, an aryloxy group, an alkylthio group, an arylthio group, an ester group, an amino group, a carbamoyl group, a sulfonyl group, a sulfamoyl group, a ureido group, a urethane group, an acyl group, an amido group, or a sulfonamido group.

In formula (iv), the definitions and preferable ranges of R¹, R², A, B¹ and B² are the same as in formula (ii) above.

In formula (iv) above, L represents an atom group forming a five- or six-membered nitrogen-containing heterocyclic ring, which may be fused with another ring to form a fused ring and may be substituted by at least one group selected from aliphatic groups, aromatic groups, heterocyclic groups, cyano groups, alkoxy groups, aryloxy groups, alkylthio groups, arylthio groups, ester groups, amino groups, carbamoyl groups, sulfonyl groups, sulfamoyl groups, ureido groups, urethane groups, acyl groups, amido groups, and sulfonamido groups.

In the compound represented by formula (iv), A is preferably NR⁵ R⁶, and L preferably forms a five-membered nitrogen-containing heterocyclic ring, which may be an imidazole, triazole, or tetrazole ring.

Exemplary magenta dye compounds (M-0 to 6 and a-21 to 25), which are examples of the dyes represented by formulae (i) and (ii), are shown below. The exemplary compounds are shown for the purpose of detailed explanation only, and should not be construed as limiting the invention.

In the present invention, the magenta dye is preferably selected from compounds M-0, M-4, M-6, or a-21, and is more preferably selected from compounds M-4, M-6, or a-21.

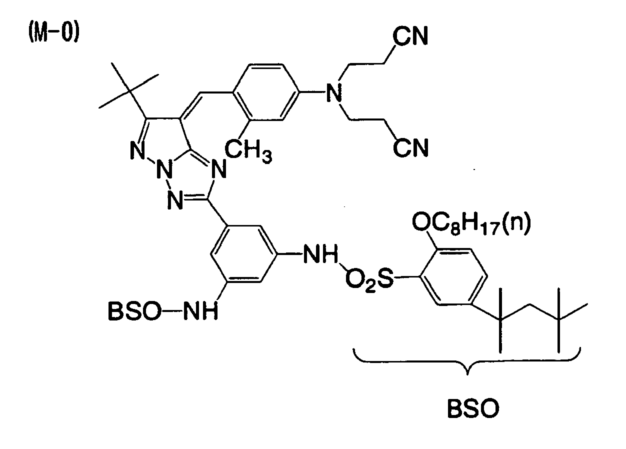

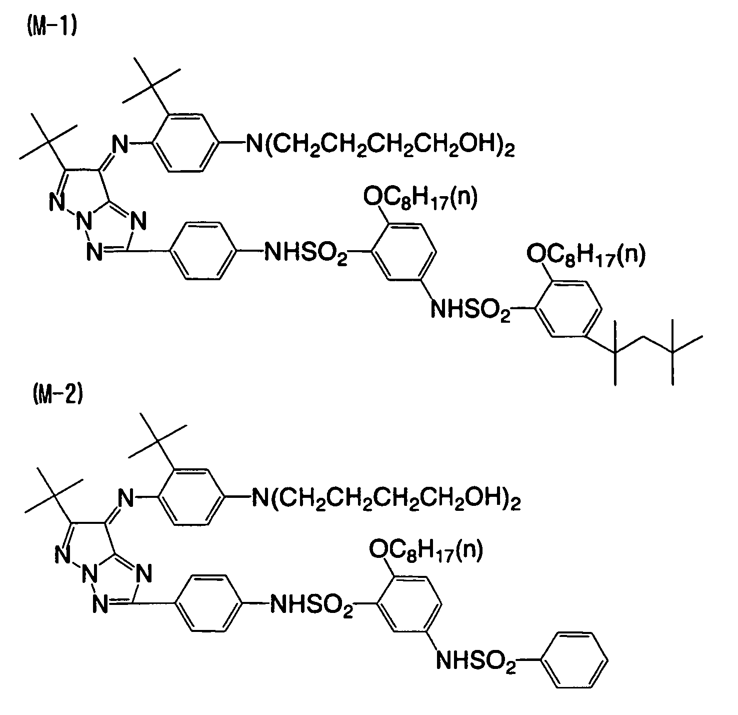

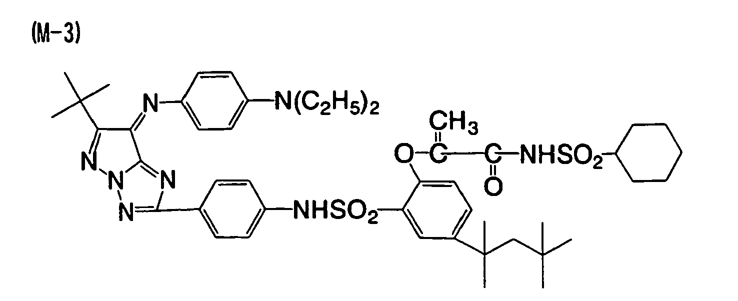

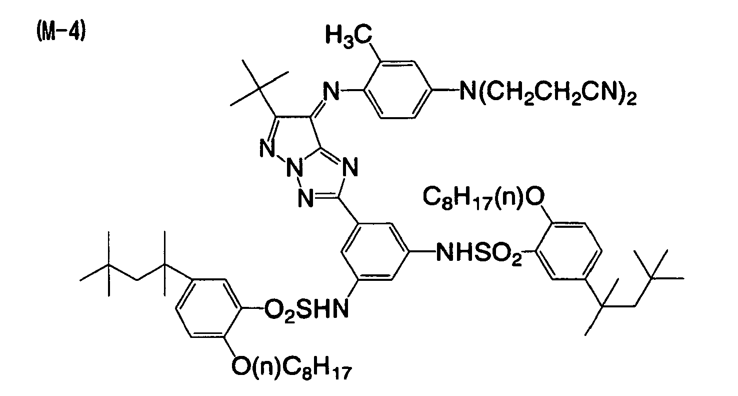

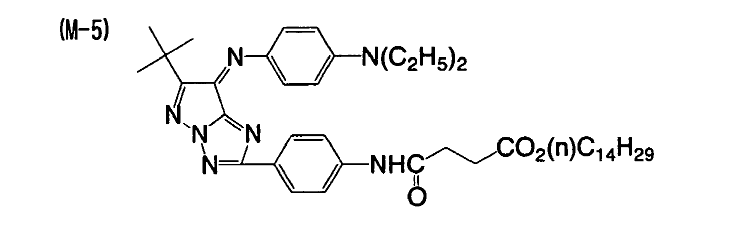

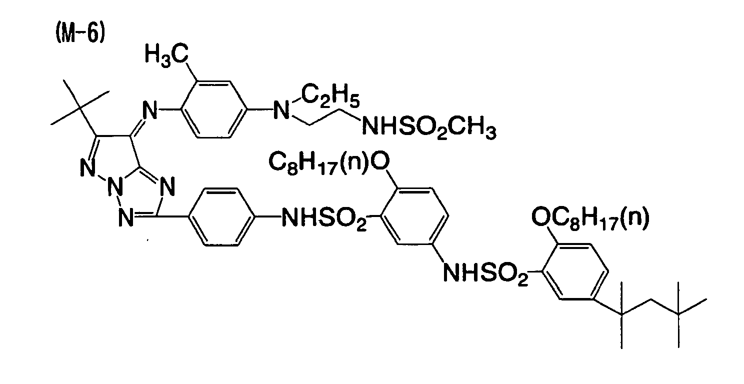

**Table 1**

| | | | | |
|---|---|---|---|---|
| 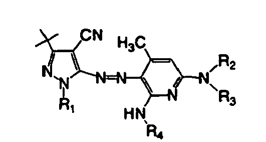 | | | | |

| Dye | R₁ | R₂ | R₃ | R₄ |
|---|---|---|---|---|
| a-21 | 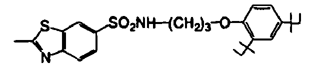 | 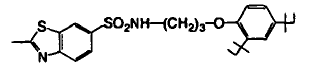 | 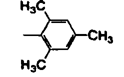 | 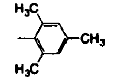 |
| a-22 | 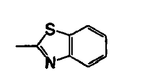 | 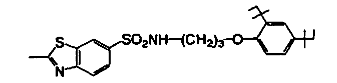 | 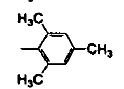 | 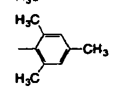 |
| a-23 | 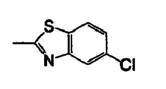 | 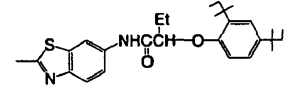 | 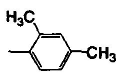 | 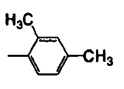 |
| a-24 | 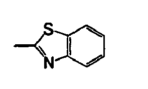 | 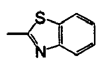 | 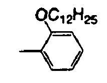 | 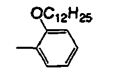 |
| a-25 | 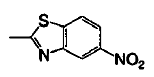 | 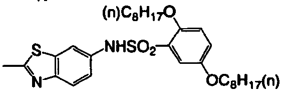 | 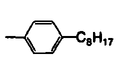 | C₈H₁₇(t) |

Other examples of colorant compounds usable in the invention include, but are not limited to, those described in JP-A Nos. 2001-240763, 2001-181549, and 2001 335714.

The compounds represented by formula (iii) can be synthesized, for example, by reference to the methods described in JP-A Nos. 2001-335714 and 55-161856.

The compounds represented by formula (iv) can be synthesized, for example, by reference to the methods described in JP-A No. 4-126772, JP-B No. 7-94180, and JP-A No. 2001 240763.

Among the dyes represented by formula (ii), the pyrrolotriazole azomethine dyes represented by the following formula (v) are particularly preferable as cyan dyes.

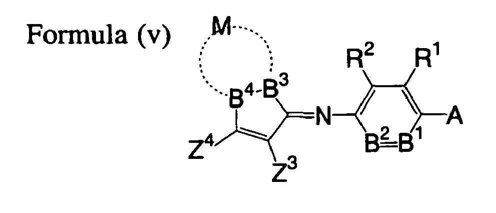

In formula (v), the definitions and preferable ranges of A, R¹, R², B¹ and B² are the same as in formula (ii) above.

In formula (v), Z³ and Z⁴ may be selected independently from each other, and their definitions are the same as the definition of G in formula (iv) above. Z³ and Z⁴ may be bonded to each other to form a ring. When Z³ is an electron-attracting group having a Hammett substituent constant σp of 0.30 or more, the cyan dye has a sharper light absorption, thus being advantageous. Z³ is more preferably an electron-attracting group having a Hammett substituent constant σp of 0.45 or more, and is most preferably an electron-attracting group having a Hammett substituent constant σp of 0.60 or more. In a more preferable embodiment, the total of the Hammett substituent constant values (σps) of Z³ and Z⁴ is 0.70 or more, the cyan dye has an excellent hue as a cyan color.

In formula (v), M is an atom group forming a 1,2,4-triazole ring fused to the five-membered ring in formula (v). One of the two atoms B³ and B⁴ at the connection with the five-membered ring is a nitrogen atom and the other is a carbon atom.

The compound represented by formula (v) above is preferably used as a cyan dye, but may be used as a magenta dye by an appropriate change of the substituents.

The Hammett's substituent constant σp will be described hereinafter. The Hammett's rule is an empirical equation proposed by L. P. Hammett in 1935 for discussing the effects of substituents on the reaction and equilibrium of benzene derivatives more quantitatively, and is recognized as an adequate index. The substituent constants determined by the Hammett's rule are substituent constants σp and σm, whose values are described in a lot of general textbooks; for example, in "Lange's Handbook of Chemistry" 12th Ed., J. A. Dean Ed., 1979 (McGraw-Hill) and "Kagaku no Ryoiki" Special Issue No. 122, pp. 96 to 103, 1979 (Nankodo). In the invention, the substituents are specified by their Hammett substituent constants σps, and described with reference to their Hammett substituent constants σps. The scope of such substituents naturally includes substituents whose Hammett substituent constants σps measured by the Hammett's rule are within the specified range but are not described in literatures, as well as the substituents whose Hammett substituent constants σps are found in literatures described above. In addition, although the compounds represented by formulae (i) to (v) include those other than benzene derivatives, the σp values are used as a scale of the electronic effect of substituents regardless of their substitution sites. In the invention, the σp values are used in this meaning.

Examples of electron-attracting groups having a Hammett substituent constant σp of 0.60 or more include a cyano group, a nitro group, alkylsulfonyl groups (e.g., methanesulfonyl), and arylsulfonyl groups (e.g., benzenesulfonyl). Examples of the electron-attracting groups having a Hammett σp of 0.45 or more include acyl groups (e.g., acetyl), alkoxycarbonyl groups (e.g., dodecyloxycarbonyl), aryloxycarbonyl groups (e.g., m-chlorophenoxycarbonyl), alkylsulfinyl groups (e.g., n-propylsulfinyl), arylsulfinyl groups (e.g., phenylsulfinyl), sulfamoyl groups (e.g., N-ethylsulfamoyl and N,N-dimethylsulfamoyl), and halogenated alkyl groups (e.g., trifluoromethyl), in addition to the groups listed above.

Examples of the electron-attracting groups having a Hammett substituent constant σp of 0.30 or more include acyloxy groups (e.g., acetoxy), carbamoyl groups (e.g., N-ethylcarbamoyl and N,N-dibutylcarbamoyl), halogenated alkoxy groups (e.g., trifluoromethyloxy), halogenated aryloxy groups (e.g., pentafluorophenyloxy), sulfonyloxy groups (e.g., methylsulfonyloxy group), halogenated alkylthio groups (e.g., difluoromethylthio), aryl groups substituted with two or more electron-attracting groups having a σp value of 0.15 or more (e.g., 2,4-dinitrophenol and pentachlorophenyl), and heterocyclic rings (e.g., 2-benzoxazolyl, 2-benzothiazolyl, and 1-phenyl-2-benzimidazolyl), in addition to the groups listed above. Typical examples of the electron-attracting groups having a σp value of 0.20 or more include the groups above and halogen atoms.

In the invention, the oil-soluble dyes represented by the following formula (A-I) are also favorable.

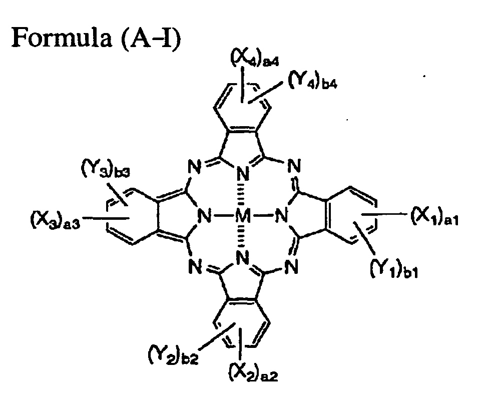

In formula (A-I), X₁, X₂, X₃ and X₄ each independently represent a group selected from SO-Z, -SO₂ Z, -SO₂NR₁R₂, -CONR₁R₂, -CO₂R₁, and a sulfo group. Z represents a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group. R₁ and R₂ each independently represent a hydrogen atom, a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group. At least one of R₁ and R₂ is not a hydrogen atom. M represents a hydrogen atom, a metal element, a metal oxide, a metal hydroxide, or a metal halide. Y₁, Y₂, Y₃ and Y₄ each independently represent a hydrogen atom or a monovalent substituent. Further, a₁ to a₄ and b₁ to b₄ represent the numbers of X₁ to X₄ and Y₁ to Y₄ respectively, and are an integer of 0 to 4 independently. However, the total of a₁ to a₄ is 2 or greater.

Among the oil-soluble dyes represented by formula (A-I), the oil-soluble dyes represented by following formula (A-II) are used particularly favorably.

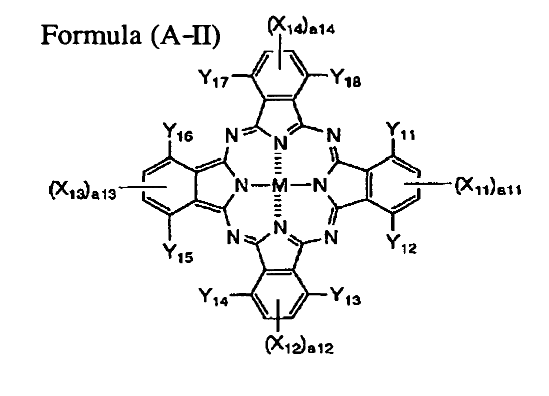

In formula (A-II), the definitions of X₁₁ to X₁₄, Y₁₁ to Y₁₈, and M are the same as those of X₁ to X₄, Y₁ to Y₄, and M in formula (A-I). In addition, a₁₁ to a₁₄ each independently represent an integer of 1 or 2.

A typical example of the compound represented by formula (A-II) above is exemplary compound (AII-17), which is shown here to describe the invention in detail and should not be construed as limiting the invention.

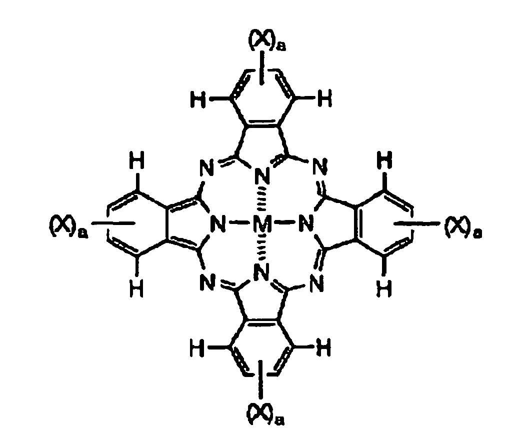

| CompoundNo. | M | X | a |
|---|---|---|---|
| AII-17 | Cu | 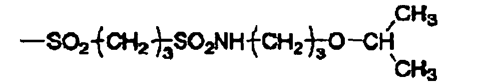 | 1 |
| AII-18 | Cu | 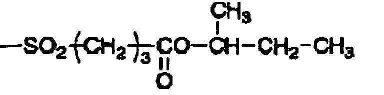 | 1 |
| AII-19 | Cu | 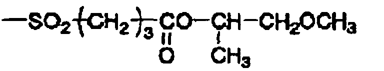 | 1 |
| AII-20 | Cu | 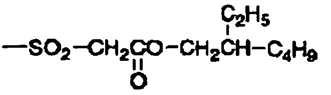 | 1 |
| AII-21 | Cu | 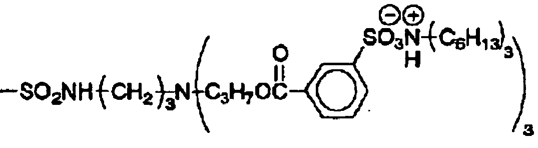 | 1 |
| AII-22 | Cu | 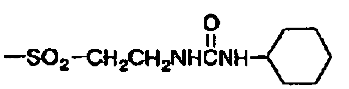 | 1 |
| AII-23 | Cu | 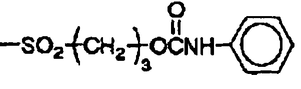 | 1 |

In the invention, use of an oil-soluble dye having an oxidation potential of higher than 1.0 V (SCE) is preferable. The oxidation potential is preferably higher, and dyes having an oxidation potential of higher than 1.1 V (SCE) are more preferable, and dyes having an oxidation potential of higher than 1.2 V (SCE) are most preferable.

The oxidation potential (Eox) can be determined easily by those skilled in the art. The methods are described, for example, in P. Delahay, "New Instrumental Methods in Electrochemistry" (1954, Interscience Publishers), A. J. Bard et al., "Electrochemical Methods", (1980, John Wiley & Sons), and Akira Fujishima et al., "Denki Kagaku Sokuteihou" (Electrochemical Measurement Methods) (1984, Gihodo Shuppan).

Specifically, the oxidation potential is determined by: dissolving a test sample at a concentration of 1×10⁻⁴ to 1×10⁻⁶ mole/liter in a solvent such as dimethylformamide or acetonitrile containing a supporting electrolyte such as sodium perchlorate or tetrapropylammonium perchlorate; approximating, by a straight line, the oxidation wave obtained by applying a voltage to the anodic side (higher side) by using carbon (GC) as the working electrode and a revolving platinum electrode as the counter electrode in a cyclic voltammetric or direct-current polarographic apparatus; determining the intersection of the straight line obtained with the residual current-potential curve and the intersection of the straight line with the saturated current (, or with the straight line and the line in parallel with the vertical axis passing through the peak electric potential); and determining the voltage relative to SCE (saturated calomel electrode) at the center of the line connecting the two intersections. The value may deviate to an extent approximately of several dozen millivolts under the influence of the difference in voltage between liquids and the resistance of the sample solution, but the reproducibility of the electric potential can be assured by using a standard sample (e.g., hydroquinone). The supporting electrolyte and the solvent for use may be selected properly according to the oxidation potential and solubility of the test sample. Usable supporting electrolytes and solvents are described in Akira Fujishima et al., "Denki Kagaku Sokuteihou" (Electrochemical Measurement Methods) (1984, Gihodo Shuppan), pp. 101 to 118.

An oxidation potential at the non-association state is obtained at the above-described concentration range of the phthalocyanine compound sample in the measurement solvent.

The value Eox corresponds to the easiness of electron transfer from the sample to the electrode, and a greater value (higher oxidation potential) indicates that the electron transfer from the sample to the electrode is more difficult; i.e., that the sample is harder to oxidize.

Use of a dye having a low oxidation potential results in greater polymerization inhibition by the dye and deterioration in hardening efficiency caused. Use of a dye having a higher oxidation potential leads to almost no polymerization inhibition.

After addition to an ink composition according to the invention, the colorant for use in the invention is preferably dispersed in the ink to a suitable degree. Various dispersing machines, such as ball mills, sand mills, attriters, roll mills, agitators, Henschel mixers, colloid mills, ultrasonic wave homogenizers, pearl mills, wet jet mills, and paint shakers, may be used for dispersion of the colorant.

In an embodiment, a dispersant is added at dispersing the colorant. The dispersant is not particularly limited, and is preferably a polymer dispersant. The polymer dispersant may be selected, for example from SOLSPERSE series products manufactured by Zeneca. A synergist suitable for the pigment may be used as a dispersion aid. In the present invention, the dispersant and the dispersion aid are added preferably in an amount of 1 to 50 parts by weight with respect to 100 parts by weight of the colorant.

The colorant may be added directly to the inkjet composition, or may be added, in advance, to a solvent or a dispersing medium such as the polymerizable compound used in the invention, so as to improve the dispersibility. In the invention, the colorant is preferably added to the polymerizable compound, in view of the prevention of the occurrence of problems such as the deterioration in solvent resistance caused by the remaining solvent in the cured image and VOCs (volatile organic compounds) caused by the residual solvent. The polymerizable compound to be used is preferably a monomer with a lowest viscosity, from the point of dispersion efficiency.

In the invention, the average diameter of the colorant particles is preferably set in the range of 0.005 to 0.5 µm, more preferably in the range of 0.01 to 0.45 nm, and still more preferably in the range of 0.015 to 0.3 µm by selection of the colorant, the dispersant, the dispersion medium, the dispersing conditions, and the filtration conditions. By controlling the particle diameter, it becomes possible to prevent clogging in head nozzles and to maintain favorable storage stability, transparency, and curing efficiency of the inkjet composition.

The content of colorant in the ink composition is preferably from 1 to 20 % by weight, more preferably from 2 to 15 % by weight, based on the entire weight of the ink composition.

The ink composition according to the invention may further contain various additives in accordance with the purpose, in addition to the essential components (a) to (d). Such optional components will be described hereinafter.

### (e) Cosensitizer

In a preferable embodiment, the ink composition according to the present invention contains a cosensitizer. The cosensitizer has a function of improving the sensitivity of the sensitizing dye to the active radiation, of suppressing the polymerization inhibition by oxygen, or the like.

Examples of the cosensitizer include amines. Examples of the amines include those described in M. R, Sander et al., "Journal of Polymer Society" vol. 10, p. 3173, (1972), JP-B No. 44-20189, JP-A Nos. 51-82102, 52-134692, 59-138205, 60-84305, 62-18537, and 64-33104 and Research Disclosure 33825 (the disclosures of which are incorporated herein by reference); and specific examples thereof include triethanolamine, ethyl p-dimethylaminobenzoate, p-formyldimethylaniline, p-methylthiodimethylaniline, and N-phenylglycine.

Other examples of the cosensitizer include thiols and sulfides, whose examples include the thiol compounds described in JP-A No. 53-702, JP-B No. 55-500806, and JP-A No. 5-142772 (the disclosures of which are incorporated herein by reference), and the disulfide compounds described in JP-A No. 56-75643 (the disclosure of which is incorporated herein by reference). Specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g., N-phenylglycine), the organic metal compounds described in JP-B No. 48-42965 (e.g., tributyltin acetate), the hydrogen donors described in JP-B No. 55-34414, the sulfur compounds described in JP-A No. 6-308727 (e.g., trithiane), the phosphorus compounds described in JP-A No. 6-250387 (e.g., diethyl phosphite), and the Si-H and Ge-H compounds described in Japanese Patent Application No. 6-191605.

### (f) Other Components

The ink composition according to the invention may further contain other components than (e) cosensitizer, as necessary. Examples of such additional components include polymerization initiators, solvents, and chain transfer agents.

A polymerization inhibitor may be added to the ink composition according to the invention for improvement in storage life. When the ink composition according to the invention is applied to inkjet recording, it is preferable to heat the composition to a temperature in the range of 40 to 80°C so as to reduce the viscosity of the ink before ejection; and thus, the addition of a polymerization inhibitor is preferable for the prevention of the head clogging by thermal polymerization. The polymerization inhibitor is preferably added in an amount of 200 to 20,000ppm with respect to the total amount of the ink composition according to the invention.

Examples of radical polymerization inhibitors include hydroquinone, benzoquinone, p-methoxyphenol, TEMPO, TEMPOL, and CUPFERRON AI. Examples of cation polymerization inhibitors include amines.

Considering that the ink composition according to the invention is a radiation-curable ink composition, the composition preferably contains no solvent, so that the reaction occurs immediately after deposition to cure the ink composition. The ink composition may contain a predetermined solvent as long as it does not affect the curing speed of ink composition and the like. The solvent may be an organic solvent or water. In particular, an organic solvent may be added for improvement in adhesiveness to the recording medium (support such as paper). Addition of an organic solvent is effective for the prevention of the problem of VOCs. The amount of organic solvent is, for example, in the range of 0.1 to 5 % by weight, preferably in the range of 0.1 to 3 % by weight, with respect to the total weight of the ink composition according to the invention.

In view of the prevention of the deterioration in sensitivity caused by the light-shielding effect of the colorant used in the ink composition, the ink composition may contain a combination of a cation-polymerizable compound and a cation polymerization initiator or a combination of a radical polymerization compound and a radical polymerization initiator, or may be a radical-cation hybrid curable ink using the both combinations of the polymerizable compound and the polymerization initiator.

In addition, other known compounds may be added to the ink composition according to the invention as necessary. Examples of such additional compounds include a surfactant, a leveling additive, a matting agent, and a resin for adjustment of film physical properties, such as a polyester resin, a polyurethane resin, a vinyl resin, an acrylic resin, a rubber-based resin, or a wax. Further, addition of a tackifier that does not inhibit polymerization is also preferable in view of the improvement in adhesiveness to recording media such as polyolefin or PET. Specific examples thereof include the high-molecular weight adhesive polymers described in JP-A No. 2001-49200, pp. 5 to 6 (e.g., copolymers of a (meth)acrylic ester of an alcohol having an alkyl group having 1 to 20 carbon atoms, copolymers of a (meth)acrylic ester of an alicyclic alcohol having 3 to 14 carbon atoms, and copolymers of a (meth)acrylic ester of an aromatic alcohol having 6 to 14 carbon atoms), and low-molecular weight adhesive resins having polymerizable unsaturated bonds.

### (2) Properties of Ink Composition

As described above, the ink composition according to the invention contains a specific polymerization initiator (a), a polymerizable compound (b), and a sensitizing dye (c), and a colorant (d) as essential components. Based on the total weight of the ink composition, the weight of the specific polymerization initiator (a) is preferably from 0.1 to 30 % by weight, more preferably from 2.0 to 20 % by weight; the weight of the polymerizable compound (b) is preferably from 10 to 97 % by weight, more preferably from 30 to 95 % by weight; the weight of the sensitizing dye (c) is preferably from 0.1 to 30 % by weight, more preferably from 0.5 to 20 % by weight; and the weight of the colorant (d) is preferably from 1 to 20 % by weight, more preferably from 2 to 10 % by weight. The sum of the above proportions is preferably 100 % by weight.

Considering the ejection efficiency when applied to inkjet recording, the ink composition according to the invention preferably has an ink viscosity of 4 to 30 mPa·s, more preferably 5 to 20 mPa·s, at the temperature at the time of ejection (e.g., a temperature in the range of 40 to 80 °C, more preferably in the range of 25 to 30 °C). The viscosity at room temperature (25 to 30°C) of the ink composition may be 4 to 500 mPa·s, preferably 5 to 200 mPa·s. It is preferable to adjust and determine the composition properly so that the viscosity falls in the range. By setting the viscosity at room temperature high, it become possible to prevent penetration of the ink into the recording medium even when a porous recording medium is used, to reduce the amount of uncured monomer and the odor, to suppress bleeding upon the deposition of ink droplets, and consequently to improve the image quality.

The surface tension of the ink composition according to the invention is preferably from 20 to 30 mN/m and more preferably from 23 to 28 mN/m. When the ink is used for recording on various recording media such as polyolefin, PET, coated paper, and non-coated paper, the surface tension is preferably 20 mN/m or more in view of the prevention of bleeding and penetration, and 30 mN/m or less in view of the wettability.

The ink composition according to the invention thus adjusted is used advantageously as an inkjet recording ink. Specifically, the ink composition according to the invention is ejected onto a recording medium with an inkjet printer, and the deposited ink composition is cured by irradiation with active radiation rays to complete recording.

The printed material obtained using the ink is superior in the strength of the image area which is cured by irradiation with active radiation rays such as ultraviolet rays, and thus can be used not only for image formation with the ink but also for various applications including the formation of an ink-receiving layer (image area) of a planographic printing plate.

### (3) Inkjet Recording Method, Method of Producing a Planographic Printing Plate, and Inkjet Recording Apparatus

Hereinafter, the inkjet recording method according to the invention, the method of producing a planographic printing plate according to the invention, and inkjet recording apparatuses applicable thereto will be described.

### (3-1) Inkjet Recording Method

The inkjet recording method according to the invention will be described below.

The inkjet recording method according to the invention comprises ejecting a curable composition onto a recording medium with an inkjet printer and curing the ejected curable composition by irradiation with active radiation rays. The curable composition contains (a) a triarylsulfonium salt polymerization initiator having at least one aryl skeleton that has an electron attracting group as a substituent, (b) a polymerizable compound, and (c) a sensitizing dye.

The cured composition forms an image on the recording medium.

The curable composition used in the inkjet recording method according to the invention is a curable composition containing (a) a triarylsulfonium salt polymerization initiator having at least one aryl skeleton that has an electron attracting group as a substituent, (b) a polymerizable compound, and (c) a sensitizing dye. The definitions and preferable ranges of the components (a) to (c) are the same as in the above description of the ink composition according to the invention.

When the inkjet recording method according to the invention is used for formation of a visible image, the curable composition may contain (d) a colorant. The definition and preferable range of the colorant (d) in the curable composition is the same as in the above description of the ink composition according to the invention.

The peak wavelength of the active radiation is preferably from 200 to 600 nm, more preferably from 240 to 450 nm, and still more preferably from 350 to 420 nm. The output of the active radiation is preferably 2,000 mJ/cm² or less, more preferably from 10 to 2,000 mJ/cm², still more preferably from 15 to 1,000 mJ/cm², and particularly preferably from 20 to 500 mJ/cm².

An embodiment of the inkjet recording method according to the invention is a method of producing a planographic printing plate, the method comprising ejecting the ink composition according to the invention onto a hydrophilic support, and curing the ink composition to form a hydrophobic region.

The inkjet recording method according to the invention will be described below, taking a method of producing a planographic printing plate (according to the invention) as an example.

### (3-2) Method of Producing a Planographic Printing Plate

The method of producing a planographic printing plate comprises ejecting the ink composition according to the invention onto a hydrophilic support and irradiating the ejected ink composition with radiation to cure the ink composition, thus forming a hydrophobic region.

The planographic printing plate obtained by the method of producing a planographic printing plate according to the invention has a hydrophilic support and a hydrophobic region formed on the hydrophilic support.

So-called PS plates, in which a lipophilic photosensitive resin layer is provided on a hydrophilic support, have been used commonly as planographic printing plates. The PS plates have been produced normally by mask exposure (surface exposure) through a lith film and subsequent removal of non-image regions by solubilization. In recent years, digital technology in which image information is processed, stored, and outputted electronically by computer is becoming more and more popular, and there is a need for a new image-output method compatible with the digital technology. As a result, "computer-to-plate (CTP) technology" is under development, in which printing plates are produced directly without using a lith film, by scanning with light with high-directivity (such as laser beams) based on digitalized image information.

In an embodiment of the present invention, a planographic printing plate is prepared directly be the deposition of the ink composition or inkjet ink composition. In the method, the ink is ejected onto a support (preferably a hydrophilic support) by an inkjet method, and the ink is irradiated with active radiation so that the part of the ink composition (inkjet ink) exposed to the radiation forms an image (hydrophobic image), whereby a planographic printing having the desired image is obtained. The ink composition or inkjet ink according to the invention is suitable for the method.

### (3-2-1) Hydrophilic Support for Planographic Printing Plate

The hydrophilic support favorably used in preparation of the planographic printing plate according to the invention will be described below.

The hydrophilic support for use in the preparation of the planographic printing plate according to the invention is not particularly limited, and may be a dimensionally stable plate-shaped support. A support whose surface has surface hydrophilicity may be used as the support of the planographic printing plate without further treatments. In an embodiment, the surface of a plate-shaped support is subjected to a hydrophilicity-imparting treatment.

The support material is not particularly limited. Examples of the material for the support include paper, paper laminated with a plastic material (e.g., polyethylene, polypropylene, or polystyrene), metal plates (e.g., of aluminum, zinc, or copper), plastic films (e.g., cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinylacetal), paper or plastic films laminated with a metal selected from the above metals, and paper or plastic films on which a metal selected from the above metals are deposited. Preferable examples of the support include polyester films and aluminum plates. Among them, aluminum plates, which are superior in dimensional stability and relatively cheap, are more preferable.

When the support is an aluminum plate, the aluminum plate may be a pure aluminum plate, an alloy plate containing aluminum as the main component and trace amounts of hetero-elements, or a thin film of aluminum or an aluminum alloy laminated with plastic. Examples of the hetero-element contained in the aluminum alloy include silicon, iron, manganese, copper, magnesium, chromium, zinc, bismuth, nickel, and titanium. The content of the hetero-elements in the alloy is preferably 10 % by weight or less. Although pure aluminum plates are preferable in the invention, aluminum plates containing trace amounts of hetero-elements are also usable because it is difficult to prepare completely pure aluminum due to the problems in refining process. The composition of the aluminum plate is not particularly limited, and may be selected from known or commonly-used raw materials.

The thickness of the support is preferably from 0.1 to 0.6 mm and more preferably from 0.15 to 0.4 mm.

The aluminum plate is preferably subjected to a surface treatment such as a surface-roughening treatment or an anodizing treatment before use. The hydrophilicity of the support and the adhesion between the image-recording layer and the support are improved by the surface finishing. Before the surface-roughening treatment, the aluminum plate may be subjected to a degreasing treatment, for example, with a surfactant, organic solvent, aqueous alkaline solution, or the like so as to remove the rolling oil on the surface.

Various methods may be used for surface roughening of aluminum plate, and examples thereof include a mechanical surface-roughening treatment, an electrochemical surface-roughening treatment (surface-roughening by dissolving the surface electrochemically), and a chemical surface-roughening treatment (surface-roughening by dissolving the surface chemically).

The method for the mechanical surface-roughening may be selected from methods known in the art such as ball polishing, brush polishing, blast polishing, and buff polishing may be used. A transfer method may also be used in which the surface irregularity is imprinted by a roll having a rough surface during hot rolling of aluminum.

The electrochemical surface roughening may be performed, for example, by applying an alternate or direct current to the support in an electrolyte solution containing an acid such as hydrochloric acid or nitric acid. A method of using a mixed acid is also usable, such as described in JP-A No. 54-63902, the disclosure of which is incorporated herein by reference.

The aluminum plate after surface-roughening treatment may be optionally etched with alkali, using an aqueous solution of potassium hydroxide, sodium hydroxide, or the like. After neutralization, the aluminum plate may be subjected, as necessary, to an anodizing process so as to improve the abrasion resistance.

The electrolyte to be used for the anodization of the aluminum plate may be selected from various electrolytes if the electrolyte is capable of forming a porous oxide film. Generally, the electrolyte may be selected from sulfuric acid, hydrochloric acid, oxalic acid, chromic acid, and mixed acids thereof. The concentration of the electrolyte is determined adequately according to the kind of the electrolyte.

The condition of the anodization may be changed according to the electrolyte to be used, and thus cannot be specified uniquely. In general, the electrolyte concentration may be from 1 to 80 % by weight; the liquid temperature may be from 5 to 70°C, the electric current density may be from 5 to 60 A/dm²; the voltage may be from 1 to 100 V; and the electrolysis time may be from 10 seconds to 5 minutes. The amount of the anodic oxide film to be formed is preferably from 1.0 to 5.0 g/m² and more preferably from 1.5 to 4.0 g/m². In this range, it is possible to obtain a planographic printing plate with superior printing durability and scratch resistance of the non-image area.

The support which has been subjected to a surface treatment such as described above and which has an anodic oxide film may be used, without further treatments, as the support to be used in the invention. However, the support may be further subjected to other treatments as necessary, such as a treatment for expanding or sealing the micropores in the anodic oxide film described in JP-A Nos. 2001-253181 and 2001-322365 (the disclosures of which are incorporated herein by reference) and a treatment for imparting hydrophilicity to the support surface comprising immersing the support in an aqueous solution containing a hydrophilic compound, so as to further improve the adhesion of the support to the upper layer and the hydrophilicity, stain-resistance, heat insulation, and the like of the support. The expanding and sealing treatments are not limited to the methods described above, and may be any conventionally known methods.

### [Sealing]

The sealing may be vapor sealing, sealing only with fluorozirconic acid, sealing with an aqueous solution containing an inorganic fluorine compound such as sodium fluoride, sealing with water vapor provided with lithium chloride, or sealing with hot water.

Among the methods above, sealing with an aqueous solution containing an inorganic fluorine compound, sealing with water vapor, and hot-water sealing are preferable.

### <Sealing Treatment with an Aqueous Solution Containing an Inorganic Fluorine Compound >

In a sealing treatment with an aqueous solution containing an inorganic fluorine compound, the inorganic fluorine compound to be used is preferably a metal fluoride.

Specific examples thereof include sodium fluoride, potassium fluoride, calcium fluoride, magnesium fluoride, sodium fluorozirconate, potassium fluorozirconate, sodium fluorotitanate, potassium fluorotitanate, ammonium fluorozirconate, ammonium fluorotitanate, potassium fluorotitanate, fluorozirconic acid, fluorotitanic acid, hexafluorosilicic acid, nickel fluoride, iron fluoride, fluorophosphoric acid and ammonium fluorophosphate. Preferable among these compounds are sodium fluorozirconate, sodium fluorotitanate, fluorozirconic acid, and fluorotitanic acid.

The concentration of the inorganic fluorine compound in the aqueous solution is preferably 0.01 % by weight or higher, more preferably 0.05 % by weight or higher, in respect of sufficient sealing of micropores in the anodized film. The concentration of the inorganic fluorine compound in the aqueous solution is preferably 1 % by weight or lower, more preferably 0.5 % by weight or lower, in respect of stain resistance.

The aqueous solution containing an inorganic fluorine compound preferably further contains a phosphate compound. When the phosphate compound is contained in the aqueous solution, the hydrophilicity of the surface of the anodized film is improved thus improving on-press developability and stain resistance.

The phosphate compound is preferably selected from metal phosphates such as phosphates of alkali metals and phosphates of alkaline earth metals.

Specific examples thereof include zinc phosphate, aluminum phosphate, ammonium phosphate, diammonium hydrogen phosphate, ammonium dihydrogen phosphate, monoammonium phosphate, monopotassium phosphate, monosodium phosphate, potassium dihydrogen phosphate, dipotassium hydrogen phosphate, calcium phosphate, sodium ammonium hydrogen phosphate, magnesium hydrogen phosphate, magnesium phosphate, ferrous phosphate, ferric phosphate, sodium dihydrogen phosphate, sodium phosphate, disodium hydrogen phosphate, lead phosphate, diammonium phosphate, calcium dihydrogen phosphate, lithium phosphate, phosphotungstic acid, ammonium phosphotungstate, sodium phosphotungstate, ammonium phosphomolybdate, sodium phosphomolybdate, sodium phosphite, sodium tripolyphosphate and sodium pyrophosphate. Among these, sodium dihydrogen phosphate, disodium hydrogen phosphate, potassium dihydrogen phosphate and dipotassium hydrogen phosphate are preferable.

The combination of the inorganic fluorine compound and the phosphate compound is not particularly limited. In a preferable embodiment, the aqueous solution contains sodium fluorozirconate as the inorganic fluorine compound and sodium dihydrogen phosphate as the phosphate compound.

The concentration of the phosphate compound in the aqueous solution is preferably 0.01 % by weight or higher, more preferably 0.1 % by weight or higher, from the viewpoint of improving on-press developability and stain resistance. The concentration of the phosphate compound in the aqueous solution is preferably 20 % by weight or lower, more preferably 5 % by weight or lower, in respect of the solubility.

The ratios of the respective compounds in the aqueous solution are not particularly limited. The ratio by mass of the inorganic fluorine compound to the phosphate compound is preferably in the range of 1/200 to 10/1, more preferably in the range of 1/30 to 2/1.

The temperature of the aqueous solution is preferably 20°C or higher, more preferably 40°C or higher, but preferably 100°C or lower, more preferably 80°C or lower.

The pH of the aqueous solution is preferably 1 or higher, more preferably 2 or higher, but preferably 11 or lower, more preferably 5 or lower.

The method of sealing with the aqueous solution containing an inorganic fluorine compound is not particularly limited, and examples thereof include a dipping method and a spraying method. Only a single kind of sealing treatment may be conducted or two or more kinds of sealing treatments may be conducted in combination. Each sealing treatment may be conducted only once, or may be conducted for twice or more.

The dipping method is preferable for conducting the sealing treatment. When the dipping method is used in the treatment, the treatment time is preferably at least 1 second, more preferably at least 3 seconds, but preferably 100 seconds or shorter, more preferably 20 seconds or shorter.

### <Sealing Treatment with Water Vapor>

The sealing treatment with water vapor may be conducted by, for example, allowing the anodized film to continuously or intermittently contact with pressurized water vapor or water vapor of atmospheric pressure.

The temperature of the water vapor is preferably 80°C or higher, more preferably 95°C or higher, but preferably 105°C or lower.

The pressure of the water vapor is preferably in the range of from (atmospheric pressure - 50 mmAq) to (atmospheric pressure + 300 mmAq). In an embodiment, the pressure of the water vapor is preferably in the range of 1.008×10⁵ to 1.043×10⁵ Pa.

The duration of the contact with water-vapor is preferably 1 second or longer, more preferably 3 seconds or longer, but preferably 100 seconds or shorter, more preferably 20 seconds or shorter.

### <Sealing Treatment with Hot Water>

The sealing treatment with hot water may be conducted, for example by dipping an aluminum plate having an anodized film formed thereon in hot water. The hot water may contain an inorganic salt (for example, a phosphate) or an organic salt. The temperature of the hot water is preferably 80°C or higher, more preferably 95°C or higher, but preferably 100°C or lower. The dipping time is preferably 1 second or longer, more preferably 3 seconds or longer, but preferably 100 seconds or shorter, more preferably 20 seconds or shorter.

Examples of methods for imparting hydrophilicity usable in the present invention include: alkali metal silicate methods such as disclosed in USP Nos. 2714066, 3181461, 3280734, and 3902734 (the disclosures of which are incorporated herein by reference), the methods comprising immersing or electrolyzing the support in an aqueous solution of sodium silicate or the like; a method disclosed in JP-B No. 36-22063 (the disclosure of which is incorporated herein by reference), the method comprising treating the support with potassium fluorozirconate; and methods such as disclosed in USP Nos. 3276868, 4153461, and 4689272 (the disclosures of which are incorporated herein by reference), the methods comprising treating the support with polyvinyl phosphonic acid.

The support according to the invention preferably has an average center-line roughness of 0.10 to 1.2 µm. In the range above, desirable adhesiveness to the image-recording layer, favorable printing durability, and favorable staining resistance are realized.

### (3- 2-2) Ejection of Ink Composition onto Hydrophilic Support

When the ink composition or inkjet recording ink composition according to the invention is ejected onto the surface of the hydrophilic support, it is preferable to lower the viscosity of the ink composition to 7 to 30 mPa·s (more preferably 7 to 20 mPa·s) by heating to 40 to 80°C (more preferably 25 to 30 °C) before ejection. The use of an ink composition whose ink viscosity at 25 °C is in the range of 35 to 500 mP·S is preferable since significant effects are obtained. In this manner, it is possible to realize highly stable ejection.

Generally, radiation-curable ink compositions, such as the ink composition according to the invention, are usually more viscous than aqueous inks, and the fluctuation in the viscosity of radiation-curable ink compositions caused by the fluctuation in temperature during printing is larger. The fluctuation in the viscosity of ink composition exerts significant influences on the droplet size and the droplet ejection speed, causing deterioration in image quality, and thus, it is necessary to keep the temperature of the ink composition as constant as possible during printing. It is preferable to control the ink composition temperature within ±5°C from the set temperature, more preferably ±2°C from the set temperature, and still more preferably ±1°C from the set temperature.

### (3-2-3) Formation of Hydrophobic Region by Curing of Ejected Ink Composition by Irradiation with Radiation

The ink composition ejected on the surface of a hydrophilic substrate is cured by irradiation with active radiation. This is because the sensitizing dye in the polymerization initiation system contained in the ink composition according to the invention is excited to the excited state by absorption of active radiation, and then a polymerization initiator in the polymerization initiation system decomposes upon contact with the sensitizing dye in the excited state, causing radical polymerization of the polymerizable compound. In this way, the ink composition is cured.

Examples of the active radiation include α-rays, □-rays, electron beams, X-rays, ultraviolet rays, visible rays, and infrared rays. The peak wavelength of the active radiation depends on the absorption characteristics of the sensitizing dye in the ink composition, but may be, for example, from 200 to 600 nm, preferably from 300 to 450 nm, and more preferably from 350 to 450 nm. The initiating system in the invention is sufficiently sensitive to radiation even at a low output. Thus, output of the radiation may be, for example, an irradiation energy of 2,000 mJ/cm² or lower, preferably from 10 to 2,000 mJ/cm², more preferably from 20 to 1,000 mJ/cm², and still more preferably from 25 to 800 mJ/cm². The active radiation may be irradiated such that the illuminance on the exposure plane is, for example, from 10 to 2,000 mW/cm², and preferably from 20 to 1,000 mW/cm².

In addition, the ink composition according to the invention may be irradiated with active radiation rays, for example, for 0.01 to 120 seconds, preferably for 0.1 to 90 seconds.

The irradiation condition and the basic irradiation method with the active radiation are disclosed in JP-A No. 60-132767. Specifically, the exposure is performed in a so-called shuttle process, i.e., by scanning with a head unit having an ink-ejecting device and light sources disposed at both sides of the head unit. The active radiation is irradiated a certain period (e.g., from 0.01 to 0.5 second, preferably from 0.01 to 0.3 second, and more preferably, from 0.01 to 0.15 second) after ink deposition. When the time between ink deposition and irradiation is very short, it is possible to prevent bleeding of the uncured ink deposited on the recording medium. Further, even when a porous recording medium is used, ink is exposed to radiation before penetrating deep into the recording medium where the radiation does not reach, whereby residual unreacted monomer is reduced to reduce odor.

The curing of the ink may be conducted with a light source that is not driven. WO 99/54415 Pamphlet discloses an irradiation method in which the recording area is irradiated with UV rays by using an optical fiber or by using a mirror disposed on a side wall of the head unit which mirror reflects the collimated light.

By employing inkjet-recording methods such as described above, the dot diameter of the deposited ink can be maintained constant even when various recording media that are different in surface wettability is used, thus improving the image quality. In order to obtain a color image by the inkjet recording method according to the invention, it is preferable to form images in the order from a color lower in lightness. When color inks are deposited in that order, the radiation rays reaches inks located at the bottom; therefore, superior curing sensitivity, reduction in the amount of residual monomer and odor, and improvement in adhesiveness are achieved. Although it is possible to conduct the irradiation with radiation after a full-color image is formed, it is preferable to irradiate the image with radiation after each color ink is deposited, in view of the acceleration of curing.

As described above, the ink composition according to the invention is cured by irradiation with active radiation, whereby a hydrophobic image is formed on the hydrophilic surface of the support.

### (3-3) Inkjet Recording Apparatus

The inkjet recording apparatus for use in the invention is not particularly limited, and may be selected from commercially available inkjet recording apparatuses. That is, in the invention, images can be recorded on recording media by commercially available inkjet recording apparatuses.

An example of usable inkjet recording apparatuses contains an ink-supplying system, a temperature sensor, and an active radiation source.

The ink-supplying system includes, for example, a stock tank storing the inkjet recording ink according to the invention, a supply pipe, an ink-supplying tank immediately before inkjet head, a filter, and a piezoelectric inkjet head. The piezoelectric inkjet head can be operated such that the ejection is conducted at a resolution of, for example, of 320×320 to 4,000×4,000 dpi, preferably, 400×400 to 2,400×2,400 dpi to form multi-sized dots in an amount of 1 to 100 pl, preferably 8 to 30 pl. The unit "dpi" in the invention means the number of dots per 2.54 cm.

As described above, the temperature of the radiation-curable ink at the time of ejection is preferably maintained constant. Therefore, the region from the ink-supplying tank to the inkjet head is preferably thermally insulated and heated. The method of controlling the temperature is not particularly limited. In an embodiment, each piping unit is monitored by multiple temperature sensors and is heated to control the temperature adequately based on the flow rate of ink and the environmental temperature. The temperature sensors may be disposed in the ink-supplying tank and near the nozzles of the inkjet head. In addition, the head unit to be heated is preferably thermally shielded or insulated so as to minimize the environmental influence on the apparatus. It is preferable to insulate the head unit from other units and reduce the heat capacity of the entire unit to be heated in order to shorten the start-up time needed for heating or in order to reduce the loss in heat energy.

Mercury lamps, gas or solid state lasers and the like are widely used as active radiation ray sources, and mercury lamps and metal halide lamps are widely used for UV-curing inkjet. However, under the current strong needs for the elimination of the use of mercury from the viewpoint of environmental protection, it is very important industrially and environmentally to replace mercury lamps with GaN-type semiconductor UV-emitting devices. In addition, LED's (UV-LED) and LD's (UV-LD) are smaller in size, longer in lifetime, higher in efficiency, and lower in cost, and thus, attracting attention as light sources for radiation-curing inkjet printers.

As described above, a light-emitting diode (LED) or a laser diode (LD) may be used as the active radiation ray source. An ultraviolet LED or an ultraviolet LD may be used when an ultraviolet ray source is required. For example, a purple LED having a main emission spectrum in the wavelength range of 365 to 420 nm is available from Nichia Corporation. As to a light having a still shorter wavelength, U.S. Patent No. 6,084,250 (the disclosure of which is incorporated herein by reference) discloses an LED having a main emission spectrum in the wavelength region of 300 to 370 nm. Other ultraviolet LED's are also commercially available, and capable of emitting radiations of different UV ranges. The radiation ray source used in the invention is preferably a UV-LED, and particularly preferably a UV-LED having a peak wavelength in the range of 350 to 420 nm.

The maximum illuminance of LED light on the image recording medium is preferably from 10 to 2000 mW/cm², more preferably from 20 to 1000 mW/cm², and still more preferably from 50 to 800 mW/cm².

### EXAMPLES

Hereinafter, the invention will be described in more detail with reference to Examples and Comparative Examples, but Examples should not be construed as limiting the invention.

### <Preparation 1 of Pigment Dispersion>

Dispersions of yellow, magenta, cyan and black were prepared according to the method described below. Each dispersion was prepared by dispersing the ingredients by a known dispersing machine under such condition to give pigment particles having an average diameter of 0.3 µm or less and then filtering the dispersion under heat.

### (Yellow Dispersion 1A)

- C.I. Pigment Yellow 12 10 parts by weight
- Polymer dispersant (SOLSPERSE series, manufactured by Zeneca) 5 parts by weight
- Stearyl acrylate 85 parts by weight

### (Cyan Dispersion 1A)

- C.I. Pigment Blue 15:3 20 parts by weight
- Polymer dispersant (SOLSPERSE series, manufactured by Zeneca) 5 parts by weight
- Stearyl acrylate 75 parts by weight

### (Magenta Dispersion 1A)

- C.I. Pigment Red 57:1 15 parts by weight
- Polymer dispersant (SOLSPERSE series, manufactured by Zeneca) 5 parts by weight
- Stearyl acrylate 80 parts by weight

### (Black Dispersion 1A)

- C.I. pigment black 7 20 parts by weight
- Polymer dispersant (SOLSPERSE series, manufactured by Zeneca) 5 parts by weight
- Stearyl acrylate 75 parts by weight

### <Preparation 1 of Ink Composition >

The following ink compositions respectively in yellow, cyan, magenta, and black, were prepared.

### (Example 1-1: Yellow Ink 1A)

- (a) Polymerization initiator: exemplary compound (B-4) 3 parts by weight
- (b) Polymerizable compound:
   Compound A (having the following structure) 50 parts by weight
   Compound B (having the following structure) 40 parts by weight
- (c) Sensitizing dye: the following compound (C-22) 1 part by weight
- (d) Colorant (yellow dispersion 1A) 5 parts by weight
- Polymerization inhibitor (ethanolamine) 1 part by weight

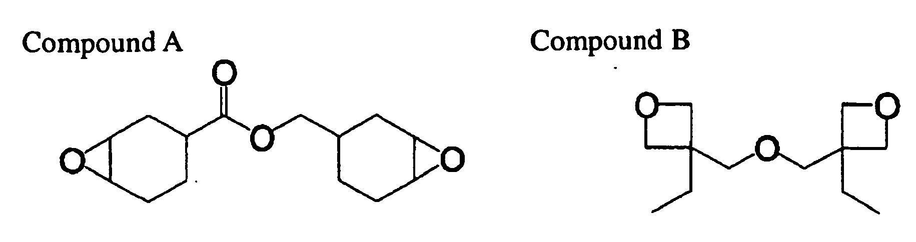

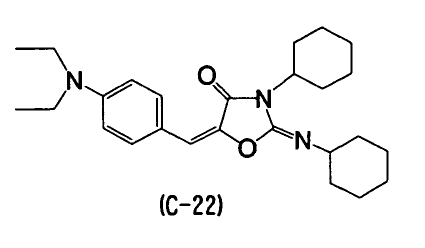

### (Example 1-2: Yellow Ink 2A)

- (a) Polymerization initiator: exemplary compound (B-31) 3 parts by weight
- (b) Polymerizable compound:
   Compound C (having the following structure) 30 parts by weight
   Compound D (having the following structure) 7 parts by weight
      Stearyl acrylate 50 parts by weight
- (c) Sensitizing dye: compound (C-22) shown above 1 part by weight
- (d) Colorant (yellow dispersion 1A) 5 parts by weight
- Polymerization inhibitor (CUPFERRON AI, manufactured by Wako Pure Chemical Industries) 1 part by weight

### Compound C: Bifunctional aromatic urethane acrylate, which is obtained by capping the terminals of a condensate (Mw = 1500) of the following compounds

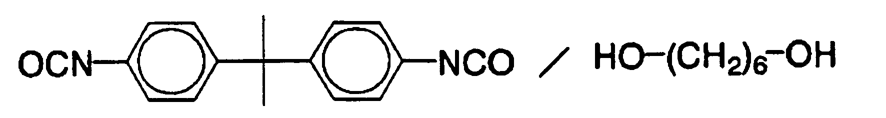

with the following compound

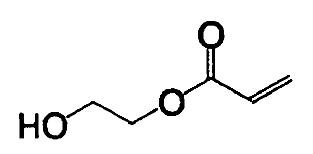

Compound D: Hexafunctional aliphatic urethane acrylate, which is obtained by capping the terminals of a condensate (Mw = 1500) of the following compounds

OCN-(CH₂)₆-NCO / HO-(CH₂)₆-OH

with the following compound

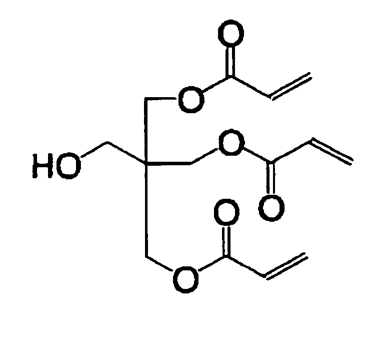

### (Comparative Example 1-1: Yellow Ink 3A)

- (a) Polymerization initiator: triphenylsulfonium hexafluorophosphate salt 3 parts by weight
- (b) Polymerizable compound:
   Compound A (having the above structure) 50 parts by weight
   Compound B (having the above structure) 40 parts by weight
- (c) Sensitizing dye: compound (C-22) shown above 1 part by weight
- (d) Colorant (yellow dispersion 1A) 5 parts by weight
- Ethanolamine 1 part by weight

The crude yellow inks 1A to 3A prepared as described above were filtered through a filter having an absolute filtration rating of 2µm, to give yellow inks 1A to 3A.

### (Example 2-1:Cyan Ink 1A)

- (a) Polymerization initiator: exemplary compound (B-4) 3 parts by weight
- (b) Polymerizable compound:
   Compound A (having the above structure) 50 parts by weight
   Compound B (having the above structure) 40 parts by weight
- (c) Sensitizing dye: compound (C-22) shown above 1 part by weight
- (d) Colorant (cyan dispersion 1A) 5 parts by weight
- Ethanolamine 1 part by weight

### (Example 2-2: Cyan Ink 2A)

- (a) Polymerization initiator: exemplary compound (B-4) 3 parts by weight
- (b) Polymerizable compound:
   Compound A (having the above structure) 50 parts by weight
   Compound B (having the above structure) 40 parts by weight
- (c) Sensitizing dye: 2-ethyl-9,10-dimethoxyanthracene 1 part by weight
- (d) Colorant (cyan dispersion 1A) 5 parts by weight
- Ethanolamine 1 part by weight

### (Example 2-3: Cyan Ink 3A)

- (a) Polymerization initiator: exemplary compound (B-4) 3 parts by weight
- (b) Polymerizable compound:
   Compound A (having the above structure) 50 parts by weight
   Compound B (having the above structure) 40 parts by weight
- (c) Sensitizing dye: compound (C-22) shown above 1 part by weight
   (d) Colorant: compound (D-42) shown below with an oxidation potential of 1.28 V (vs. SCE) 5 parts by weight
- Polymerization inhibitor (CUPFERRON AI, manufactured by Wako Pure Chemical Industries) 1 part by weight

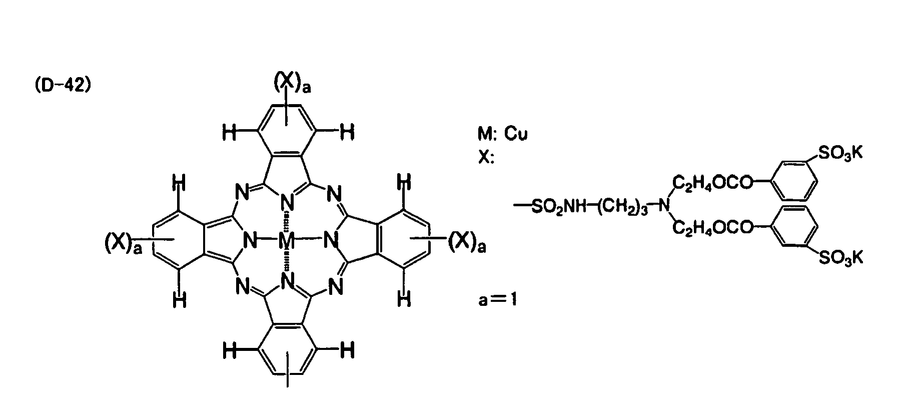

### (Example 2-4: Cyan Ink 4A)

- (a) Polymerization initiator: exemplary compound (B-4) 3 parts by weight
- (b) Polymerizable compound:
   Compound A (having the above structure) 50 parts by weight
   Compound B (having the above structure) 40 parts by weight
- (c) Sensitizing dye: compound (C-22) shown above 1 part by weight
- (d) Colorant: compound (D-51) shown below with an oxidation potential of 0.83 V (vs. SCE) 5 parts by weight
- Polymerization inhibitor (CUPFERRON AI, manufactured by Wako Pure Chemical Industries) 1 part by weight

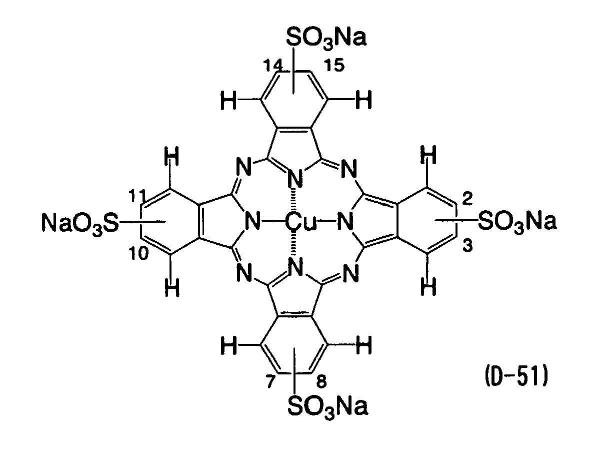

### (Comparative Example 2-1: Cyan Ink 5A)

- (a) Polymerization initiator: triphenylsulfonium hexafluorophosphate salt) 3 parts by weight
- (b) Polymerizable compound:
   Compound A (having the above structure) 50 parts by weight
   Compound B (having the above structure) 40 parts by weight
- (c) Sensitizing dye: compound (C-22) shown above 1 part by weight
- (d) Colorant (cyan dispersion 1A) 5 parts by weight
- Polymerization inhibitor (ethanolamine) 1 part by weight

### (Comparative Example 2-2:Cyan Ink 6A)

- (a) Polymerization initiator: tri-p-triphenylsulfonium hexafluorophosphate salt 3 parts by weight
- (b) Polymerizable compound:
   Compound A (having the above structure) 50 parts by weight
   Compound B (having the above structure) 40 parts by weight
- (c) Sensitizing dye: compound (C-22) shown above 1 part by weight
- (d) Colorant (cyan dispersion 1A) 5 parts by weight
- Polymerization inhibitor (CUPFERRON AI, manufactured by Wako Pure Chemical Industries) 1 part by weight

The crude cyan inks 1A to 6A prepared as described above were filtered through a filter having an absolute filtration rating of 2µm, to give cyan inks 1A to 6A.

### (Example 3-1: Magenta Ink 1A)

- (a) Polymerization initiator: exemplary compound (B-4) 3 parts by weight
- (b) Polymerizable compound:
   Compound A (having the above structure) 50 parts by weight
   Compound B (having the above structure) 40 parts by weight
- (c) Sensitizing dye: compound (C-23) shown below 1 parts by weight
- (d) Colorant (magenta dispersion 1 A) 5 parts by weight
- Ethanolamine 1 part by weight

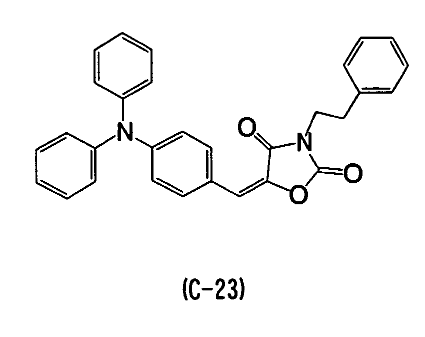

### (Example 3-2: Magenta ink 2A)

- (a) Polymerization initiator: exemplary compound (B-4) 3 parts by weight
- (b) Polymerizable compound:
   Compound A (having the above structure) 50 parts by weight
   Compound B (having the above structure) 40 parts by weight
- (c) Sensitizing dye: DAROCUR ITX (manufactured by Ciba Specialty Chemicals) 1 part by weight
- (d) Colorant (magenta dispersion 1A) 5 parts by weight
- Ethanolamine 1 part by weight

### (Example 3-3: Magenta Ink 3A)

- (a) Polymerization initiator: exemplary compound (B-31) 3 parts by weight
- (b) Polymerizable compound:
   Compound C (having the above structure) 30 parts by weight
   Compound D (having the above structure) 10 parts by weight
   Stearyl acrylate 50 parts by weight
- (c) Sensitizing dye (compound (C-23) shown above) 1 part by weight
- (d) Colorant (magenta dispersion 1A) 5 parts by weight
- Polymerization inhibitor (CUPFERRON AI, manufactured by Wako Pure Chemical Industries) 1 part by weight

### (Example 3,4: Magenta Ink 4A)

- (a) Polymerization initiator: exemplary compound (B-32) 3 parts by weight
- (b) Polymerizable compound:
   Compound A (having the above structure) 50 parts by weight
   Compound B (having the above structure) 40 parts by weight
- (c) Sensitizing dye: compound (C-23) shown above 1 part by weight
- (d) Colorant (magenta dispersion 1A) 5 parts by weight
- Ethanolamine 1 part by weight

### (Example 3-5: Magenta Ink 5A)

- (a) Polymerization initiator: exemplary compound (1-2) 3 parts by weight
- (b) Polymerizable compound:
   Compound A (having the above structure) 50 parts by weight
   Compound B (having the above structure) 40 parts by weight
- (c) Sensitizing dye: compound (C-23) shown above 1 part by weight
- (d) Colorant (magenta dispersion 1A) 5 parts by weight
- Ethanolamine 1 part by weight

### (Comparative Example 3-1: Magenta Ink 6A)

- (a) Polymerization initiator: triphenylsulfonium hexafluorophosphate salt 3 parts by weight
- (b) Polymerizable compound:
   Compound A (having the above structure) 50 parts by weight
   Compound B (having the above structure) 40 parts by weight
- (c) Sensitizing dye: compound (C-23) shown above 1 part by weight
- (d) Colorant (magenta dispersion 1A) 5 parts by weight
- Ethanolamine 1 part by weight

### (Comparative Example 3-2: Magenta Ink 7A)

- (a) Polymerization initiator: exemplary compound (B-4) 4 parts by weight
- (b) Polymerizable compound:
   Compound A (having the above structure) 50 parts by weight
   Compound B (having the above structure) 40 parts by weight
- (d) Colorant (magenta dispersion 1A) 5 parts by weight
- Ethanolamine 1 part by weight

The crude magenta inks 1A to 7A prepared as described above were filtered through a filter having an absolute filtration rating of 2µm, to give magenta inks 1A to 7A.

### (Example 4-1: Black ink 1A)

- (a) Polymerization initiator: exemplary compound (B-4) 3 parts by weight
- (b) Polymerizable compound:
   Compound C (having the above structure) 30 parts by weight
   Compound D (having the above structure) 10 parts by weight
   Stearyl acrylate 50 parts by weight
- (c) Sensitizing dye: compound (C-22) shown above 1 part by weight
- (d) Colorant (black dispersion 1A) 5 parts by weight
- Polymerization inhibitor (CUPFERRON AI, manufactured by Wako Pure Chemical Industries) 1 part by weight

### (Example 4-2: Black Ink 2A)

- (a) Polymerization initiator: exemplary compound (B-31) 3 parts by weight
- (b) Polymerizable compound:
   Compound C (having the above structure) 30 parts by weight
   Compound D (having the above structure) 10 parts by weight
   Stearyl acrylate 50 parts by weight
- (c) Sensitizing dye: compound (C-4) shown below 1 part by weight
- (d) Colorant (black dispersion 1A) 5 parts by weight
- Polymerization inhibitor (CUPFERRON AI, manufactured by Wako Pure Chemical Industries) 1 part by weight

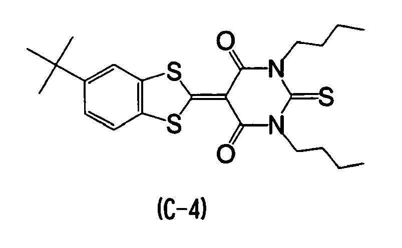

### (Comparative Example 4-1:Black Ink 3A)

- (a) Polymerization initiator: triphenylsulfonium hexafluorophosphate salt 3 parts by weight
- (b) Polymerizable compound;
   Compound C (having the above structure) 30 parts by weight
   Compound D (having the above structure) 10 parts by weight
   Stearyl acrylate 50 parts by weight
- (c) Sensitizing dye: compound (C-4) shown above 1 part by weight
- (d) Colorant (black dispersion 1 A) 5 parts by weight
- Polymerization inhibitor (CUPFERRON AI, manufactured by Wako Pure Chemical Industries) 1 part by weight

The crude black inks 1A to 3A prepared as described above were filtered through a filter having an absolute filtration rating of 2 µm, to give black inks 1A to 3A.

The ink viscosity of each of the ink compositions prepared in Examples and Comparative Examples above was in the range of 7 to 20 mPa·s at the ink ejection temperature.

### (Inkjet Image Recording)

Images were printed on supports (recording media) by a commercially available inkjet recording apparatus having piezoelectric inkjet nozzles, using each of the inks thus prepared in the Examples and Comparative Examples above. The supports (recording media) used were a grained aluminum support, a printable surface-treated transparent biaxially stretched polypropylene film, a soft polyvinyl chloride sheet, a cast-coated paper, and a commercially available recycled paper.

The ink-supplying system of the inkjet recording apparatus had a stock tank, a supply pipe, an ink-supplying tank immediately before the inkjet head, a filter, and a piezoelectric inkjet head; and the region from the ink-supplying tank to the inkjet head was thermally insulated and heated. Temperature sensors were respectively placed at the ink-supplying tank and near the inkjet head nozzles. Temperature control was conducted such that the temperature of the nozzle region was always maintained at 70°C±2°C. The piezoelectric inkjet head ejected 8 to 30 pl multi-sized dots at a definition of 720 × 720 dpi. After the deposition of each ink, the ink was irradiated with rays having a peak wavelength of 395 nm emitted from a UV-LED light source (manufactured by UV PROCESS SUPPLY) which was condensed to give an exposure plane illuminance of 100 mW/cm² on the recording medium. The exposure system, the main scanning speed and the ejection frequency were adjusted such that the irradiation was started 0.1 second after the deposition of the ink. The exposure energy was applied while the exposure period was made variable. The "dpi" in the invention means the number of dots per 2.54 cm.

Each of the inks obtained in Examples and Comparative Examples was ejected at an environmental temperature of 25°C and then irradiated with the UV-LED rays.

### <Evaluation of Inkjet Image>

Each of the formed image was evaluated with respect to the curing sensitivity, odor, ink bleeding on the grained aluminum support, adhesiveness, printing durability, and storage stability, according to the methods described below.

### (Measurement of Curing Sensitivity)

The amount of exposure energy (mJ/cm²) that was necessary to eliminate the adhesiveness on the image surface after UV irradiation was defined as curing sensitivity. A smaller value indicates a higher sensitivity.

### (Evaluation of Odor)

The odor of the image printed on a commercially available recycled paper was evaluated according to the following criteria.
A: Ink hardly penetrated and there was no odor derived from polymerization initiator.
B: Ink slightly penetrated and there was slight odor derived from polymerization initiator.
C: Ink clearly penetrated to the back side and there was strong odor derived from polymerization initiator.

### (Evaluation of Ink Bleeding on Grained Aluminum Support)

The ink bleeding of the image printed on a grained aluminum support was evaluated according to the following criteria:
A: No ink bleeding was observed between neighboring dots.
B: Slight ink bleeding of dots was observed.
C: Distinct ink bleeding of dots and blurring of image were observed.

### (Evaluation of the Adhesiveness to Grained Aluminum Support)

Two samples were prepared for each printed image. One of the samples was not subjected to a further treatment after the completion of printing. The other sample was cut at an interval of 1 mm to give 11 lines in each of the vertical direction and the horizontal direction so that 100 squares each with a side of 1mm were formed, according to JIS K5400, the disclosures of which are incorporated herein by reference. A SELLOTAPE (registered trademark) was adhered onto each of the printing faces and peeled rapidly at an angle of 90 degrees. The appearance of the printed image remaining without being peeled or the appearance of the partial images in the squares remaining without being peeled was evaluated according to the following criteria:
A: No peeling of the printed image was observed even in the tape-peeling test on the squares. B: Slight ink peeling was observed in the tape-peeling test on the squares, but almost no peeling was observed in the tape-peeling test on the intact image.
C: Images peeled easily in the tape-peeling test on each of the intact image and square-cut image

### (Evaluation of Printing Durability)

Images were printed continuously by a Heidel KOR-D printing machine, using the image printed on the grained aluminum support prepared above as the printing plate. The number of sheets printed using each printing plate was considered as the indicator of printing durability and used for the relative comparison, (assuming the printing durability in Example 1-1 as 100). A greater value indicates a higher printing durability and is preferable.

### (Evaluation of Storage Stability)

Each of the inks prepared was stored at 75%RH and 60°C for three days. Then, the viscosity of the ink was determined at the ejection temperature, and the increase in ink viscosity was determined in terms of the viscosity ratio between after and before the storage (viscosity after storage/viscosity before storage). When the viscosity change is smaller (i.e., the viscosity ratio is closer to 1.0), the storage stability is higher. When the viscosity ratio is less than 1.5, the storage stability is satisfactory.

The results of these evaluations are shown in the following Table 2.

**Table 2**

| | Curing sensitivity (mJ/cm²) | Odor | Ink bleeding | Adhesiveness | Printing durability | Storage stability |
|---|---|---|---|---|---|---|
| Example 1-1 | 100 | A | A | A | 100 | A |
| Example 1-2 | 90 | A | A | A | 120 | A |
| Comparative example 1-1 | 200 | B | B | C | 60 | B |
| Example 2-1 | 100 | A | A | A | 90 | A |
| Example 2-2 | 120 | A | A | A | 90 | A |
| Example 2-3 | 80 | A | A | A | 150 | A |
| Example 2-4 | 130 | A | A | A | 80 | A |
| Comparative Example 2-1 | 180 | B | B | B | 60 | B |
| Comparative Example 2-2 | 200 | B | B | B | 60 | B |
| Example 3-1 | 100 | A | A | A | 100 | A |
| Example 3-2 | 110 | A | A | A | 90 | A |
| Example 3-3 | 90 | A | A | A | 150 | A |
| Example 3-4 | 90 | A | A | A | 150 | A |
| Example 3-5 | 90 | A | A | A | 150 | A |
| Comparative Example 3-1 | 300 | B | B | C | 50 | B |
| Comparative Example 3-2 | 1000 | A | A | C | 10 | A |
| Example 4-1 | 100 | A | A | A | 100 | A |
| Example 4-2 | 90 | A | A | A | 120 | A |
| Comparative Example 4-1 | 200 | B | B | C | 60 | B |

As is apparent from Table 2, all of the ink compositions according to the invention obtained in Examples 1-1 to 4-2 were highly sensitive to irradiation with active radiation rays and superior in storage stability. When these ink compositions of the invention were used for the formation of images on aluminum supports, high-quality images were obtained without dot bleeding. The obtained images were also superior in the adhesiveness to the supports. Further, printing plates prepared by using the ink compositions of the invention were superior in printing durability. Even when the ink compositions of the invention were used for the formation of images on a recycled paper sheets, the ink cured sufficiently and did not penetrate to the back side nor generate the odor derived from the polymerization initiator.
In addition, when ink bleeding and adhesiveness to the supports were evaluated using a printable surface-treated transparent biaxially stretched polypropylene film, a soft polyvinyl chloride sheet, a cast-coated paper, and a commercially available recycled paper instead of the aluminum support, similar results to those in Table 2 were obtained. Further, when a quality paper was used in the evaluation of odor, the ink cured sufficiently and did not penetrate to the back face nor generate the odor derived from polymerization initiator.

### <<Preparation 2 of Pigment Dispersion>>

Pigment dispersions 1, respectively for yellow, magenta, cyan, black, and white, were prepared according to the method described below. The dispersing operation was conducted with a known dispersing apparatus in a suitably selected dispersing condition such that the average particle diameter of the pigment particles became 0.05 to 0.3 µm, followed by filtration under heating.

### (Yellow Pigment Dispersion 1B)

- C.I. Pigment Yellow 13 20 parts by weight
- Polymer dispersant (SOLSPERSE series, manufactured by Zeneca) 20 parts by weight
- Diethyleneglycol divinyl ether (manufactured by BASF) 60 parts by weight

### (Magenta Pigment Dispersion 1B)

- C.I. Pigment Red 57:1 20 parts by weight
- Polymer dispersant (SOLSPERSE series, manufactured by Zeneca) 20 parts by weight
- Diethyleneglycol divinyl ether (manufactured by BASF) 60 parts by weight

### (Cyan Pigment Dispersion 1B)

- C.I. Pigment blue 15:3 20 parts by weight
- Polymer dispersant (SOLSPERSE series, manufactured by Zeneca) 20 parts by weight
- Diethyleneglycol divinyl ether (manufactured by BASF) 60 parts by weight

### (Black Pigment Dispersion 1B)

- C.I. Pigment black 7 20 parts by weight
- Polymer dispersant (SOLSPERSE series, manufactured by Zeneca) 20 parts by weight
- Diethylene glycol divinyl ether (manufactured by BASF) 60 parts by weight

### (White Pigment Dispersion 1B)

- Titanium oxide (with an average particle diameter of 0.15 µm and a refractive index of 2.52) 25.00 parts by weight
- Neutral polymer Dispersant PB822 (manufactured by Ajinomoto-Fine-Techno Co., Inc.) 1.25 parts by weight
- Fluorescent brightener (9,10-dibutoxyanthracene) 1.00 part by weight
- Diethyleneglycol divinyl ether (manufactured by BASF) 60 parts by weight

### (Yellow Pigment Dispersion 2B)

- C.I. Pigment Yellow 13 20 parts by weight
- Polymer dispersant (SOLSPERSE series, manufactured by Zeneca) 20 parts by weight
- OXT-221 (manufactured by Toagosei Co., Ltd.) 60 parts by weight

### (Magenta Pigment Dispersion 2B)

- C.I. Pigment Red 57:1 20 parts by weight
- Polymer dispersant (SOLSPERSE series, manufactured by Zeneca) 20 parts by weight
- OXT-221 (manufactured by Toagosei Co., Ltd.) 60 parts by weight

### (Cyan Pigment Dispersion 2B)

- C.I. Pigment blue 15:3 20 parts by weight
- Polymer dispersant (SOLSPERSE series, manufactured by Zeneca) 20 parts by weight
- OXT-221 (manufactured by Toagosei Co., Ltd.) 60 parts by weight

### (Black Pigment Dispersion 2B)

- C.I. Pigment black 7 20 parts by weight
- Polymer dispersant (SOLSPERSE series, manufactured by Zeneca) 20 parts by weight
- OXT-221 (manufactured by Toagosei Co., Ltd.) 60 parts by weight

### (White Pigment Dispersion 2B)

- Titanium oxide (with an average particle diameter of 0.15 µm and a refractive index of 2.52) 25.00 parts by weight
- Neutral polymer Dispersant PB822 (manufactured by Ajinomoto-Fine-Techno Co., Inc.) 1.25 parts by weight
- Fluorescent brightener (9,10-dibutoxyanthracene) 1.00 part by weight
- OXT-221 (manufactured by Toagosei Co., Ltd.) 60 parts by weight

### <<Preparation 2-1 of Ink Composition>>

### (Example 5-1)

The following ink compositions for yellow, cyan, magenta, black, and white (yellow ink 1B, cyan ink 1B, magenta ink 1B, black ink 1B, and white ink 1B) were prepared.

### (Yellow Ink 1B)

- (a) Polymerization initiator: exemplary compound (B-4) 5 parts by weight
- (b) Polymerizable compound:
   triethylene glycol diacrylate 44 parts by weight
   1,4-butanediol diacrylate 41 parts by weight
- (c) Sensitizing dye: 9,10-dibutoxyanthracene 3 parts by weight
- (d) Colorant: yellow pigment dispersion 1B 5 parts by weight
- Polymerization inhibitor [CUPFERRON A1, (manufactured by Wako Pure Chemical Industries)] 1 part by weight
- Surfactant: BYK307 (manufactured by BYK Chemie) 1 part by weight

### (Magenta Ink 1B)

- (a) Polymerization initiator: exemplary compound (B-4) 5 parts by weight
- (b) Polymerizable compound
   triethylene glycol diacrylate 44 parts by weight
   1,4-butanediol diacrylate 41 parts by weight
- (c) Sensitizing dye: 9,10-dibutoxyanthracene 3 parts by weight
- (d) Colorant: magenta pigment dispersion 1B 5 parts by weight
- Polymerization inhibitor [CUPFERRON A1, (manufactured by Wako Pure Chemical Industries)] 1 part by weight
- Surfactant: BYK307 (manufactured by BYK Chemie) 1 part by weight

### (Cyan Ink 1B)

- (a) Polymerization initiator: exemplary compound (B-4) 5 parts by weight
- (b) Polymerizable compound
   triethylene glycol diacrylate 44 parts by weight
   1,4-butanediol diacrylate 41 parts by weight
- (c) Sensitizing dye: 9,10-dibutoxyanthracene 3 parts by weight
- (d) Colorant: cyan pigment dispersion 1B 5 parts by weight
- Polymerization inhibitor [CUPFERRON A1, (manufactured by Wako Pure Chemical Industries)] 1 part by weight
- Surfactant: BYK307 (manufactured by BYK Chemie) 1 part by weight

### (Black Ink 1B)

- (a) Polymerization initiator: exemplary compound (B-4) 5 parts by weight
- (b) Polymerizable compound:
   triethylene glycol diacrylate 45 parts by weight
   1,4-butanediol diacrylate 41 parts by weight
- (c) Sensitizing dye: 9,10-dibutoxyanthracene 3 parts by weight
- (d) Colorant: black pigment dispersion 1B 5 parts by weight
- Polymerization inhibitor [CUPFERRON A1, (manufactured by Wako Pure Chemical Industries)] 1 part by weight
- Surfactant: BYK307 (manufactured by BYK Chemie) 1 part by weight

### (White Ink 1B)

- (a) Polymerization initiator: exemplary compound (B-4) 5 parts by weight
- (b) Polymerizable compound:
   triethylene glycol diacrylate 45 parts by weight
   1,4-butanediol diacrylate 41 parts by weight
- (c) Sensitizing dye: 9,10-dibutoxyanthracene 3 parts by weight
- (d) Colorant: white pigment dispersion 1B 5 parts by weight
- Polymerization inhibitor [CUPFERRON A1, (manufactured by Wako Pure Chemical Industries)] 1 part by weight
- Surfactant: BYK307 (manufactured by BYK Chemie) 1 part by weight

The crude inks thus prepared were filtered through a filter having an absolute filtration accuracy of 2 µm to form inks of the respective colors.

### <<Inkjet Image Recording)>>

### (Evaluation of Multicolor Image)

Images were printed on recording media by a commercially available inkjet recording apparatus having piezoelectric inkjet nozzles.

The ink-supplying system of the inkjet recording apparatus had a stock tank, a supply pipe, an ink-supplying tank immediately before the inkjet head, a filter, and a piezoelectric inkjet head; and the region from the ink-supplying tank to the inkjet head was thermally insulated and heated. Temperature sensors were respectively placed at the ink-supplying tank and near the inkjet head nozzles. Temperature control was conducted such that the temperature of the nozzle region was always maintained at 70°C±2°C. The piezoelectric inkjet head ejected 8 to 30 pl multi-sized dots at a definition of 720 × 720 dpi. After the deposition of each ink, the ink was irradiated with UV radiation which was condensed to give an exposure plane illuminance of 100 mW/cm² on the recording medium. The exposure system, the main scanning speed and the ejection frequency were adjusted such that the irradiation was started 0.1 second after the deposition of the ink. The exposure energy was applied while the exposure period was made variable. The "dpi" in the invention means the number of dots per 2.54 cm.

The inks thus prepared were ejected at an environment temperature of 25°C in the order of black, cyan, magenta, and yellow. After deposition of the ink of each color, the ink was irradiated with ultraviolet light at a constant total exposure energy per color of 150 mJ/cm² by using a metal halide lamp VZERO085 manufactured by Integration Technology.

The recording media used for the color recording were a grained aluminum support, a printable surface-treated transparent biaxially stretched polypropylene film, a soft polyvinyl chloride sheet, a cast-coated paper, and a commercially available recycled paper. One each recording media, high-resolution images were formed without dot bleeding. Even when the ink compositions of the invention were used for the formation of images on a high-quality paper sheet, the ink cured sufficiently and did not penetrate to the back side nor generate the odor derived from the polymerization initiator.

In addition, the inks recorded on the film were sufficiently flexible; no crack developed in the ink even when the film was bent, and satisfactory results were obtained in the adhesiveness test by peeling with the SELLOTAPE.

### «Preparation 2-2 of Ink Composition»

The following ink compositions (yellow ink 2B, magenta inks 2B to 17B, cyan inks 2B, black ink 2B, and white ink 2B) were prepared. These ink compositions are usable for image forming by radical polymerization.

### (Example 5-2)

### (Yellow Ink 2B)

- (a) Polymerization initiator (B-31) 5 parts by weight
- (b) Polymerizable compound:
   triethylene glycol diacrylate 44 parts by weight
   1,4-butanediol diacrylate 41 parts by weight
- (c) Sensitizing dye: 9,10-dibutoxyanthracene 3 parts by weight
- (d) Colorant: yellow pigment dispersion 1B 5 part by weight
- Polymerization inhibitor [CUPFERRON A1, (manufactured by Wako Pure Chemical Industries)] 1 part by weight
- Surfactant: BYK307 (manufactured by BYK Chemie) 1 part by weight

### (Magenta Ink 2B)

- (a) Polymerization initiator (B-31) 5 parts by weight
- (b) Polymerizable compound:
   triethylene glycol diacrylate 44 parts by weight
   1,4-butanediol diacrylate 41 parts by weight
- (c) Sensitizing dye: 9,10-dibutoxyanthracene 3 parts by weight
- (d) Colorant: magenta pigment dispersion 1B 5 part by weight
- Polymerization inhibitor [CUPFERRON A1, (manufactured by Wako Pure Chemical Industries)] 1 part by weight
- Surfactant: BYK307 (manufactured by BYK Chemie) 1 part by weight

### (Cyan Ink 2B)

- (a) Polymerization initiator (B-31) 5 parts by weight
- (b) Polymerizable compound:
   triethylene glycol diacrylate 44 parts by weight
   1,4-butanediol diacrylate 41 parts by weight
- (c) Sensitizing dye: 9,10-dibutoxyanthracene 3 parts by weight
- (d) Colorant: cyan pigment dispersion 1B 5 part by weight
- Polymerization inhibitor [CUPFERRON Al, (manufactured by Wako Pure Chemical Industries)] 1 part by weight
- Surfactant: BYK307 (manufactured by BYK Chemie) 1 part by weight

### (Black Ink 2B)

- (a) Polymerization initiator (B-31) 5 parts by weight
- (b) Polymerizable compound:
   triethylene glycol diacrylate 44 parts by weight
   1,4-butanediol diacrylate 41 parts by weight
- (c) Sensitizing dye: 9,10-dibutoxyanthracene 3 parts by weight
- (d) Colorant: black pigment dispersion 1B 5 part by weight
- Polymerization inhibitor [CUPFERRON A1, (manufactured by Wako Pure Chemical Industries)] 1 part by weight
- Surfactant: BYK307 (manufactured by BYK Chemie) 1 part by weight

### (White Ink 2B)

- (a) Polymerization initiator (B-31) 5 parts by weight
- (b) Polymerizable compound:
   triethylene glycol diacrylate 44 parts by weight
   1,4-butanediol diacrylate 41 parts by weight
- (c) Sensitizing dye: 9,10-dibutoxyanthracene 3 parts by weight
- (d) Colorant: white pigment dispersion 1B 5 part by weight
- Polymerization inhibitor [CUPFERRON A1, (manufactured by Wako Pure Chemical Industries)] 1 part by weight
- Surfactant: BYK307 (manufactured by BYK Chemie) 1 part by weight

The crude inks thus prepared were filtered through a filter having an absolute filtration accuracy of 2 µm to form inks of the respective colors.

### (Example 5-3: Magenta Ink 3B)

Magenta ink 3B was prepared in the same manner as the preparation of magenta ink 1B prepared in Example 5-1, except that the sensitizing dye 9,10-dibutoxyanthracene used in magenta ink 1B was replaced with DAROCUR ITX (manufactured by Ciba Specialty Chemicals).

### (Example 5-4: Magenta Ink 4B)

Magenta ink 4B was prepared in the same manner as the preparation of magenta ink 1B prepared in Example 5-1, except that the sensitizing dye "9,10-dibutoxyanthracene" used in magenta ink 1B was replaced with 9,10-dimethylanthracene.

### (Example 5-5: Magenta Ink 5B)

Magenta ink 5B was prepared in the same manner as the preparation of magenta ink 1B prepared in Example 5-1, except that the sensitizing dye "9,10-dibutoxyanthracene" used in magenta ink 5-1 was replaced with sensitizing dye Z1 having the following structure.

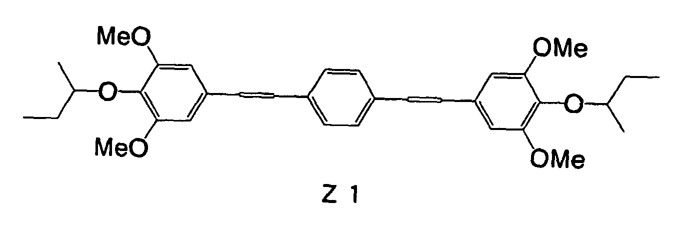

### (Example 5-6: Magenta Ink 6B)

Magenta ink 6B was prepared in the same manner as the preparation of magenta ink 1B prepared in Example 5-1, except that the sensitizing dye "9,10-dibutoxyanthracene" used in magenta ink 5-1 was replaced with sensitizing dye Z2 having the following structure.

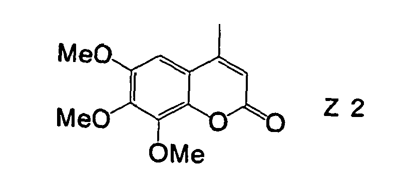

### (Example 5-7: Magenta Ink 7B)

Magenta ink 7B was prepared in the same manner as the preparation of magenta ink 1B prepared in Example 5-1, except that the polymerization initiator "exemplary compound (B-4)" used in magenta ink 1B was replaced with the exemplary compound (I-2).

### (Example 5-8: Magenta Ink 8B)

Magenta ink 8B was prepared in the same manner as the preparation of magenta ink 1B prepared in Example 5-1, except that the polymerization initiator "exemplary compound (B-1)" used in magenta ink 1B was replaced with the exemplary compound (K-4).

### (Example 5-9: Magenta Ink 9B)

Magenta ink 9B was prepared in the same manner as the preparation of magenta ink 1B prepared in Example 5-1, except that the polymerization initiator "exemplary compound (B-1)" used in magenta ink 1B was replaced with the exemplary compound (Q-4).

### (Example 5-10: Magenta Ink 10B)

Magenta ink 10B was prepared in the same manner as the preparation of magenta ink 1B prepared in Example 5-1, except that the polymerization initiator "exemplary compound (B-1)" used in magenta ink 1B was replaced with the exemplary compound (R-4).

### (Example 5-11: Magenta Ink 11B)

Magenta ink 5-11 was prepared in the same manner as the preparation of magenta ink 1B prepared in Example 5-1, except that 3 parts by weight of N-phenylglycine (cosensitizer) was further added to the ink.

### (Example 5-12: Magenta Ink 12B)

Magenta ink 12B was prepared in the same manner as the preparation of magenta ink 1B prepared in Example 5-1, except that 3 parts by weight of CGI-7460 (polymerization initiator, manufactured by Ciba Specialty Chemicals) was further added to the ink.

### (Comparative Example 5-1: Magenta Ink 13B)

- Polymerization initiator: triphenylsulfonium hexafluorophosphate salt 5 parts by weight
- Polymerizable compound
   triethylene glycol diacrylate 44 parts by weight,
   1,4-butanediol diacrylate 41 parts by weight
- Sensitizing dye: 9, 10-dibutoxyanthracene 3 parts by weight
- Colorant: magenta pigment dispersion 1B 5 parts by weight
- Polymerization inhibitor [CUPFERRON A1, (manufactured by Wako Pure Chemical Industries)] 1 part by weight
- Surfactant: BYK307 (manufactured by BYK Chemie) 1 part by weight

### (Comparative Example 5-2: Magenta Ink 14B)

- Polymerization initiator: UVI-6992 (manufactured by Dow Chemical Company) 5 parts by weight
- Polymerizable compound:
   triethylene glycol diacrylate 44 parts by weight
   1,4-butanediol diacrylate 41 parts by weight
- Sensitizing dye: 9,10-dibutoxyanthracene 3 parts by weight
- Colorant: magenta pigment dispersion 1B 5 parts by weight
- Polymerization inhibitor [CUPFERRON Al, (manufactured by Wako Pure Chemical Industries)] 1 part by weight
- Surfactant: BYK307 (manufactured by BYK Chemie) 1 part by weight

### (Comparative Example 5-3: Magenta Ink 15B)

- Polymerization initiator (IR-907, manufactured by Ciba Specialty Chemicals) 8 parts by weight
- Polymerizable compound:
   triethylene glycol diacrylate 44 parts by weight
   1,4-butanediol diacrylate 41 parts by weight
- Colorant: magenta pigment dispersion 1B 5 parts by weight
- Polymerization inhibitor [CUPFERRON A1, (manufactured by Wako Pure Chemical Industries)] 1 part by weight
- Surfactant: BYK307 (manufactured by BYK Chemie) 1 part by weight

### (Example 5-13: Magenta Ink 16B)

Magenta ink 16B was prepared in the same manner as the preparation of magenta ink 1B prepared in Example 5-1, except that the colorant "magenta pigment dispersion 1B" used in magenta ink 1B was replaced with an oil-soluble dye "compound M-1 (oxidation potential: + 1.37 V)" having the following structure.

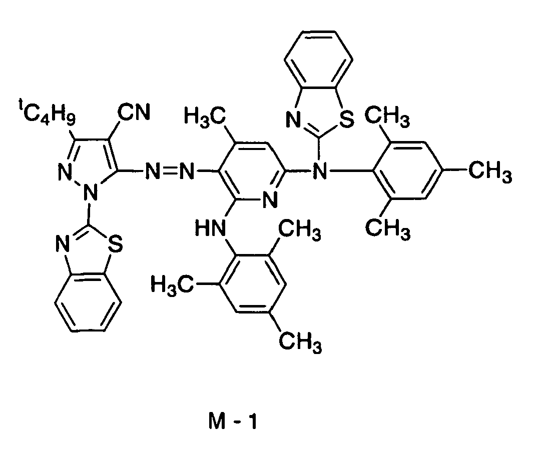

### (Example 5-14: Magenta Ink 17B)

Magenta ink 17B was prepared in the same manner as the preparation of magenta ink 1B prepared in Example 5-1, except that the colorant "magenta pigment dispersion 1B" used in magenta ink 5-1B was replaced with an oil-soluble dye "compound M-2 (oxidation potential: +0.94 V)" having the following structure.

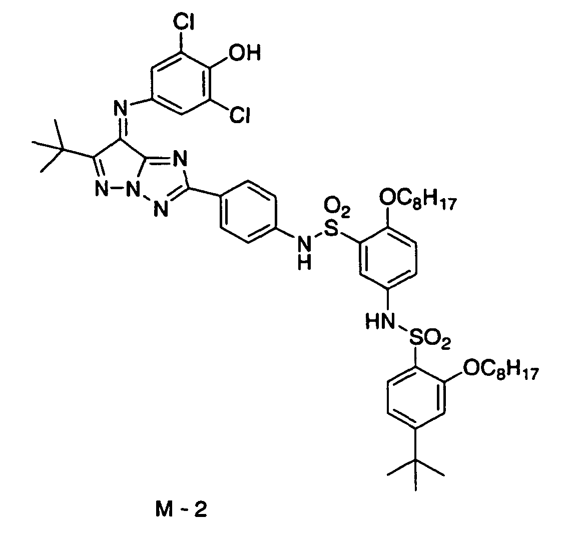

Crude magenta inks 3B to 17B thus prepared were filtered through a filter having an absolute filtration accuracy of 2 µm filter, to form magenta inks 3B to 17B, respectively.

### < <Inkjet Image Recording > > (Evaluation of Multicolor Image)

Color images were formed by using yellow ink 2B, magenta inks 2B to 17B, cyan ink 2B, black ink 2B, and white ink 2B thus prepared and the inks 1B in various colors used in Example 5-1, in the same manner as in Example 5-1.

Specifically, the inks thus prepared were ejected at an environment temperature of 25°C in the order of white, black, cyan, magenta, and yellow. After deposition of the ink of each color, the ink was irradiated with ultraviolet light at a constant total exposure energy per color of 150 mJ/cm² by using a metal halide lamp VZER0085 manufactured by Integration Technology.

The recording media used for the color recording were a grained aluminum support, a printable surface-treated transparent biaxially stretched polypropylene film, a soft polyvinyl chloride sheet, a cast-coated paper, and a commercially available recycled paper. One each recording media, high-resolution images were formed without dot bleeding. Even when the ink compositions of the invention were used for the formation of images on a high-quality paper sheet, the ink cured sufficiently and did not penetrate to the back side nor generate the odor derived from the polymerization initiator.
In addition, the inks recorded on the film were sufficiently flexible; no crack developed in the ink even when the film was bent, and satisfactory results were obtained in the adhesiveness test by peeling with the SELLOTAPE.

### <<Evaluation of Inkjet Image>>

Each of the ink compositions (magenta inks 1B to 17B) prepared in Examples 5-1 to 5-14 and Comparative Examples 5-1 to 5-3 was evaluated with respect to the curing sensitivity, penetration into commercially available recycle paper, ink bleeding on the grained aluminum support, adhesiveness, odor, printing durability, and storage stability, according to the methods described below.

### (Measurement of Curing Sensitivity)

The amount of exposure energy (mJ/cm²) that was necessary to eliminate the adhesiveness on the image surface after UV irradiation was defined as curing sensitivity. A smaller value indicates a higher sensitivity.

### (Penetration into Commercially Available Recycle Paper)

Penetration property was evaluated with respect to an image printed on a commercially available recycled paper, according to the following criteria:
A: Almost no penetration of ink and no odor derived from residual monomer
B: Slight penetration of ink and slight odor derived from residual monomer
C: Significant penetration of ink to the rear side and strong odor derived from residual monomer

### (Evaluation of Ink Bleeding on Grained Aluminum Support)

The ink bleeding of the image printed on a grained aluminum support was evaluated according to the following criteria:
A: No ink bleeding was observed between neighboring dots.
B: Slight ink bleeding of dots was observed.
C: Distinct ink bleeding of dots and blurring of image were observed.

### (Evaluation of the Adhesiveness to Grained Aluminum Support)

Two samples were prepared for each printed image. One of the samples was not subjected to a further treatment after the completion of printing. The other sample was cut at an interval of 1 mm to give 11 lines in each of the vertical direction and the horizontal direction so that 100 squares each with a side of 1mm were formed, according to JIS K5400, the disclosures of which are incorporated herein by reference. A SELLOTAPE (registered trademark) was adhered onto each of the printing faces and peeled rapidly at an angle of 90 degrees. The appearance of the printed image remaining without being peeled or the appearance of the partial images in the squares remaining without being peeled was evaluated according to the following criteria:
A: No peeling of the printed image was observed even in the tape-peeling test on the squares. B: Slight ink peeling was observed in the tape-peeling test on the squares, but almost no peeling was observed in the tape-peeling test on the intact image.
C: Images peeled easily in the tape-peeling test on each of the intact image and square-cut image

### (Evaluation of Odor)

The odor of the image printed on a commercially available recycled paper was evaluated according to the following criteria.
A: Ink hardly penetrated and there was no odor derived from polymerization initiator.
B: Ink slightly penetrated and there was slight odor derived from polymerization initiator.
C: Ink clearly penetrated to the back side and there was strong odor derived from polymerization initiator.

### (Evaluation of Printing Durability)

Images were printed continuously by a Heidel KOR-D printing machine, using the image printed on the grained aluminum support prepared above as the printing plate. The number of sheets printed using each printing plate was considered as the indicator of printing durability and used for the relative comparison, (assuming the printing durability in Example 5-1 as 100). A greater value indicates a higher printing durability and is preferable.

### (Evaluation of Storage Stability)

Each of the inks prepared was stored at 75%RH and 60°C for three days. Then, the viscosity of the ink was determined at the ejection temperature, and the increase in ink viscosity was determined in terms of the viscosity ratio between after and before the storage (viscosity after storage/viscosity before storage). When the viscosity change is smaller (i.e., the viscosity ratio is closer to 1.0), the storage stability is higher. When the viscosity ratio is greater than 1.5, there are cases in which clogging occurs and ejection is disadvantageously inhibited.

The results of these evaluations are shown in the following Table 3.

**Table 3**

| | Ink Number | Curing Sensitivity (mJ/cm²) | Penetration Property | Ink Bleed | Adhesiveness | Odor | Printing durability | Storage stability |
|---|---|---|---|---|---|---|---|---|
| Example 5-1 | Magenta ink IB | 150 | A | A | A | A | 100 | 1.2 |
| Example 5-2 | Magenta ink 2B | 140 | A | A | A | A | 110 | 1.2 |
| Example 5-3 | Magenta ink 3B | 180 | A | A | A | A | 90 | 1.2 |
| Example 5-4 | Magenta ink 4B | 140 | A | A | A | A | 110 | 1.2 |
| Example 5-5 | Magenta ink 5B | 130 | A | A | A | A | 120 | 1.2 |
| Example 5-6 | Magenta ink 6B | 135 | A | A | A | A | 115 5 | 1.2 |
| Example 5-7 | Magenta ink 7B | 150 | A | A | A | A | 100 | 1.2 |
| Example 5-8 | Magenta ink 8B | 150 | A | A | A | A | 100 | 1.2 |
| Example 5-9 | Magenta ink 9B | 140 | A | A | A | A | 110 | 1.2 |
| Example 5-10 | Magenta ink 10B | 140 | A | A | A | A | 110 | 1.2 |
| Example 5-11 | Magenta ink 11B | 130 | A | A | A | A | 120 | 1.2 |
| Example 5-12 | Magenta ink 12B | 130 | A | A | A | A | 120 | 1.2 |
| Comparative Example 5-1 | Magenta ink 13B | 400 | B | B | C | B | 50 | 1.5 |
| Comparative Example 5-2 | Magenta ink 14B | 400 | B | B | C | B | 60 | 1.5 |
| Comparative Example 5-3 | Magenta ink 15B | 400 | B | B | C | B | 60 | 1.5 |
| Example 5-13 | Magenta ink 16B | 130 | A | A | A | A | 120 | 1.2 |
| Example 5-14 | Magenta ink 17B | 120 | A | A | A | A | 130 | 1.2 |

### <<Preparation 2-3 of Ink Composition> >

### (Example 5-15)

The following ink compositions (yellow ink 3B, cyan ink 3B, magenta ink 18B, black ink 3B, and white ink 3B), each in yellow, cyan, magenta, black, or white color, were prepared.

### (Yellow Ink 3B)

- (d) Colorant: yellow pigment dispersion 2B 5 parts by weight
- (a) Polymerization initiator: exemplary compound (B-4) 6 parts by weight
- (c) Sensitizing dye: 9,10-dibutoxyanthracene 3 parts by weight
- (b) Polymerizable compound:
   monomer: 3,4-epoxycyclohexylmethyl-3',4'-epoxycyclohexanecarboxylate (CELOXIDE 2021A: manufactured by Daicel UCB) 40 parts by weight
   monomer: 3,7-bis(3-oxetanyl)-5-oxanonane (OXT-221: manufactured by Toagosei Co., Ltd.) 46 parts by weight

### (Magenta Ink 18B)

- (a) Polymerization initiator: exemplary compound (B-4) 6 parts by weight
- (b) Polymerizable compound
   monomer: 3,4-epoxycyclohexylmethyl-3',4'-epoxycyclohexanecarboxylate (CELOXIDE 2021 A: manufactured by Daicel UCB) 40 parts by weight
   monomer: 3,7-bis(3-oxetanyl)-5-oxanonane (OXT-221: manufactured by Toagosei Co., Ltd.) 45 parts by weight
- (c) Sensitizing dye: 9,10-dibutoxyanthracene 3 parts by weight
- (d) Colorant: magenta pigment dispersion 2B 5 parts by weight
- Surfactant: BYK307 (manufactured by BYK Chemie) 1 part by weight

### (Cyan Ink 3B)

- (a) Polymerization initiator: exemplary compound (B-4) 6 parts by weight
- (b) Polymerizable compound:
   monomer: 3,4-epoxycyclohexylmethyl-3',4'-epoxycyclohexanecarboxylate (CELOXIDE 2021A: manufactured by Daicel UCB) 40 parts by weight
   monomer: 3,7-bis(3-oxetanyl)-5-oxanonane (OXT 221: manufactured by Toagosei Co., Ltd.) 45 parts by weight
- (c) Sensitizing dye: 9,10-dibutoxyanthracene 3 parts by weight
- (d) Colorant: cyan pigment dispersion 2B 5 parts by weight
- Surfactant: BYK307 (manufactured by BYK Chemie) 1 part by weight

### (Black Ink 3B)

- (a) Polymerization initiator: exemplary compound (B-4) 6 parts by weight
- (b) polymerizable compound:
   monomer: 3,4-epoxycyclohexylmethyl-3',4'-epoxycyclohexanecarboxylate (CELOXIDE 2021A: manufactured by Daicel UCB) 40 parts by weight
   monomer: 3,7-bis(3-oxetanyl)-5-oxanonane (OXT-221: manufactured by Toagosei Co., Ltd.) 45 parts by weight
- (c) Sensitizing dye: 9,10-dibutoxyanthracene 3 parts by weight
- (d) Colorant: black pigment dispersion 2B 5 parts by weight
- Surfactant: BYK307 (manufactured by BYK Chemie) 1 part by weight

### (White Ink 3B)

- (a) Polymerization initiator: exemplary compound (B-4) 6 parts by weight
- (b) polymerizable compound:
   monomer: 3,4-epoxycyclohexylmethyl 3',4'-epoxycyclohexanecarboxylate (CELOXIDE 2021A: manufactured by Daicel UCB) 40 parts by weight
   monomer: 3,7-bis(3-oxetanyl)-5-oxanonane (OXT-221: manufactured by Toagosei Co., Ltd.) 45 parts by weight
- (c) Sensitizing dye: 9,10-dibutoxyanthracene 3 parts by weight
- (d) Colorant: black pigment dispersion 2B 5 parts by weight
- Surfactant: BYK307 (manufactured by BYK Chemie) 1 part by weight

The crude inks thus prepared were filtered through a filter having an absolute filtration accuracy of 2 µm filter, to form inks of the respective colors.

### < <Inkjet Image Recording> > (Evaluation of Multicolor Image)

Color images were formed by using yellow ink 3B, magenta ink 18B, cyan ink 3B, black ink 3B, and white ink 3B thus prepared in the same manner as in Example 5-1.

Specifically, the inks thus prepared were ejected at an environment temperature of 25°C in the order of white, black, cyan, magenta, and yellow. After deposition of the ink of each color, the ink was irradiated with ultraviolet light at a constant total exposure energy per color of 100 mJ/cm² by using a metal halide lamp VZERO085 manufactured by Integration Technology.

The recording media used for the color recording were a grained aluminum support, a printable surface-treated transparent biaxially stretched polypropylene film, a soft polyvinyl chloride sheet, a cast-coated paper, and a commercially available recycled paper. One each recording media, high-resolution images were formed without dot bleeding. Even when the ink compositions of the invention were used for the formation of images on a high-quality paper sheet, the ink cured sufficiently and did not penetrate to the back side nor generate the odor derived from the polymerization initiator.

In addition, the inks recorded on the film were sufficiently flexible no crack developed in the ink even when the film was bent, and satisfactory results were obtained in the adhesiveness test by peeling with the SELLOTAPE.

### «Preparation of ink composition 2-4»

The following ink compositions (magenta inks 19B to 41B) were prepared. These ink compositions are usable for image formation by cation polymerization.

### (Example 5-16: Magenta Ink 19B)

- (a) Polymerization initiator: exemplary compound (B-31) 6 parts by weight
- (b) Polymerizable compound:
   monomer: 3,4-epoxycyclohexylmethyl 3',4'-epoxycyclohexanecarboxylate (CELOXIDE 2021A: manufactured by Daicel UCB) 40 parts by weight
   monomer: 3,7-bis(3-oxetanyl)-5-oxanonane (OXT-221: manufactured by Toagosei Co., Ltd.) 45 parts by weight
- (c) Sensitizing dye: 9,10-dibutoxyanthracene 3 parts by weight
- (d) Colorant: magenta pigment dispersion 2B 5 parts by weight
- Surfactant: BYK307 (manufactured by BYK Chemie) 1 part by weight

### (Example 5-17: Magenta Ink 20B)

Magenta ink 20B was prepared in the same manner as the preparation of magenta ink 18B, except that the sensitizing dye "9,10-dibutoxyanthracene used in magenta ink 18B was replaced with a sensitizing dye "DAROCUR ITX" (manufactured by Ciba Specialty Chemicals).

### (Example 5-18: Magenta Ink 21B)

Magenta ink 21B was prepared in the same manner as the preparation of magenta ink 18B, except that the sensitizing dye "9,10-dibutoxyanthracene" used in magenta ink 18B was replaced with sensitizing dye Z1 having the following structure.

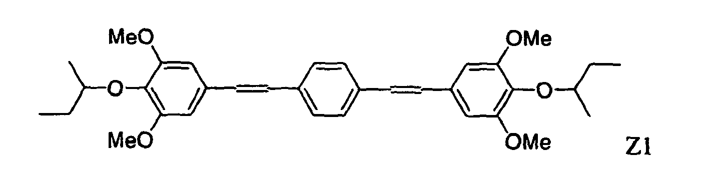

### (Example 5-19: Magenta Ink 22B)

Magenta ink 22 was prepared in the same manner as the preparation of magenta ink 18B, except that the sensitizing dye "9,10-dibutoxyanthracene" used in magenta ink 18B was replaced with sensitizing dye Z2 having the following structure.

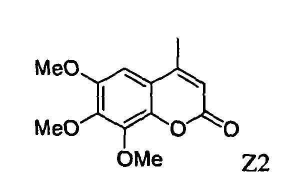

### (Example 5-20: Magenta Ink 23B)

Magenta ink 23B was prepared in the same manner as the preparation of magenta ink 18B, except that the colorant "magenta pigment dispersion 2B" used in magenta ink 18B was replaced with magenta pigment dispersion 1B.

### (Example 5-21: Magenta Ink 24B)

Magenta ink 24B was prepared in the same manner as the preparation of magenta ink 18B, except that the sensitizing dye "9,10-dibutoxyanthracene" used in magenta ink 18B was replaced with phenothiazine.

### (Example 5-22: Magenta Ink 25B)

Magenta ink 25B was prepared in the same manner as the preparation of magenta ink 18B, except that the sensitizing dye "9,10-dibutoxyanthracene" used in magenta ink 18B was replaced with "9,10-dimethylanthracene".

### (Example 5-23: Magenta Ink 26B)

Magenta ink 26B was prepared in the same manner as the preparation of magenta ink 18B, except that the polymerization initiator "exemplary compound (B-4)" used in magenta ink 18B was replaced with the "exemplary compound (I-2)".

### (Example 5-24: Magenta Ink 27B)

Magenta ink 27B was prepared in the same manner as the preparation of magenta ink 18B, except that the polymerization initiator "exemplary compound (B-4)" used in magenta ink 18B was replaced with the "exemplary compound (K-4)".

### (Example 5-25: Magenta Ink 28B)

Magenta ink 28B was prepared in the same manner as the preparation of magenta ink 18B, except that the polymerization initiator "exemplary compound (B-4)" used in magenta ink 18B was replaced with the "exemplary compound (Q-4)".

### (Example 5-26: Magenta Ink 29B)

Magenta ink 29B was prepared in the same manner as the preparation of magenta ink 18B, except that the polymerization initiator "exemplary compound (B-4)" used in magenta ink 18B was replaced with the "exemplary compound (R-4)".

### (Example 5-27: Magenta Ink 30B)

Magenta ink 30B was prepared in the same manner as the preparation of magenta ink 18B, except that the polymerizable compound "OXT-221: manufactured by Toagosei Co., Ltd." used in magenta ink 18B was replaced with "OXT-212: manufactured by Toagosei Co., Ltd.".

### (Example 5-28: Magenta Ink 31B)

Magenta ink 31B was prepared in the same manner as the preparation of magenta ink 18B, except that the polymerizable compound "CELOXIDE 2021A: manufactured by Daicel UCB" used in magenta ink 18B was replaced with polymerizable "compound (C)" having the following structure.

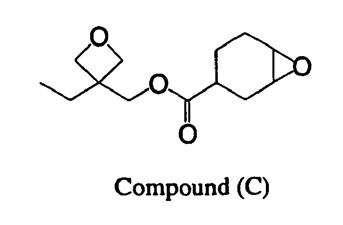

### (Example 5-29: Magenta Ink 32B)

Magenta ink 32B was prepared in the same manner as the preparation of magenta ink 18B, except that 1 part by weight of a basic compound (amine-1 shown below) was further added.

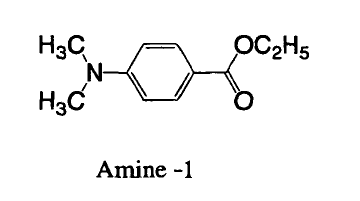

### (Example 5-30: Magenta Ink 33B)

Magenta ink 33B was prepared in the same manner as the preparation of magenta ink 18B, except that 3 parts by weight of diethyleneglycol hexyl ether was further added. *(Example 5-31: Magenta Ink 34B)*

Magenta ink 34B was prepared in the same manner as the preparation of magenta ink 18B, except that the polymerizable compound " CELOXIDE 2021A: manufactured by Daicel UCB" used in magenta ink 18B was replaced with "CELOXIDE 3000: manufactured by Daicel UCB".

### (Example 5-32: Magenta Ink 35B)

Magenta ink 34B was prepared in the same manner as the preparation of magenta ink 18B, except that 5 parts by weight of 3-ethyl-3-hydroxymethyloxetane was further added. *(Comparative Example 5-4: Magenta Ink 36B)*
- Polymerization initiator: UVI-6992 (manufactured by Dow Chemical Company) 6 parts by weight
- Colorant: magenta pigment dispersion 2B 5 parts by weight
- Sensitizing dye: 9,10-dibutoxyanthracene 3 parts by weight
- Polymerizable compound:
   monomer: 3,4-epoxycyclohexylmethyl 3',4'-epoxycyclohexanecarboxylate (CELOXIDE 2021A: manufactured by Daicel UCB) 40 parts by weight
   monomer: 3,7-bis(3-oxetanyl)-5-oxanonane (OXT-221: manufactured by Toagosei Co., Ltd.) 45 parts by weight
- Surfactant: BYK307 (manufactured by BYK Chemie) 1 part by weight

### (Comparative Example 5-5: Magenta Ink 37B)

Magenta ink 37B was prepared in the same manner as the preparation of magenta ink 36B, except that the polymerization initiator "UVI-6992 (manufactured by Dow Chemical Company)" used in magenta ink 36B was replaced with IRGACURE 250 (manufactured by Ciba Specialty Chemicals).

### (Comparative Example 5-6: Magenta Ink 38B)

Magenta ink 38B was prepared in the same manner as the preparation of magenta ink 36B, except that the polymerization initiator "UVI-6992 (manufactured by Dow Chemical Company)" used in magenta ink 36B was replaced with triphenylsulfonium hexafluorophosphate salt.

### (Comparative Example 5-7: Magenta Ink 39B)

Magenta ink 39B was prepared in the same manner as the preparation of magenta ink 36B, except that the polymerization initiator "UVI-6992 (manufactured by Dow Chemical Company)" used in magenta ink 36B was replaced with tri-p-triphenylsulfonium hexafluorophosphate salt.

### (Comparative Example 5-8: Magenta Ink 40B)

Magenta ink 40B was prepared in the same manner as the preparation of magenta ink 36B, except that the sensitizing dye "9,10-dibutoxyanthracene" used in magenta ink 36B was replaced with DAROCUR ITX (manufactured by Ciba Specialty Chemicals).

### (Example 5-33: Magenta Ink 41B)

Magenta ink 41B was prepared in the same manner as the preparation of magenta ink 18B, except that the colorant "magenta pigment dispersion 2B" used in magenta ink 18B was replaced with oil-soluble dye compound M-1 (oxidation potential: + 1.37 V)" having the following structure".

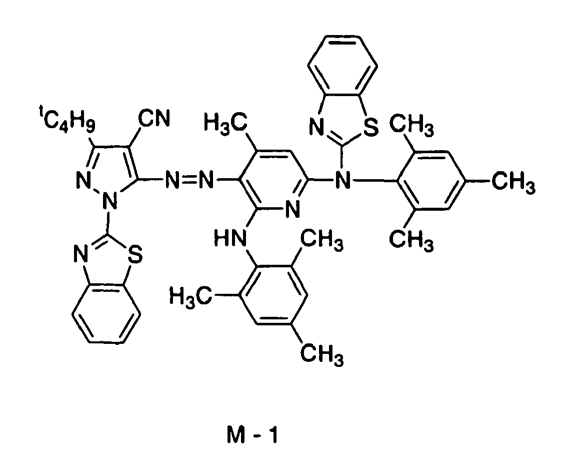

### (Example 5-34: Magenta Ink 42B)

Magenta ink 42B was prepared in the same manner as the preparation of magenta ink 18B, except that the colorant "magenta pigment dispersion 2B" used in magenta ink 18B was replaced with oil-soluble dye "compound M-2 (oxidation potential: +0.94 V)" having the following structure.

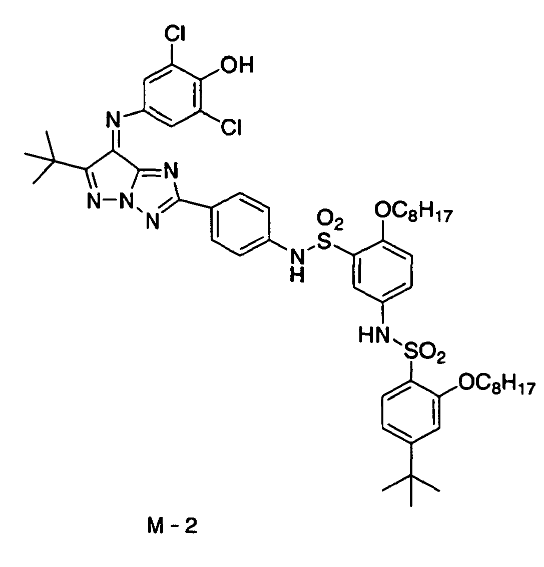

Crude magenta inks 18B to 42B thus prepared were filtered through a filter having an absolute filtration accuracy of 2 µm filter, to form magenta inks 18B to 42B, respectively.

### <<Evaluation of Inkjet Image>>

Each of the ink compositions (magenta inks 18B to 42B) prepared in Examples 5-15 to 5-34 was evaluated with respect to the curing sensitivity, penetration into commercially available recycle paper, ink bleeding on the grained aluminum support, adhesiveness, odor, printing durability, and storage stability, according to the evaluation methods employed for the evaluations of magenta inks 1B to 17B. In the evaluation of the printing durability, the printing durability of Example 5-1 was assumed to be 100.

Results are summarized in Table 4 below.

**Table 4**

| | Ink Number | Curing Sensitivity (mJ/cm²) | Penetration Property | Ink Bleed | Adhesiveness | Odor | Printing durability | Storage stability |
|---|---|---|---|---|---|---|---|---|
| Example 5-15 | Magenta ink 18B | 100 | A | A | A | A | 150 | 1.2 |
| Example 5-16 | Magenta ink 19B | 90 | A | A | A | A | 160 | 1.2 |
| Example 5-17 | Magenta ink 20B | 170 | A | A | A | A | 100 | 1.2 |
| Example 5-18 | Magenta ink 21B | 80 | A | A | A | A | 180 | 1.2 |
| Example 5-19 | Magenta ink 22B | 85 | A | A | A | A | 170 | 1.2 |
| Example 5-20 | Magenta ink 23B | 110 | A | A | A | A | 140 | 1.2 |
| Example 5-21 | Magenta ink 24B | 150 | A | A | A | A | 110 | 1.2 |
| Example 5-22 | Magenta ink 25B | 100 | A | A | A | A | 150 | 1.2 |
| Example 5-23 | Magenta ink 26B | 100 | A | A | A | A | 150 | 1.2 |
| Example 5-24 | Magenta ink 27B | 100 | A | A | A | A | 150 | 1.2 |
| Example 5-25 | Magenta ink 28B | 100 | A | A | A | A | 150 | 1.2 |
| Example 5-26 | Magenta ink 29B | 100 | A | A | A | A | 150 | 1.2 |
| Example 5-27 | Magenta ink 30B | 100 | A | A | A | A | 150 | 1.2 |
| Example 5-28 | Magenta ink 31B | 100 | A | A | A | A | 150 | 1.2 |
| Example 5-29 | Magenta ink 32B | 100 | A | A | A | A | 140 | 1.1 |
| Example 5-30 | Magenta ink 33B | 90 | A | A | A | A | 160 | 1.1 |
| Example 5-31 | Magenta ink 34B | 100 | A | A | A | A | 150 | 1.2 |
| Example 5-32 | Magenta ink 35B | 100 | A | A | A | A | 100 | 1.2 |
| Comp. Ex. 5-4 | Magenta ink 36B | 200 | B | B | C | C | 80 | 1.5 |
| Comp. Ex. 5-5 | Magenta ink 37B | 100 | B | B | C | C | 150 | 2.0 |
| Comp. Ex. 5-6 | Magenta ink 38B | 200 | B | B | C | C | 50 | 1.5 |
| Comp. Ex. 5-7 | Magenta ink 39B | 200 | B | B | C | C | 50 | 1.5 |
| Comp. Ex. 5-8 | Magenta ink 40B | 500 | B | B | C | C | 50 | 1.5 |
| Example 5-33 | Magenta ink 41B | 80 | A | A | A | A | 180 | 1.2 |
| Example 5-34 | Magenta ink 42B | 70 | A | A | A | A | 190 | 1.2 |

As apparent from Tables 3 and 4, all of the ink compositions according to the invention obtained in were highly sensitive to irradiation with active radiation rays and superior in storage stability. When these ink compositions of the invention were used for the formation of images on aluminum supports, high-quality images were obtained without dot bleeding. The obtained images were also superior in the adhesiveness to the supports. Further, printing plates prepared by using the ink compositions of the invention were superior in printing durability. Even when the ink compositions of the invention were used for the formation of images on a recycled paper sheets, the ink cured sufficiently and did not penetrate to the back side nor generate the odor derived from the polymerization initiator.

### (Example 5-35)

### <Image Formation with Light-Emitting Diode (LED)>

Inkjet image recording was performed in the same manner as in Example 1, except that magenta ink 1B prepared in Example 5-1 was used and except that an ultraviolet light-emitting diode (UV-LED) was used instead of the metal halide lamp VZERO085 manufactured by Integration Technology.

The UV-LED used in this Example was NCCU033 manufactured by Nichia Corporation. The LED emits a UV light having a wavelength of 365 nm from a single chip. A light emission at approximately 100 mW can be realized when a current of approximately 500 mA is applied to the chip. Multiple chips arranged at an interval of 7 mm give a power of 0.3 W/cm² on the surface of the recording medium (hereinafter, referred to as medium). The period from ink deposition to exposure and the duration of exposure can be changed by changing the conveyance speed of medium and/or the distance between the head and the LED in the medium-conveyance direction. In this Example, the droplet was exposed to light approximately 0.5 second after ink deposition.

By adequate selection of the distance between the medium and the LED and of the conveyance speed setting, the exposure energy on the medium could be adjusted in the range of 0.01 to 15 J/cm².

### (Example 5-36)

Inkjet image recording was performed in the same manner as in Example 5-35, except that magenta ink 1B used in Example 5-35 was replaced with magenta ink 18B.

### (Comparative Example 5-9)

Inkjet image recording was performed in the same manner as in Example 5-35, except that magenta ink 1B used in Example 35 was replaced with magenta ink 14B.

### (Comparative Example 5-10)

Inkjet image recording was performed in the same manner as in Example 5-35, except that magenta ink 1B used in Example 5-35 was replaced with magenta ink 36B.

### <<Evaluation of Inkjet Image>>

Using the images obtained, evaluations with respect to the curing sensitivity, penetration into commercially available recycle paper, ink bleeding on the grained aluminum support, adhesiveness, odor, printing durability, and storage stability were conducted according to the evaluation methods described above. In the evaluation of the printing durability, the printing durability of Example 5-1 was assumed to be 100.

Results are summarized in the following Table 5.

**Table 5**

| | Ink Number | Curing Sensitivity (mJ/cm²) | Penetration Property | Ink Bleed | Adhesiveness | Odor | Printing durability | Storage stability |
|---|---|---|---|---|---|---|---|---|
| Example 5-35 | Magenta ink 1B | 140 | A | A | A | A | 110 | 1.2 |
| Example 5-36 | Magenta ink 18B | 90 | A | A | A | A | 160 | 1.2 |
| Comparative Example 5-9 | Magenta ink 14B | 500 | B | B | C | C | 50 | 1.5 |
| Comparative Example 5-10 | Magenta ink 36B | 200 | B | B | C | C | 80 | 1.5 |

When the results shown in Tables 3 and 4 obtained by using a ultraviolet lamp are compared with the results shown in Table 5 obtained by using the ultraviolet light-emitting diode, it can be understood that higher sensitivity to radiation and higher printing durability of the image on the printing plate were achieved when the ultraviolet light-emitting diode was used. Further, in the evaluation of the damage on the recycle paper after the image formation thereon, it was found that cockles were generated when the ultraviolet lamp was used while the recycle paper stayed smooth when the ultraviolet light-emitting diode was used, which indicated that image formation with less damage on the medium can be conducted with a ultraviolet light-emitting diode.

As described above, the invention provides an ink composition with superior storage stability which cures with high sensitivity upon irradiation with radiation and which is capable of forming a high-quality image with superior adhesion to the recording medium. The invention also provides an inkjet recording method using a curable composition with superior storage stability which cures with high sensitivity upon irradiation with radiation and which is capable of forming a high-quality image with superior adhesion to the recording medium. The printed material obtained by the inkjet recording method is high in quality and strength of the image area.

A planographic printing plate with high printing durability and high quality can be produced based on digital data when the ink composition of the invention is used.

## Claims

1. An ink composition comprising a triarylsulfonium salt polymerization initiator containing at least one aryl skeleton having an electron attractive group as a substituent, a polymerizable compound, a sensitizing dye, and a colorant;
wherein the triarylsulfonium salt polymerization initiator containing at least one aryl skeleton having an electron attractive group as a substituent is a polymerization initiator having a triaryl sulfonium salt structure, and a total sum of Hammett values of substituents bound to the aryl skeleton is greater than 0.46.

2. The ink composition according to claim 1, wherein each aryl skeleton in the triarylsulfonium salt has a substituent selected from a halogen atom or a group containing a halogen atom.

3. The ink composition according to claim 1, wherein the triarylsulfonium salt is substituted by three or more halogen atoms.

4. The ink composition according to claim 1, further comprising another polymerization initiator.

5. The ink composition according to claim 1, wherein the content of the polymerization initiator is 0.5 to 30 % by weight based on the entire solid content of the ink composition.

6. The ink composition according to claim 1, wherein the polymerizable compound is a radical-polymerizable compound.

7. The ink composition according to claim 1, wherein the polymerizable compound is a cation-polymerizable compound.

8. The ink composition according to claim 1, wherein the colorant is a pigment or an oil-soluble dye.

9. The ink composition according to claim 8, wherein the colorant is an oil-soluble dye and the oil-soluble dye has an oxidation potential which is higher than 1.0 V (vs SCE).

10. The ink composition according to claim 1, wherein the ink composition is an ink composition for inkjet recording.

11. An inkjet recording method comprising:
ejecting a curable composition onto a recording medium with an inkjet printer; and
irradiating the ejected curable composition with active radiation to cure the composition,
wherein the curable composition comprises a triarylsulfonium salt polymerization initiator containing at least one aryl skeleton having an electron attractive group as a substituent, a polymerizable compound, and a sensitizing dye;
wherein the triarylsulfonium salt polymerization initiator containing at least one aryl skeleton having an electron attractive group as a substituent is a polymerization initiator having a triaryl sulfonium salt structure, and a total sum of Hammett values of substituents bound to the aryl skeleton is greater than 0.46

12. The inkjet recording method according to claim 11, wherein each aryl skeleton in the triarylsulfonium salt has a substituent selected from a halogen atom or a group containing a halogen atom.

13. The inkjet recording method according to claim 11, wherein the active radiation is emitted by a light-emitting diode which emits ultraviolet rays having an emission peak wavelength of 360 to 420 nm such that the maximum illuminance on the surface of the recording medium is 10 to 1000mW/cm².

14. The inkjet recording method according to claim 11, wherein the curable composition further comprises a colorant.

15. A printed material obtained by the method of claim 11.

16. A method of producing a planographic printing plate, the method comprising:
ejecting the ink composition of claim 1 to a hydrophilic support; and
irradiating the ink composition with radiation to cure the ink composition, thereby forming a hydrophobic region.

17. A planographic printing plate produced by the method of claim 16.

## Patentansprüche

1. Tintenzusammensetzung, die einen Triarylsulfoniumsalz-Polymerisationsinitiator, der mindestens ein Arylgerüst mit einer elektronenanziehenden Gruppe als einen Substituenten enthält, eine polymerisierbare Verbindung, einen Sensibilisierungsfarbstoff und ein Färbemittel umfaßt, wobei der Triarylsulfoniumsalz-Polymerisationsinitiator, der mindestens ein Arylgerüst mit einer elektronenanziehenden Gruppe als einen Substituenten enthält, ein Polymerisationsinitiator mit einer Triarylsulfoniumsalz-Struktur ist und die Gesamtsumme der Hammett-Werte der Substituenten, die an das Arylgerüst gebunden sind, größer als 0,46 ist.

2. Tintenzusammensetzung gemäß Anspruch 1, worin jedes Arylgerüst in dem Triarylsulfoniumsalz einen Substituenten hat, der aus einem Halogenatom oder einer Gruppe, welche ein Halogenatom enthält, ausgewählt ist.

3. Tintenzusammensetzung gemäß Anspruch 1, worin das Triarylsulfoniumsalz durch drei oder mehr Halogenatome substituiert ist.

4. Tintenzusammensetzung gemäß Anspruch 1, die einen weiteren Polymerisationsinitiator umfaßt.

5. Tintenzusammensetzung gemäß Anspruch 1, worin der Gehalt des Polymerisationsinitiators 0,5 bis 30 Gew.% beträgt, bezogen auf den gesamten Feststoffgehalt der Tintenzusammensetzung.

6. Tintenzusammensetzung gemäß Anspruch 1, worin die polymerisierbare Verbindung eine radikalpolymerisierbare Verbindung ist.

7. Tintenzusammensetzung gemäß Anspruch 1, worin die polymerisierbare Verbindung eine kationisch polymerisierbare Verbindung ist.

8. Tintenzusammensetzung gemäß Anspruch 1, worin das Färbemittel ein Pigment oder ein öllöslicher Farbstoff ist.

9. Tintenzusammensetzung gemäß Anspruch 8, worin das Färbemittel ein öllöslicher Farbstoff ist und der öllösliche Farbstoff ein höheres Oxidationspotential als 1,0 V (bezogen auf SCE) aufweist.

10. Tintenzusammensetzung gemäß Anspruch 1, wobei die Tintenzusammensetzung eine Tintenzusammensetzung zur Tintenstrahlaufzeichnung ist.

11. Verfahren zur Tintenstrahlaufzeichnung, das das Ausstoßen einer härtbaren Zusammensetzung auf ein Aufzeichnungsmedium mit einem Tintenstrahldrucker und die Bestrahlung der ausgestoßenen härtbaren Zusammensetzung mit Aktivstrahlung zur Aushärtung der Zusammensetzung umfasst,
wobei die aushärtbare Zusammensetzung einen Triarylsulfoniumsalz-Polymerisationsinitiator, der mindestens ein Arylgerüst mit einer elektronenanziehenden Gruppe als einen Substituenten enthält, eine polymerisierbare Verbindung und einen Sensibilisierungsfarbstoff umfaßt;
wobei der Triarylsulfoniumsalz-Polymerisationsinitiator, der mindestens ein Arylgerüst mit einer elektronenanziehenden Gruppe als einen Substituenten enthält, ein Polymerisationsinitiator mit einer Triarylsulfoniumsalz-Struktur ist und die Gesamtsumme der Hammett-Werte der Substituenten, die an das Arylgerüst gebunden sind, größer als 0,46 ist.

12. Verfahren zur Tintenaufzeichnung gemäß Anspruch 11,
wobei jedes Arylgerüst in dem Triarylsulfoniumsalz einen Substituenten hat, der ausgewählt ist aus einem Halogenatom oder einer Gruppe, die ein Halogenatom enthält.

13. Verfahren zur Tintenaufzeichnung gemäß Anspruch 11,
wobei die Aktivstrahlung durch eine lichtemittierende Diode abgegeben wird, die UV-Strahlung mit einem Emissionsmaximum im Wellenlängenbereich von 360 bis 420 nm in einer Weise emittiert, daß die maximale Lichtintensität auf der Oberfläche des Aufzeichnungsmediums 10 bis 1.000 mW/cm² ist.

14. Verfahren zur Tintenaufzeichnung gemäß Anspruch 11,
wobei die aushärtbare Zusammensetzung ferner ein Färbemittel umfaßt.

15. Bedrucktes Material, erhalten durch das Verfahren gemäß Anspruch 11.

16. Verfahren zur Herstellung einer Flachdruckplatte, das das Ausstoßen der Tintenzusammensetzung gemäß Anspruch 1 auf eine hydrophile Unterlage und die Bestrahlung der Tintenzusammensetzung mit Strahlung zur Aushärtung der Tintenzusammensetzung umfaßt,
wodurch ein hydrophober Bereich gebildet wird.

17. Flachdruckplatte hergestellt durch das Verfahren von Anspruch 16.

## Revendications

1. Composition d'encre comprenant un initiateur de polymérisation au sel de triarylsulfonium contenant au moins un squelette aryle ayant un groupement attracteur d'électron en tant que substituant, un composé polymérisable, une teinture sensibilisante et un colorant ; dans laquelle l'initiateur de polymérisation au sel de triarylsulfonium contenant au moins un squelette aryle ayant un groupement attracteur d'électron en tant que substituant est un initiateur de polymérisation ayant une structure de sel de triarylsulfonium, et une somme totale de valeurs de Hammett des substituants liés au squelette aryle supérieure à 0,46.

2. Composition d'encre selon la revendication 1, dans laquelle chaque squelette aryle dans le sel de triarylsulfonium a un substituant choisi parmi un atome d'halogène ou un groupement contenant un atome d'halogène.

3. Composition d'encre selon la revendication 1, dans laquelle le sel de triarylsulfonium est substitué par trois atomes d'halogène ou davantage.

4. Composition d'encre selon la revendication 1, comprenant en outre un autre initiateur de polymérisation.

5. Composition d'encre selon la revendication 1, dans laquelle la teneur en initiateur de polymérisation est 0,5 à 30 % en poids sur la base de la teneur complète en solide de la composition d'encre.

6. Composition d'encre selon la revendication 1, dans laquelle le composé polymérisable est un composé polymérisable par un radical.

7. Composition d'encre selon la revendication 1, dans laquelle le composé polymérisable est un composé polymérisable par un cation.

8. Composition d'encre selon la revendication 1, dans laquelle le colorant est un pigment ou une teinture soluble dans l'huile.

9. Composition d'encre selon la revendication 8, dans laquelle le colorant est une teinture soluble dans l'huile et la teinture soluble dans l'huile a un potentiel d'oxydation qui est supérieur à 1,0 V (contre SCE).

10. Composition d'encre selon la revendication 1, dans laquelle la composition d'encre est une composition d'encre pour un enregistrement à jet d'encre.

11. Procédé d'enregistrement à jet d'encre comprenant:
l'éjection d'une composition d'encre durcissable sur un support d'enregistrement avec une imprimante à jet d'encre, et
l'irradiation de la composition durcissable éjectée avec une radiation active pour durcir la composition,
dans lequel la composition durcissable comprend un initiateur de polymérisation au sel de triarylsulfonium contenant au moins un squelette aryle ayant un groupement attracteur d'électron en tant que substituant, un composé polymérisable, une teinture sensibilisante ;
dans lequel l'initiateur de polymérisation au sel de triarylsulfonium contenant au moins un squelette aryle ayant un groupement attracteur d'électron en tant que substituant est un initiateur de polymérisation ayant une structure de sel de triarylsulfonium, et une somme totale de valeurs de Hammett des substituants liés au squelette aryle supérieure à 0,46.

12. Procédé d'enregistrement à jet d'encre selon la revendication 11, dans lequel chaque squelette aryle dans le sel de triarylsulfonium a un substituant choisi parmi un atome d'halogène ou un groupement contenant un atome d'halogène.

13. Procédé d'enregistrement à jet d'encre selon la revendication 11, dans lequel la radiation active est émise par une diode émettant de la lumière qui émet des rayons ultraviolet ayant une longueur d'onde de pic d'émission de 360 à 420 nm de sorte que l'éclairage maximal sur la surface du support d'enregistrement va de 10 à 1 000 mW/cm².

14. Procédé d'enregistrement à jet d'encre selon la revendication 11, dans lequel la composition durcissable comprend en outre un colorant.

15. Matériau imprimé par le procédé selon la revendication 11.

16. Procédé de production d'une plaque d'impression planographique, le procédé comprenant:
l'éjection de la composition d'encre selon la revendication 1 vers un support hydrophile ; et
l'irradiation de la composition d'encre avec une radiation pour durcir la composition d'encre, formant de ce fait une région hydrophobe.

17. Plaque d'impression planographique produite par le procédé selon la revendication 16.
